(19) Europäisches Patentamt / European Patent Office / Office européen des brevets

(11) **EP 2 970 657 B1**

(12) # EUROPEAN PATENT SPECIFICATION

(45) Date of publication and mention of the grant of the patent:
**17.01.2018 Bulletin 2018/03**

(21) Application number: **14728705.6**

(22) Date of filing: **14.03.2014**

(51) Int Cl.:
***C08L 69/00*** *(2006.01)*

(86) International application number:
**PCT/US2014/026957**

(87) International publication number:
**WO 2014/152107 (25.09.2014 Gazette 2014/39)**

(54) **BLENDED POLYMER COMPOSITIONS WITH IMPROVED MOLD RELEASE PROPERTIES**

MISCHPOLYMERZUSAMMENSETZUNGEN MIT VERBESSERTEN FORMFREISETZUNGSEIGENSCHAFTEN

COMPOSITIONS DE POLYMÈRE MÉLANGÉES AYANT DES PROPRIÉTÉS DE DÉMOULAGE AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2013 US 201313827610**

(43) Date of publication of application:
**20.01.2016 Bulletin 2016/03**

(73) Proprietor: **SABIC Global Technologies B.V.**
**4612 PX Bergen op Zoom (NL)**

(72) Inventors:
- **HE, Yuanqing**
  **Mt. Vernon, Indiana 47620-9367 (US)**
- **DURVASULA, Rama Konduri**
  **Mt. Vernon, Indiana 47620-9367 (US)**

(74) Representative: **Modiano, Micaela Nadia et al**
**Modiano & Partners**
**Thierschstrasse 11**
**80538 München (DE)**

(56) References cited:
**WO-A1-2008/002723** **WO-A1-2010/077644**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 970 657 B1

## Description

FIELD OF INVENTION

The present invention relates blended polycarbonate compositions comprising one or more polycarbonate polymer, polycarbonate/siloxane copolymer(s), a mineral filler, and an alkyl sulfonate salt having improved mold release properties.

BACKGROUND OF THE INVENTION

Mineral fillers are probably the most widely used additives in thermoplastic resins. Commonly used mineral fillers include talc, wollastonite, clay and mica. These materials are typically employed for economic reasons, *i.e.,* to reduce the cost of relatively high priced resins, and/or to impart a particular property to a resin; *e.g.*, enhancement of specific properties such as impact strength, co-efficient of linear thermal expansion, tensile strength, tensile modulus, flexural modulus, *etc.*. Use of mineral fillers in thermoplastic resins, with the concomitant improvement of properties described above can result in important improvements to articles and parts, (*e.g.,* automotive interior and exterior applications), such as reduced warp and minimal gap width. However, a significant challenge, particularly when fabricating large molded parts, is increasing mold release properties of the thermoplastic resin.

Accordingly, it would be beneficial to provide polycarbonate compositions which include mineral fillers that have improved mold release properties while retaining other desirable properties such as, for example, impact strength, co-efficient of linear thermal expansion, tensile strength, tensile modulus, flexural modulus, *etc.*

SUMMARY OF THE INVENTION

In one aspect, the invention relates to polycarbonate compositions comprising mineral fillers which also that have increased mold release properties. In various aspects, the invention relates to blended polycarbonate compositions comprising one or more polycarbonate polymers, an impact modifier, a mineral filler, a polycarbonate-polysiloxane copolymer and an alkyl sulfonate salt. Thus, in a further aspect, the resulting compositions are therefore capable of being used in the production of articles wherein excellent mold release properties are required to minimize production waste and cost.

In one aspect, a thermoplastic composition with improved mold release properties is provided. The thermoplastic composition comprises from about 10 wt% to about 70 wt% of a first polycarbonate component, from about 10 wt% to about 70 wt% of a second polycarbonate component, from about 2 wt% to about 10 wt% of an impact modifier component, from about 5 wt% to about 30 wt% of a mineral filler component, from about 0 wt% to about 25 wt% of a polycarbonate-polysiloxane copolymer component, and from about 0.1 wt% to about 4.0 wt% of an alkyl sulfonate salt component, where the combined weight percent value of the first polycarbonate component and the second polycarbonate component is from greater than 10 wt% to about 70 wt%, where the combined weight percent value of all components does not exceed about 100 wt%, where all weight percent values are based on the total weight of the composition and where a molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In another aspect, a thermoplastic composition with improved mold release properties is provided. The thermoplastic composition comprises from about 15 wt% to about 35 wt% of a first polycarbonate component, from about 20 wt% to about 50 wt% of a second polycarbonate component, from about 2 wt% to about 8 wt% of an impact modifier component comprising an acrylonitrile-butadiene-styrene (ABS) polymer composition, a bulk polymerized ABS (BABS), or a methacrylate-butadiene-styrene (MBS) polymer composition, from about 10 wt% to about 25 wt% of a mineral filler component, from about 0 wt% to about 25 wt% of a polycarbonate-polysiloxane copolymer component and from about 0.5 wt% to about 2.0 wt% of an alkyl sulfonate salt component where the first polycarbonate polymer component has a melt volume flow rate (MFR) from about 20 grams/10 minutes to about 30 grams/10 minutes when measured at 300 °C and under a load of 1.2 kilograms (kg) according to ASTM D1238, where the second polycarbonate polymer component has a melt volume flow rate (MFR) from about 4.0 grams/10 minutes to about 8.0 grams/10 minutes when measured at 300 °C and under a load of 1.2 kg according to ASTM D1238, where the alkyl sulfonate salt component comprises one or more structures represented by a formula:

$$(C_nH_{2n+1})\text{-}(SO_3^-M^+)_p,$$

where for each alkyl sulfonate salt present, n is independently an integer from 6 to 17; p is independently an integer

from 1 to 5; and each M is independently an alkali or alkaline earth metal, where the combined weight percent value of the first polycarbonate component and the second polycarbonate component is from greater than 45 weight percent (wt%) to about 70 wt%, where the combined weight percent value of all components does not exceed about 100 wt%; where all weight percent values are based on the total weight of the composition; and where a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In still another aspect, a thermoplastic composition with improved mold release properties is provided. The thermoplastic composition comprises from about 20 wt% to about 30 wt% of a first polycarbonate component, from about 20 wt% to about 50 wt% of a second polycarbonate component, from about 3 wt% to about 6 wt% of an impact modifier component comprising an acrylonitrile-butadiene-styrene (ABS) polymer composition, a bulk polymerized ABS (BABS), or a methacrylate-butadiene-styrene (MBS) polymer composition, from about 12 wt% to about 20 wt% of a mineral filler component, from about 0 wt% to about 25 wt% of a polycarbonate-polysiloxane copolymer component and from about 0.5 wt% to about 1.0 wt% of an alkyl sulfonate salt component, where the first polycarbonate polymer component has a melt volume flow rate (MFR) from about 20 grams/10 minutes to about 30 grams/10 minutes when measured at 300 °C and under a load of 1.2 kg according to ASTM D1238, where the second polycarbonate polymer component has a melt volume flow rate (MFR) from about 4.0 grams/10 minutes to about 8.0 grams/10 minutes when measured at 300 °C and under a load of 1.2 kg according to ASTM D1238, wherein the alkyl sulfonate salt component comprises one or more structures represented by a formula:

$$(C_nH_{2n+1})\text{-}(SO_3^-M^+)_{p,}$$

where for each alkyl sulfonate salt present, n is independently an integer from 6 to 17; p is independently an integer from 1 to 5; and each M is independently an alkali or alkaline earth metal, where the combined weight percent value of the first polycarbonate component and the second polycarbonate component is from greater than 45 wt% to about 70 wt%; where the combined weight percent value of all components does not exceed about 100 wt%; where all weight percent values are based on the total weight of the composition and wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In still another aspect an article comprising the compositions above is provided.

In still another aspect, a method of improving mold release properties of a thermoplastic composition is provided. The method comprises the step of combining from about 10 wt% to about 70 wt% of a first polycarbonate component, from about 10 wt% to about 70 wt% of a second polycarbonate component, from about 2 wt% to about 10 wt% of an impact modifier component, from about 5 wt% to about 30 wt% of a mineral filler component, from about 0 wt% to about 25 wt% of a polycarbonate-polysiloxane copolymer component and from about 0.1 wt% to about 4.0 wt% of an alkyl sulfonate salt component; where the combined weight percent value of the first polycarbonate component and the second polycarbonate component is from greater than 10 wt% to about 70 wt%, where the combined weight percent value of all components does not exceed about 100 wt%, where all weight percent values are based on the total weight of the composition and wherein a molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In still another aspect, a method of improving mold release properties of a thermoplastic composition is provided. The method comprises the step of combining from about 15 wt% to about 35 wt% of a first polycarbonate component from about 20 wt% to about 50 wt% of a second polycarbonate component, from about 2 wt% to about 8 wt% of an impact modifier component comprising an acrylonitrile-butadiene-styrene (ABS) polymer composition, a bulk polymerized ABS (BABS), or a methacrylate-butadiene-styrene (MBS) polymer composition, from about 10 wt% to about 25 wt% of a mineral filler component, from about 0 wt% to about 25 wt% of a polycarbonate-polysiloxane copolymer component and from about 0.5 wt% to about 2.0 wt% of an alkyl sulfonate salt component; where the first polycarbonate polymer component has a melt volume flow rate (MFR) from about 20 grams/10 minutes to about 30 grams/10 minutes when measured at 300 °C and under a load of 1.2 kg according to ASTM D1238, where the second polycarbonate polymer component has a melt volume flow rate (MFR) from about 4.0 grams/10 minutes to about 8.0 grams/10 minutes when measured at 300 °C and under a load of 1.2 kg according to ASTM D1238, where the alkyl sulfonate salt component comprises one or more structures represented by a formula:

$(C_nH_{2n+1})\text{-}(SO_3^{-}M^{+})_{p,}$

where for each alkyl sulfonate salt present, n is independently an integer from 6 to 17; p is independently an integer from 1 to 5; and each M is independently an alkali or alkaline earth metal, where the combined weight percent value of the first polycarbonate component and the second polycarbonate component is from greater than 45 wt% to about 70 wt%, where the combined weight percent value of all components does not exceed about 100 wt%, where all weight percent values are based on the total weight of the composition and wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In still another aspect, a method of improving mold release properties of a thermoplastic composition is provided. The method comprises the step of combining from about 20 wt% to about 30 wt% of a first polycarbonate component from about 20 wt% to about 50 wt% of a second polycarbonate component from about 3 wt% to about 6 wt% of an impact modifier component comprising an acrylonitrile-butadiene-styrene (ABS) polymer composition, a bulk polymerized ABS (BABS), or a methacrylate-butadiene-styrene (MBS) polymer composition from about 12 wt% to about 20 wt% of a mineral filler component from about 0 wt% to about 25 wt% of a polycarbonate-polysiloxane copolymer component and from about 0.5 wt% to about 1.0 wt% of an alkyl sulfonate salt component, where the first polycarbonate polymer component has a melt volume flow rate (MFR) from about 20 grams/10 minutes to about 30 grams/10 minutes when measured at 300 °C and under a load of 1.2 kg according to ASTM D1238, where the second polycarbonate polymer component has a melt volume flow rate (MFR) from about 4.0 grams/10 minutes to about 8.0 grams/10 minutes when measured at 300°C and under a load of 1.2 kg according to ASTM D1238, where the alkyl sulfonate salt component comprises one or more structures represented by a formula:

$(C_nH_{2n+1})\text{-}(SO_3^{-}M^{+})_{p,}$

where for each alkyl sulfonate salt present, n is independently an integer from 6 to 17; p is independently an integer from 1 to 5; and each M is independently an alkali or alkaline earth metal where the combined weight percent value of the first polycarbonate component and the second polycarbonate component is from greater than 45 wt% to about 70 wt%, where the combined weight percent value of all components does not exceed about 100 wt%, where all weight percent values are based on the total weight of the composition and where a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

While aspects of the present invention can be described and claimed in a particular statutory class, such as the system statutory class, this is for convenience only and one of skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is in no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

## BRIEF DESCRIPTION OF THE DRAWINGS

The accompanying figures, which are incorporated in and constitute a part of this specification, illustrate several aspects and together with the description serve to explain the principles of the invention.

Figure 1 shows a cup tool mold used to measure the ejection pressure required to release the molded part.

Figure 2 shows representative data for the effect of different loadings of polycarbonate-siloxane copolymers and cycle times on ejection pressure. PC-S1 and PC-S2 are as described in Table 1.

Figure 3 shows representative ejection pressure data for representative disclosed thermoplastic compositions. The alkyl sulfonate salt is AS1, which is described in Table 1; EX. 2 and EX.3 refer to formulations detailed in Table 2.

Figure 4 shows representative data for the effect of different loadings of polycarbonate-siloxane copolymers on normalized ejection pressure when determined using a 55 second (sec) cycle time. PC-S1 and PC-S2 are as described in Table 1.

Figure 5 shows representative data for the effect of different disclosed thermoplastic compositions on normalized ejection pressure when determined using a 45 sec cycle time. The formulation codes (S.1, S.2, S.3, S.4, and S.5) refer to those detailed in Table 3.

Figure 6 shows representative data for the effect of different disclosed thermoplastic compositions on normalized ejection pressure when determined using a 45 sec cycle time. The formulation codes (S.6, S.7, S.8, S.9, S.10, and S.11) refer to those detailed in Table 5.

Additional advantages of the invention will be set forth in part in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

DETAILED DESCRIPTION OF THE INVENTION

The present invention can be understood more readily by reference to the following detailed description of the invention and the Examples included therein.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

DEFINITIONS

It is also to be understood that the terminology used herein is for the purpose of describing particular aspects only and is not intended to be limiting. As used in the specification and in the claims, the term "comprising" can include the embodiments "consisting of" and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate poly" includes mixtures of two or more polycarbonate polymers.

As used herein, the term "combination" is inclusive of blends, mixtures, alloys, reaction products, and the like.

Ranges can be expressed herein as from one particular value, and/or to another particular value. When such a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

The terms "first," "second," "first part," "second part," and the like, where used herein, do not denote any order, quantity, or importance, and are used to distinguish one element from another, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optionally substituted alkyl" means that the alkyl group can or cannot be substituted and that the description includes both substituted and unsubstituted alkyl groups.

As used herein, the term "effective amount" refers to an amount that is sufficient to achieve the desired modification of a physical property of the composition or material. For example, an "effective amount" of an alkyl sulfonate refers to an amount that is sufficient to achieve the desired improvement in the property modulated by the formulation component, e.g., improved mold release properties, under applicable test conditions and without adversely affecting other specified properties. The specific level in terms of wt% in a composition required as an effective amount will depend upon a variety of factors including the amount and type of polycarbonate, amount and type of impact modifier, amount

and type of talc, and end use of the article made using the composition.

Disclosed are the components to be used to prepare the compositions of the invention as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the invention. Thus, if there are a variety of additional steps that can be performed it is understood that each of these additional steps can be performed with any specific aspect or combination of aspects of the methods of the invention.

References in the specification and concluding claims to parts by weight, of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent ("wt%") of a component, unless specifically stated to the contrary, is based on the total weight of the formulation or composition in which the component is included. For example if a particular element or component in a composition or article is said to have 8% by weight, it is understood that this percentage is relative to a total compositional percentage of 100% by weight.

Compounds are described using standard nomenclature. For example, any position not substituted by any indicated group is understood to have its valence filled by a bond as indicated, or a hydrogen atom. A dash ("-") that is not between two letters or symbols is used to indicate a point of attachment for a substituent. For example, -CHO is attached through carbon of the carbonyl group. Unless defined otherwise, technical and scientific terms used herein have the same meaning as is commonly understood by one of skill in the art to which this invention belongs.

The term "alkyl group" as used herein is a branched or unbranched saturated hydrocarbon group of 1 to 24 carbon atoms, such as methyl, ethyl, n propyl, isopropyl, n butyl, isobutyl, t butyl, pentyl, hexyl, heptyl, octyl, decyl, tetradecyl, hexadecyl, eicosyl, tetracosyl and the like. A "lower alkyl" group is an alkyl group containing from one to six carbon atoms.

The term "aryl group" as used herein is any carbon-based aromatic group including, but not limited to, benzene, naphthalene, etc. The term "aromatic" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorus. The aryl group can be substituted or unsubstituted. The aryl group can be substituted with one or more groups including, but not limited to, alkyl, alkynyl, alkenyl, aryl, halide, nitro, amino, ester, ketone, aldehyde, hydroxy, carboxylic acid, or alkoxy.

The term "aralkyl" as used herein is an aryl group having an alkyl, alkynyl, or alkenyl group as defined above attached to the aromatic group. An example of an aralkyl group is a benzyl group.

The term "carbonate group" as used herein is represented by the formula OC(O)OR, where R can be hydrogen, an alkyl, alkenyl, alkynyl, aryl, aralkyl, cycloalkyl, halogenated alkyl, or heterocycloalkyl group described above.

The term "organic residue" defines a carbon containing residue, i.e., a residue comprising at least one carbon atom, and includes but is not limited to the carbon-containing groups, residues, or radicals defined hereinabove. Organic residues can contain various heteroatoms, or be bonded to another molecule through a heteroatom, including oxygen, nitrogen, sulfur, phosphorus, or the like. Examples of organic residues include but are not limited alkyl or substituted alkyls, alkoxy or substituted alkoxy, mono or di-substituted amino, amide groups, etc. Organic residues can preferably comprise 1 to 18 carbon atoms, 1 to 15, carbon atoms, 1 to 12 carbon atoms, 1 to 8 carbon atoms, 1 to 6 carbon atoms, or 1 to 4 carbon atoms. In a further aspect, an organic residue can comprise 2 to 18 carbon atoms, 2 to 15, carbon atoms, 2 to 12 carbon atoms, 2 to 8 carbon atoms, 2 to 4 carbon atoms, or 2 to 4 carbon atoms.

A very close synonym of the term "residue" is the term "radical," which as used in the specification and concluding claims, refers to a fragment, group, or substructure of a molecule described herein, regardless of how the molecule is prepared. For example, a 2,4-dihydroxyphenyl radical in a particular compound has the structure:

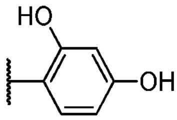,

regardless of whether 2,4-dihydroxyphenyl is used to prepare the compound. In some embodiments the radical (for example an alkyl) can be further modified (i.e., substituted alkyl) by having bonded thereto one or more "substituent radicals." The number of atoms in a given radical is not critical to the present invention unless it is indicated to the contrary elsewhere herein.

"Organic radicals," as the term is defined and used herein, contain one or more carbon atoms. An organic radical can have, for example, 1-26 carbon atoms, 1-18 carbon atoms, 1-12 carbon atoms, 1-8 carbon atoms, 1-6 carbon atoms, or 1-4 carbon atoms. In a further aspect, an organic radical can have 2-26 carbon atoms, 2-18 carbon atoms, 2-12 carbon atoms, 2-8 carbon atoms, 2-6 carbon atoms, or 2-4 carbon atoms. Organic radicals often have hydrogen bound to at least some of the carbon atoms of the organic radical. One example, of an organic radical that comprises no inorganic atoms is a 5, 6, 7, 8-tetrahydro-2-naphthyl radical. In some embodiments, an organic radical can contain 1-10 inorganic heteroatoms bound thereto or therein, including halogens, oxygen, sulfur, nitrogen, phosphorus, and the like. Examples of organic radicals include but are not limited to an alkyl, substituted alkyl, cycloalkyl, substituted cycloalkyl, mono-substituted amino, di-substituted amino, acyloxy, cyano, carboxy, carboalkoxy, alkylcarboxamide, substituted alkylcarboxamide, dialkylcarboxamide, substituted dialkylcarboxamide, alkylsulfonyl, alkylsulfinyl, thioalkyl, thiohaloalkyl, alkoxy, substituted alkoxy, haloalkyl, haloalkoxy, aryl, substituted aryl, heteroaryl, heterocyclic, or substituted heterocyclic radicals, wherein the terms are defined elsewhere herein. A few non-limiting examples of organic radicals that include heteroatoms include alkoxy radicals, trifluoromethoxy radicals, acetoxy radicals, dimethylamino radicals and the like.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

$$M_n = \frac{\sum N_i M_i}{\sum N_i},$$

where $M_i$ is the molecular weight of a chain and $N_i$ is the number of chains of that molecular weight. $M_n$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "Mw" can be used interchangeably, and are defined by the formula:

$$M_w = \frac{\sum N_i M_i^{\,2}}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA" or "bisphenol A," which can be used interchangeably, as used herein refers to a compound having a structure represented by the formula:

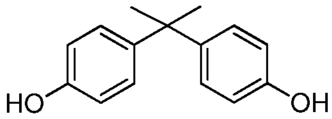,

BisA can also be referred to by the name 4,4'-(propane-2,2-diyl)diphenol; *p,p'*-isopropylidenebisphenol; or 2,2-bis(4-hydroxyphenyl)propane.. BisA has the CAS # 80-05-7.

As used herein, "polycarbonate" refers to an oligomer or polymer comprising residues of one or more dihydroxy compounds, e.g. dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein, the term "ABS" or "acrylonitrile-butadiene-styrene copolymer" refers to an acrylonitrile-butadiene-styrene polymer which can be an acrylonitrile-butadiene-styrene terpolymer or a blend of styrene-butadiene rubber and styrene-acrylonitrile copolymer.

As used herein, the term "impact modifier" refers to a component of the disclosed impact modified polycarbonate blend compositions wherein the impact modifier is a polymeric material effective in improving the impact properties of the disclosed impact modified polycarbonate blend compositions, e.g. the notched Izod impact strength of the composition. As used herein, an impact modifier can be a one or more polymers such as acrylonitrile butadiene styrene copolymer (ABS), methacrylate butadiene styrene copolymer (MBS), and/or bulk polymerized ABS (BABS).

The term "talc" is used herein to mean a mineral composed of hydrated magnesium silicate. The term "surface treated talc" (or "surface modified talc" or "coated talc") is used herein to mean particles of talc, whose surface has been fully or partially, physically or chemically, modified using a surface treating agent. Such agents can be of organic or inorganic nature. These agents can include fatty acids, fatty acid esters, silicones, Teflon, silanes, silane coupling agents, metal salts of fatty acid, or polyethylene glycol.

As used herein the term "micronization" means the production of particles having an average diameter of 1-100 μm.

As used herein the terms "weight percent," "wt%," and "wt. %," which can be used interchangeably, indicate the percent by weight of a given component based on the total weight of the composition, unless otherwise specified. That is, unless otherwise specified, all weight percent values are based on the total weight of the composition. It should be understood that the sum of weight percent values for all components in a disclosed composition or formulation are equal to 100.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions, and it is understood that there are a variety of structures that can perform the same function that are related to the disclosed structures, and that these structures will typically achieve the same result.

BLENDED POLYCARBONATE COMPOSITIONS

As briefly described above, the present disclosure relates in one aspect to blended polycarbonate compositions with improved mold release properties. In various aspects, the invention relates to blended polycarbonate compositions comprising mineral fillers such as talc along with an impact modifier, an alkyl sulfonate salt and a polycarbonate-polysiloxane copolymer. The combination of an alkyl sulfonate salt and a polycarbonate-polysiloxane copolymer of the present invention improves the mold release properties. Thus, in a further aspect, the resulting compositions are capable of being used in the production of articles which have improved mold release properties.

In various aspects, the invention pertains to thermoplastic composition with improved mold release properties comprising:

a) from about 10 wt% to about 70 wt% of a first polycarbonate component;
b) from about 10 wt% to about 70 wt% of a second polycarbonate component;

c) from about 2 wt% to about 10 wt% of an impact modifier component;
d) from about 5 wt% to about 30 wt% of a mineral filler component;
e) from about 0 wt% to about 25 wt% of a polycarbonate-polysiloxane copolymer component; and
f) from about 0.1 wt% to about 4.0 wt% of an alkyl sulfonate salt component;

wherein the combined weight percent value of the first polycarbonate component and the second polycarbonate component is from greater than 10 wt% to about 70 wt%; wherein the combined weight percent value of all components does not exceed about 100 wt%; wherein all weight percent values are based on the total weight of the composition; and wherein a molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In various aspects, the invention pertains to thermoplastic composition with improved mold release properties comprising:

a) from about 15 wt% to about 35 wt% of a first polycarbonate component;
b) from about 20 wt% to about 50 wt% of a second polycarbonate component;
c) from about 2 wt% to about 8 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 10 wt% to about 25 wt% of a mineral filler component;
e) from about 0 wt% to about 25 wt% of a polycarbonate-polysiloxane copolymer component; and
f) from about 0.5 wt% to about 2.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238;
wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238;
wherein the alkyl sulfonate salt component comprises one or more structures represented by a formula:

$$(C_nH_{2n+1})\text{-}(SO_3^-M^+)_p$$

wherein for each alkyl sulfonate salt present, n is independently an integer from 6 to 17; p is independently an integer from 1 to 5; and each M is independently an alkali or alkaline earth metal;
wherein the combined weight percent value of the first polycarbonate component and the second polycarbonate component is from greater than 45 wt% to about 70 wt%;
wherein the combined weight percent value of all components does not exceed about 100 wt%;
wherein all weight percent values are based on the total weight of the composition; and
wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In various aspects, the invention pertains to thermoplastic composition with improved mold release properties comprising:

a) from about 20 wt% to about 30 wt% of a first polycarbonate component;
b) from about 20 wt% to about 50 wt% of a second polycarbonate component;
c) from about 3 wt% to about 6 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 12 wt% to about 20 wt% of a mineral filler component;
e) from about 0 wt% to about 25 wt% of a polycarbonate-polysiloxane copolymer component; and
f) from about 0.5 wt% to about 1.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238;
wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238;

wherein the alkyl sulfonate salt component comprises one or more structures represented by a formula:

$$(C_nH_{2n+1})\text{-}(SO_3^-M^+)_p$$

wherein for each alkyl sulfonate salt present, n is independently an integer from 6 to 17; p is independently an integer from 1 to 5; and each M is independently an alkali or alkaline earth metal;
wherein the combined weight percent value of the first polycarbonate component and the second polycarbonate component is from greater than 45 wt% to about 70 wt%;
wherein the combined weight percent value of all components does not exceed about 100 wt%;
wherein all weight percent values are based on the total weight of the composition; and
wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In various aspects, the invention pertains to thermoplastic composition with improved mold release properties comprising:

a) from about 10 wt% to about 70 wt% of a first polycarbonate component;
b) from about 10 wt% to about 70 wt% of a second polycarbonate component;
c) from about 2 wt% to about 10 wt% of an impact modifier component;
d) from about 5 wt% to about 30 wt% of a mineral filler component;
e) from about 1 wt% to about 25 wt% of a polycarbonate-polysiloxane copolymer component; and
f) from about 0.1 wt% to about 4.0 wt% of an alkyl sulfonate salt component;

wherein the combined weight percent value of the first polycarbonate component and the second polycarbonate component is from greater than 10 wt% to about 70 wt%; wherein the combined weight percent value of all components does not exceed about 100 wt%; wherein all weight percent values are based on the total weight of the composition; and wherein a molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In various aspects, the invention pertains to thermoplastic composition with improved mold release properties comprising:

a) from about 15 wt% to about 35 wt% of a first polycarbonate component;
b) from about 20 wt% to about 50 wt% of a second polycarbonate component;
c) from about 2 wt% to about 8 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 10 wt% to about 25 wt% of a mineral filler component;
e) from about 1 wt% to about 25 wt% of a polycarbonate-polysiloxane copolymer component; and
f) from about 0.5 wt% to about 2.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238;
wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238;
wherein the alkyl sulfonate salt component comprises one or more structures represented by a formula:

$$(C_nH_{2n+1})\text{-}(SO_3^-M^+)_p$$

wherein for each alkyl sulfonate salt present, n is independently an integer from 6 to 17; p is independently an integer from 1 to 5; and each M is independently an alkali or alkaline earth metal;
wherein the combined weight percent value of the first polycarbonate component and the second polycarbonate component is from greater than 45 wt% to about 70 wt%;
wherein the combined weight percent value of all components does not exceed about 100 wt%;
wherein all weight percent values are based on the total weight of the composition; and
wherein a molded sample of the thermoplastic composition exhibits a 3-fold lower mold ejection pressure compared to

a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In various aspects, the invention pertains to thermoplastic composition with improved mold release properties comprising:

a) from about 20 wt% to about 30 wt% of a first polycarbonate component;
b) from about 20 wt% to about 50 wt% of a second polycarbonate component;
c) from about 3 wt% to about 6 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 12 wt% to about 20 wt% of a mineral filler component;
e) from about 1 wt% to about 25 wt% of a polycarbonate-polysiloxane copolymer component; and
f) from about 0.5 wt% to about 1.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238;
wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238;
wherein the alkyl sulfonate salt component comprises one or more structures represented by a formula:

$$(C_nH_{2n+1})\text{-}(SO_3^-M^+)_p$$

wherein for each alkyl sulfonate salt present, n is independently an integer from 6 to 17; p is independently an integer from 1 to 5; and each M is independently an alkali or alkaline earth metal;
wherein the combined weight percent value of the first polycarbonate component and the second polycarbonate component is from greater than 45 wt% to about 70 wt%;
wherein the combined weight percent value of all components does not exceed about 100 wt%;
wherein all weight percent values are based on the total weight of the composition; and
wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

POLYCARBONATE POLYMER

In one aspect, the disclosed blended polycarbonate compositions with improved mold release properties of the present invention comprise a polycarbonate polymer composition. In various aspects, the disclosed blended polycarbonate compositions can also have useful mechanical properties such as impact strength and multi-axial impact strength.

In one aspect, a polycarbonate can comprise any polycarbonate material or mixture of materials, for example, as recited in U.S. Patent No. 7,786,246, which is hereby incorporated in its entirety for the specific purpose of disclosing various polycarbonate compositions and methods. The term polycarbonate can be further defined as compositions have repeating structural units of the formula (1):

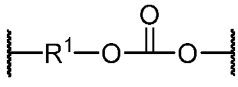 (1),

in which at least 60 percent of the total number of $R^1$ groups are aromatic organic radicals and the balance thereof are aliphatic, alicyclic, or aromatic radicals. Preferably, each $R^1$ is an aromatic organic radical and, more preferably, a radical of the formula (2):

$$-A^1\text{-}Y^1\text{-}A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$ or example, radicals of this type include, but are not limited to, radicals such as -O-, -S-, -S(O) -, $-S(O_2)$ -, -C(O) -, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene.

In a further aspect, polycarbonates can be produced by the interfacial reaction of dihydroxy compounds having the formula $HO\text{-}R^1\text{-}OH$, which includes dihydroxy compounds of formula (3):

$$HO\text{-}A^1\text{-}Y^1\text{-}A^2\text{-}OH \qquad (3),$$

wherein $Y^1$, $A^1$ and $A^2$ are as described above. Also included are bisphenol compounds of general formula (4):

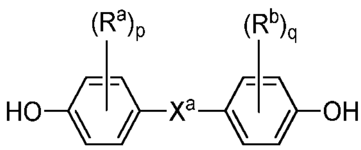
,

wherein $R^a$ and $R^b$ each represent a halogen atom or a monovalent hydrocarbon group and can be the same or different; p and q are each independently integers from 0 to 4; and $X^a$ represents one of the groups of formula (5):

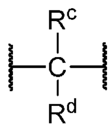
or
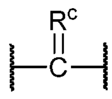
,

wherein $R^C$ and $R^d$ each independently represent a hydrogen atom or a monovalent linear or cyclic hydrocarbon group and $R^e$ is a divalent hydrocarbon group.

In various aspects, examples of suitable dihydroxy compounds include the dihydroxy-substituted hydrocarbons disclosed by name or formula (generic or specific) in U.S. Pat. No. 4,217,438. A nonexclusive list of specific examples of suitable dihydroxy compounds includes the following: resorcinol, 4-bromoresorcinol, hydroquinone, 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1 - phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis (4-hydroxyphenyl)cyclohexane, 1,1-bis (4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis (4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, 2,7-dihydroxycarbazole, 3,3-bis(4-hydroxyphenyl)phthalimidine, 2-phenyl-3,3-bis-(4-hydroxyphenyl)phthalimidine (PPPBP), and the like, as well as mixtures including at least one of the foregoing dihydroxy compounds.

In a further aspect, examples of the types of bisphenol compounds that can be represented by formula (3) includes 1,1-bis(4-hydroxyphenyl)methane, 1,1-bis(4-hydroxyphenyl)ethane, 2,2-bis(4-hydroxyphenyl)propane (hereinafter "bisphenol A" or "BPA"), 2,2-bis(4-hydroxyphenyl)butane, 2,2-bis(4-hydroxyphenyl)octane, 1,1-bis(4-hydroxyphenyl)propane, 1,1-bis(4-hydroxyphenyl) n-butane, 2,2-bis( 4-hydroxy-1-methylphenyl)propane, and 1,1-bis(4-hydroxy-t-butylphenyl)propane. Combinations including at least one of the foregoing dihydroxy compounds can also be used.

In various aspects, a polycarbonate can employ two or more different dihydroxy compounds or a copolymer of a dihydroxy compounds with a glycol or with a hydroxy- or acid-terminated polyester or with a dibasic acid or hydroxy acid in the event a carbonate copolymer rather than a homopolymer is desired for use. Polyarylates and polyester-carbonate resins or their blends can also be employed. Branched polycarbonates are also useful, as well as blends of linear polycarbonate and a branched polycarbonate. The branched polycarbonates can be prepared by adding a branching agent during polymerization.

In a further aspect, the branching agents include polyfunctional organic compounds containing at least three functional groups selected from hydroxyl, carboxyl, carboxylic anhydride, haloformyl, and mixtures thereof. Specific examples include trimellitic acid, trimellitic anhydride, trimellitic trichloride, tris-p-hydroxy phenyl ethane, isatin-bisphenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of from 0.05-2.0 weight percent. Branching agents and procedures for making branched polycarbonates are described in U.S. Pat. Nos. 3,635,895 and 4,001,184. All types of polycarbonate end groups are contemplated as being useful in the thermoplastic composition.

In a further aspect, the polycarbonates are based on bisphenol A, in which each of $A^1$ and $A^2$ is p-phenylene and $Y^1$ is isopropylidene. In a still further aspect, the molecular weight (Mw) of the polycarbonate is about 10,000 to about 100,000. In a yet further aspect, the polycarbonate has a Mw of about 15,000 to about 55,000. In an even further aspect, the polycarbonate has a Mw of about 18,000 to about 40,000.

Polycarbonates, including isosorbide-based polyester-polycarbonate, can comprise copolymers comprising carbonate units and other types of polymer units, including ester units, and combinations comprising at least one of homopolycarbonates and copolycarbonates. An exemplary polycarbonate copolymer of this type is a polyester carbonate, also known as a polyester-polycarbonate. Such copolymers further contain carbonate units derived from oligomeric ester-containing dihydroxy compounds (also referred to herein as hydroxy end-capped oligomeric acrylate esters).

In one aspect, polycarbonates can be manufactured using an interfacial phase transfer process or melt polymerization. Although the reaction conditions for interfacial polymerization can vary, an exemplary process generally involves dissolving or dispersing a dihydric phenol reactant in aqueous caustic soda or potash, adding the resulting mixture to a water-immiscible solvent medium such as for example methylene chloride, and contacting the reactants with a carbonate precursor (such as phosgene) in the presence of a catalyst such as, for example, triethylamine or a phase transfer catalyst salt, under controlled pH conditions of, for example, from about 8 to about 10.

The polycarbonate compounds and polymers disclosed herein can, in various aspects, be prepared by a melt polymerization process. Generally, in the melt polymerization process, polycarbonates are prepared by co-reacting, in a molten state, the dihydroxy reactant(s) (i.e., isosorbide, aliphatic diol and/or aliphatic diacid, and any additional dihydroxy compound) and a diaryl carbonate ester, such as diphenyl carbonate, or more specifically in an aspect, an activated carbonate such as bis(methyl salicyl)carbonate, in the presence of a transesterification catalyst. The reaction can be carried out in typical polymerization equipment, such as one or more continuously stirred reactors (CSTRs), plug flow reactors, wire wetting fall polymerizers, free fall polymerizers, wiped film polymerizers, BANBURY® mixers, single or twin screw extruders, or combinations of the foregoing. In one aspect, volatile monohydric phenol can be removed from the molten reactants by distillation and the polymer is isolated as a molten residue.

The melt polymerization can include a transesterification catalyst comprising a first catalyst, also referred to herein as an alpha catalyst, comprising a metal cation and an anion. In an aspect, the cation is an alkali or alkaline earth metal comprising Li, Na, K, Cs, Rb, Mg, Ca, Ba, Sr, or a combination comprising at least one of the foregoing. The anion is hydroxide ($OH^-$), superoxide ($O^{2-}$), thiolate ($HS^-$), sulfide ($S^{2-}$), a $C_{1-20}$ alkoxide, a $C_{6-20}$ aryloxide, a $C_{1-20}$ carboxylate, a phosphate including biphosphate, a $C_{1-20}$ phosphonate, a sulfate including bisulfate, sulfites including bisulfites and metabisulfites, a $C_{1-20}$ sulfonate, a carbonate including bicarbonate, or a combination comprising at least one of the foregoing. In another aspect, salts of an organic acid comprising both alkaline earth metal ions and alkali metal ions can also be used. Salts of organic acids useful as catalysts are illustrated by alkali metal and alkaline earth metal salts of formic acid, acetic acid, stearic acid and ethyelenediaminetetraacetic acid. The catalyst can also comprise the salt of a non-volatile inorganic acid. By "nonvolatile", it is meant that the referenced compounds have no appreciable vapor pressure at ambient temperature and pressure. In particular, these compounds are not volatile at temperatures at which melt polymerizations of polycarbonate are typically conducted. The salts of nonvolatile acids are alkali metal salts of phosphites; alkaline earth metal salts of phosphites; alkali metal salts of phosphates; and alkaline earth metal salts of phosphates. Exemplary transesterification catalysts include, lithium hydroxide, sodium hydroxide, potassium hydroxide, cesium hydroxide, magnesium hydroxide, calcium hydroxide, barium hydroxide, lithium formate, sodium formate, potassium formate, cesium formate, lithium acetate, sodium acetate, potassium acetate, lithium carbonate, sodium carbonate, potassium carbonate, lithium methoxide, sodium methoxide, potassium methoxide, lithium ethoxide, sodium ethoxide, potassium ethoxide, lithium phenoxide, sodium phenoxide, potassium phenoxide, sodium sulfate, potassium sulfate, $NaH_2PO_3$, $NaH_2PO_4$, $Na_2H_2PO_3$, $KH_2PO_4$, $CsH_2PO_4$, $Cs_2H_2PO_4$, $Na_2SO_3$, $Na_2S_2O_5$, sodium mesylate, potassium mesylate, sodium tosylate, potassium tosylate, magnesium disodium ethylenediamine tetraacetate (EDTA magnesium disodium salt), or a combination comprising at least one of the foregoing. It will be understood that the foregoing list is exemplary and should not be considered as limited thereto.

In one aspect, the transesterification catalyst is an alpha catalyst comprising an alkali or alkaline earth salt. In an exemplary aspect, the transesterification catalyst comprising sodium hydroxide, potassium hydroxide, sodium carbonate, potassium carbonate, sodium methoxide, potassium methoxide, $NaH_2PO_4$, or a combination comprising at least

one of the foregoing.

The amount of alpha catalyst can vary widely according to the conditions of the melt polymerization, and can be about 0.001 to about 500 μmol. In an aspect, the amount of alpha catalyst can be about 0.01 to about 20 μmol, specifically about 0.1 to about 10 μmol, more specifically about 0.5 to about 9 μmol, and still more specifically about 1 to about 7 μmol, per mole of aliphatic diol and any other dihydroxy compound present in the melt polymerization.

In another aspect, a second transesterification catalyst, also referred to herein as a beta catalyst, can optionally be included in the melt polymerization process, provided that the inclusion of such a second transesterification catalyst does not significantly adversely affect the desirable properties of the polycarbonate. Exemplary transesterification catalysts can further include a combination of a phase transfer catalyst of formula $(R^3)_4Q^+X$ above, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Exemplary phase transfer catalyst salts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. Examples of such transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing. Other melt transesterification catalysts include alkaline earth metal salts or alkali metal salts. In various aspects, where a beta catalyst is desired, the beta catalyst can be present in a molar ratio, relative to the alpha catalyst, of less than or equal to 10, specifically less than or equal to 5, more specifically less than or equal to 1, and still more specifically less than or equal to 0.5. In other aspects, the melt polymerization reaction disclosed herein uses only an alpha catalyst as described hereinabove, and is substantially free of any beta catalyst. As defined herein, "substantially free of' can mean where the beta catalyst has been excluded from the melt polymerization reaction. In one aspect, the beta catalyst is present in an amount of less than about 10 ppm, specifically less than 1 ppm, more specifically less than about 0.1 ppm, more specifically less than or equal to about 0.01 ppm, and more specifically less than or equal to about 0.001 ppm, based on the total weight of all components used in the melt polymerization reaction.

In one aspect, an end-capping agent (also referred to as a chain-stopper) can optionally be used to limit molecular weight growth rate, and so control molecular weight in the polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and $C_1$-$C_{22}$ alkyl-substituted phenols such as p-cumyl-phenol, resorcinol monobenzoate, and p- and tertiary-butyl phenol, cresol, and monoethers of diphenols, such as p-methoxyphenol. Alkyl-substituted phenols with branched chain alkyl substituents having 8 to 9 carbon atoms can be specifically mentioned.

In another aspect, endgroups can be derived from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In one aspect, the endgroup of a polycarbonate, including anpolycarbonate polymer as defined herein, can comprise a structural unit derived from a diaryl carbonate, where the structural unit can be an endgroup. In a further aspect, the endgroup is derived from an activated carbonate. Such endgroups can be derived from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups.

In one aspect, the melt polymerization reaction can be conducted by subjecting the reaction mixture to a series of temperature-pressure-time protocols. In some aspects, this involves gradually raising the reaction temperature in stages while gradually lowering the pressure in stages. In one aspect, the pressure is reduced from about atmospheric pressure at the start of the reaction to about 1 millibar (100 Pa) or lower, or in another aspect to 0.1 millibar (10 Pa) or lower in several steps as the reaction approaches completion. The temperature can be varied in a stepwise fashion beginning at a temperature of about the melting temperature of the reaction mixture and subsequently increased to final temperature. In one aspect, the reaction mixture is heated from room temperature to about 150 °C. In such an aspect, the polymerization reaction starts at a temperature of about 150 °C to about 220 °C.

In another aspect, the polymerization temperature can be up to about 220 °C. In other aspects, the polymerization reaction can then be increased to about 250 °C and then optionally further increased to a temperature of about 320 °C, and all subranges there between. In one aspect, the total reaction time can be from about 30 minutes to about 200 minutes and all subranges there between. This procedure will generally ensure that the reactants react to give polycarbonates with the desired molecular weight, glass transition temperature and physical properties. The reaction proceeds to build the polycarbonate chain with production of ester-substituted alcohol by-product such as methyl salicylate. In one aspect, efficient removal of the by-product can be achieved by different techniques such as reducing the pressure. Generally the pressure starts relatively high in the beginning of the reaction and is lowered progressively throughout the

reaction and temperature is raised throughout the reaction.

In one aspect, the progress of the reaction can be monitored by measuring the melt viscosity or the weight average molecular weight of the reaction mixture using techniques known in the art such as gel permeation chromatography. These properties can be measured by taking discrete samples or can be measured on-line. After the desired melt viscosity and/or molecular weight is reached, the final polycarbonate product can be isolated from the reactor in a solid or molten form. It will be appreciated by a person skilled in the art, that the method of making aliphatic homopolycarbonate and aliphatic-aromatic copolycarbonates as described in the preceding sections can be made in a batch or a continuous process and the process disclosed herein is preferably carried out in a solvent free mode. Reactors chosen should ideally be self-cleaning and should minimize any "hot spots." However, vented extruders similar to those that are commercially available can be used.

The compositions of the present invention can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230°C and about 350°C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Thermoplastic compositions comprising blended polycarbonate compositions can be manufactured by various methods. For example, powdered polycarbonate, other polymer (if present), and/or other optional components are first blended, optionally with fillers in a HENSCHEL-Mixer® high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate can be one-fourth inch long or less as desired. Such pellets can be used for subsequent molding, shaping, or forming.

In one aspect, the polycarbonate component of the blended polycarbonate composition comprises Bisphenol A residues. In a further aspect, the polycarbonate component of the blended polycarbonate composition is prepared by an interfacial polymerization process.

In reference to the weight average molecular weight ($M_w$) of the polycarbonate component, including the first and second polycarbonate components, of the present invention, it is understood that the $M_w$ is the absolute $M_w$ determined by gel permeation chromatography relative to traceable polycarbonate standards.

In one aspect, the polycarbonate component of the blended polycarbonate composition comprises a first polycarbonate component and a second polycarbonate component. In a further aspect, the polycarbonate component of the blended polycarbonate composition is present in an amount from about 10 wt% to about 60 wt%. In a still further aspect, the polycarbonate component of the blended polycarbonate composition is present in an amount from about 10 wt% to about 50 wt%. In a yet further aspect, the polycarbonate component of the blended polycarbonate composition is present in an amount from about 30 wt% to about 70 wt%. In an even further aspect, the polycarbonate component of the blended polycarbonate composition is present in an amount from about 10 wt% to about 40 wt%.

In one aspect, the combined weight percent value of the first polycarbonate component and the second polycarbonate component is from about 20 wt% to about 70 wt%. In a further aspect, the combined weight percent value of the first polycarbonate component and the second polycarbonate component is from about 20 wt% to about 60 wt%. In still a further aspect, the combined weight percent value of the first polycarbonate component and the second polycarbonate component is from about 20 wt% to about 50 wt%. In still a further aspect, the combined weight percent value of the first polycarbonate component and the second polycarbonate component is from about 20 wt% to about 40 wt%.

In one aspect, the first polycarbonate component is present in an amount from about 10 wt% to about 60 wt%. In a further aspect, the first polycarbonate component is present in an amount from about 10 wt% to about 50 wt%. In a yet further aspect, the first polycarbonate component is present in an amount from about 10 wt% to about 40 wt%. In an even further aspect, the first polycarbonate component is present in an amount from about 10 wt% to about 30 wt%. In a still further aspect, the first polycarbonate component is present in an amount from about 10 wt% to about 20 wt%.

In one aspect, the first polycarbonate component is present in an amount from about 20 wt% to about 70 wt%. In a further aspect, the first polycarbonate component is present in an amount from about 20 wt% to about 60 wt%. In

a yet further aspect, the first polycarbonate component is present in an amount from about 20 wt% to about 50 wt%. In an even further aspect, the first polycarbonate component is present in an amount from about 20 wt% to about 40 wt%. In a still further aspect, the first polycarbonate component is present in an amount from about 20 wt% to about 30 wt%.

In one aspect, the first polycarbonate component is present in an amount from about 25 wt% to about 50 wt%. In a further aspect, the first polycarbonate component is present in an amount from about 25 wt% to about 45 wt%. In a yet further aspect, the first polycarbonate component is present in an amount from about 25 wt% to about 40 wt%. In an even further aspect, the first polycarbonate component is present in an amount from about 25 wt% to about 35 wt%. In a still further aspect, the first polycarbonate component is present in an amount from about 25 wt% to about 30 wt%.

In one aspect, the first polycarbonate polymer component is present in an amount of about 20 wt%. In another aspect, the first polycarbonate polymer component is present in an amount of about 22 wt%. In still another aspect, the first polycarbonate polymer component is present in an amount of about 23 wt%. In still another aspect, the first polycarbonate polymer component is present in an amount of about 24 wt%. In still another aspect, the first polycarbonate polymer component is present in an amount of about 25 wt%.

In one aspect, the first polycarbonate polymer component is a high flow polycarbonate. In another aspect, the first polycarbonate polymer component has a melt volume flow rate (MFR) of at least about 20 grams/10 minutes when measured at 300 °C and under a load of 1.2 kg according to ASTM D1238. In still another aspect, the first polycarbonate polymer component has a melt volume flow rate (MFR) of at least about 22 grams/10 minutes when measured at 300 °C and under a load of 1.2 kg according to ASTM D1238. In still another aspect, the first polycarbonate polymer component has a melt volume flow rate (MFR) from about 17 grams/10 minutes to about 32 grams/10 minutes when measured at 300 °C and under a load of 1.2 kg according to ASTM D1238. In still another aspect, the first polycarbonate polymer component has a melt volume flow rate (MFR) from about 20 grams/10 minutes to about 30 grams/10 minutes when measured at 300 °C and under a load of 1.2 kg according to ASTM D1238. In still another aspect, the first polycarbonate polymer component has a melt volume flow rate (MFR) from about 22 grams/10 minutes to about 29 grams/10 minutes when measured at 300 °C and under a load of 1.2 kg according to ASTM D1238. In still another aspect, the first polycarbonate polymer component has a melt volume flow rate (MFR) from about 23 grams/10 minutes to about 29 grams/10 minutes when measured at 300 °C and under a load of 1.2 kg according to ASTM D1238.

In one aspect, the polycarbonate component of the blended polycarbonate composition has a weight average molecular weight of from about 15,000 grams per mol (g/mol) to about 100,000 g/mol on an absolute polycarbonate molecular weight scale. In a still further aspect, the first polycarbonate component has a weight average molecular weight of from about 15,000 g/mol to about 50,000 g/mol on an absolute polycarbonate molecular weight scale. In a yet further aspect, the first polycarbonate component has a weight average molecular weight of from about 15,000 g/mol to about 45,000 g/mol on an absolute polycarbonate molecular weight scale. In an even further aspect, the first polycarbonate component has a weight average molecular weight of from about 15,000 g/mol to about 40,000 g/mol on an absolute polycarbonate molecular weight scale. In an even further aspect, the first polycarbonate component has a weight average molecular weight of from about 15,000 g/mol to about 35,000 g/mol on an absolute polycarbonate molecular weight scale. In an even further aspect, the first polycarbonate component has a weight average molecular weight of from about 15,000 g/mol to about 30,000 g/mol on an absolute polycarbonate molecular weight scale. In an even further aspect, the first polycarbonate component has a weight average molecular weight of from about 15,000 g/mol to about 25,000 g/mol on an absolute polycarbonate molecular weight scale.

In one aspect, the first polycarbonate component has a weight average molecular weight of from about 20,000 g/mol to about 100,000 g/mol on an absolute polycarbonate molecular weight scale. In a further aspect, the first polycarbonate component has a weight average molecular weight of from about 20,000 g/mol to about 50,000 g/mol on an absolute polycarbonate molecular weight scale. In a yet further aspect, the first polycarbonate component has a weight average molecular weight of from about 20,000 g/mol to about 45,000 g/mol on an absolute polycarbonate molecular weight scale. In an even further aspect, the first polycarbonate component has a weight average molecular weight of from about 20,000 g/mol to about 40,000 g/mol on an absolute polycarbonate molecular weight scale. In a still further aspect, the first polycarbonate component has a weight average molecular weight of from about 20,000 g/mol to about 35,000 g/mol on an absolute polycarbonate molecular weight scale. In a yet further aspect, the first polycarbonate component has a weight average molecular weight of from about 20,000 g/mol to about 30,000 g/mol on an absolute polycarbonate molecular weight scale. In an even further aspect, the first polycarbonate component has a weight average molecular weight of from about 20,000 g/mol to about 30,000 g/mol on an absolute polycarbonate molecular weight scale. In a still further aspect, the first polycarbonate component has a weight average molecular weight of from about 20,000 g/mol to about 29,000 g/mol on an absolute polycarbonate molecular weight scale.

In one aspect, the first polycarbonate component has a weight average molecular weight of from about 25,000 g/mol to about 100,000 g/mol on an absolute polycarbonate molecular weight scale. In a further aspect, the first polycarbonate component has a weight average molecular weight of from about 25,000 g/mol to about 50,000 g/mol on an absolute polycarbonate molecular weight scale. In a yet further aspect, the first polycarbonate component has a weight average molecular weight of from about 25,000 g/mol to about 45,000 g/mol on an absolute polycarbonate molecular

weight scale. In an even further aspect, the first polycarbonate component has a weight average molecular weight of from about 25,000 g/mol to about 40,000 g/mol on an absolute polycarbonate molecular weight scale. In a still further aspect, the first polycarbonate component has a weight average molecular weight of from about 25,000 g/mol to about 35,000 g/mol on an absolute polycarbonate molecular weight scale. In a yet further aspect, the first polycarbonate component has a weight average molecular weight of from about 25,000 g/mol to about 30,000 g/mol on an absolute polycarbonate molecular weight scale. In an even further aspect, the first polycarbonate component has a weight average molecular weight of from about 25,000 g/mol to about 30,500 g/mol on an absolute polycarbonate molecular weight scale. In a still further aspect, the first polycarbonate component has a weight average molecular weight of from about 25,000 g/mol to about 30,000 g/mol on an absolute polycarbonate molecular weight scale. In a yet further aspect, the first polycarbonate component has a weight average molecular weight of from about 25,000 g/mol to about 29,000 g/mol on an absolute polycarbonate molecular weight scale.

In one aspect, the first polycarbonate component has a weight average molecular weight of from about 18,000 g/mol to about 35,000 g/mol on an absolute polycarbonate molecular weight scale. In a further aspect, the first polycarbonate component has a weight average molecular weight of from about 18,000 g/mol to about 30,000 g/mol on an absolute polycarbonate molecular weight scale. In an even further aspect, the first polycarbonate component has a weight average molecular weight of from about 18,000 g/mol to about 25,000 g/mol on an absolute polycarbonate molecular weight scale. In a still further aspect, the first polycarbonate component has a weight average molecular weight of from about 18,000 g/mol to about 23,000 g/mol on an absolute polycarbonate molecular weight scale.

In one aspect, the second polycarbonate component is present in an amount from about 20 wt% to about 50 wt%. In a further aspect, the second polycarbonate component is present in an amount from about 20 wt% to about 45 wt%. In a yet further aspect, the second polycarbonate component is present in an amount from about 20 wt% to about 40 wt%. In an even further aspect, the second polycarbonate component is present in an amount from about 20 wt% to about 35 wt%. In a still further aspect, the second polycarbonate component is present in an amount from about 20 wt% to about 30 wt%.

In one aspect, the second polycarbonate component is present in an amount from about 22 wt% to about 50 wt%. In a further aspect, the second polycarbonate component is present in an amount from about 22 wt% to about 45 wt%. In a yet further aspect, the second polycarbonate component is present in an amount from about 22 wt% to about 40 wt%. In an even further aspect, the second polycarbonate component is present in an amount from about 22 wt% to about 35 wt%. In a still further aspect, the second polycarbonate component is present in an amount from about 22 wt% to about 30 wt%.

In one aspect, the second polycarbonate component is present in an amount from about 25 wt% to about 50 wt%. In a further aspect, the second polycarbonate component is present in an amount from about 25 wt% to about 45 wt%. In a yet further aspect, the second polycarbonate component is present in an amount from about 25 wt% to about 40 wt%. In an even further aspect, the second polycarbonate component is present in an amount from about 25 wt% to about 35 wt%. In a still further aspect, the second polycarbonate component is present in an amount from about 25 wt% to about 30 wt%.

In one aspect, the second polycarbonate polymer component is present in an amount of about 25 wt%. In another aspect, the second polycarbonate polymer component is present in an amount of about 27 wt%. In still another aspect, the second polycarbonate polymer component is present in an amount of about 29 wt%. In still another aspect, the second polycarbonate polymer component is present in an amount of about 31 wt%. In still another aspect, the second polycarbonate polymer component is present in an amount of about 33 wt%. In still another aspect, the second polycarbonate polymer component is present in an amount of about 35 wt%. In still another aspect, the second polycarbonate polymer component is present in an amount of about 37 wt%. In still another aspect, the second polycarbonate polymer component is present in an amount of about 39 wt%. In still another aspect, the second polycarbonate polymer component is present in an amount of about 41 wt%. In still another aspect, the second polycarbonate polymer component is present in an amount of about 43 wt%. In still another aspect, the second polycarbonate polymer component is present in an amount of about 45 wt%. In still another aspect, the second polycarbonate polymer component is present in an amount of about 47 wt%. In still another aspect, the second polycarbonate polymer component is present in an amount of about 49 wt%.

In one aspect, the second polycarbonate polymer component is a low flow polycarbonate. In another aspect, the second polycarbonate polymer component has a melt volume flow rate (MFR) of at least about 3.0 grams/10 minutes when measured at 300°C and under a load of 1.2 kg according to ASTM D1238. In still another aspect, the second polycarbonate polymer component has a melt volume flow rate (MFR) of at least about 4.0 grams/10 minutes when measured at 300°C and under a load of 1.2 kg according to ASTM D1238. In still another aspect, the second polycarbonate polymer component has a melt volume flow rate (MFR) of at least about 4.5 grams/10 minutes when measured at 300°C and under a load of 1.2 kg according to ASTM D1238. In still another aspect, the second polycarbonate polymer component has a melt volume flow rate (MFR) of at least about 5.0 grams/10 minutes when measured at 300°C and under a load of 1.2 kg according to ASTM D1238. In still another aspect, the second polycarbonate polymer component has

a melt volume flow rate (MFR) of at least about 5.1 grams/10 minutes when measured at 300°C and under a load of 1.2 kg according to ASTM D1238. In still another aspect, the second polycarbonate polymer component has a melt volume flow rate (MFR) of at least about 5.2 grams/10 minutes when measured at 300°C and under a load of 1.2 kg according to ASTM D1238. In still another aspect, the second polycarbonate polymer component has a melt volume flow rate (MFR) from about 4.0 grams/10 minutes to about 8.0 grams/10 minutes when measured at 300°C and under a load of 1.2 kg according to ASTM D1238. In still another aspect, the second polycarbonate polymer component has a melt volume flow rate (MFR) from about 4.5 grams/10 minutes to about 7.2 grams/10 minutes when measured at 300°C and under a load of 1.2 kg according to ASTM D1238. In still another aspect, the second polycarbonate polymer component has a melt volume flow rate (MFR) from about 4.8 grams/10 minutes to about 7.1 grams/10 minutes when measured at 300°C and under a load of 1.2 kg according to ASTM D1238. In still another aspect, the second polycarbonate polymer component has a melt volume flow rate (MFR) from about 5.1 grams/10 minutes to about 6.9 grams/10 minutes when measured at 300 °C and under a load of 1.2 kg according to ASTM D1238.

In one aspect, the second polycarbonate component has a weight average molecular weight of from about 15,000 g/mol to about 100,000 g/mol on an absolute polycarbonate molecular weight scale. In a further aspect, the second polycarbonate component has a weight average molecular weight of from about 15,000 g/mol to about 50,000 g/mol on an absolute polycarbonate molecular weight scale. In a yet further aspect, the second polycarbonate component has a weight average molecular weight of from about 15,000 g/mol to about 45,000 g/mol on an absolute polycarbonate molecular weight scale. In an even further aspect, the second polycarbonate component has a weight average molecular weight of from about 15,000 g/mol to about 40,000 g/mol on an absolute polycarbonate molecular weight scale. In a still further aspect, the second polycarbonate component has a weight average molecular weight of from about 15,000 g/mol to about 35,000 g/mol on an absolute polycarbonate molecular weight scale. In a yet further aspect, the second polycarbonate component has a weight average molecular weight of from about 15,000 g/mol to about 30,000 g/mol on an absolute polycarbonate molecular weight scale. In an even further aspect, the second polycarbonate component has a weight average molecular weight of from about 15,000 g/mol to about 25,000 g/mol on an absolute polycarbonate molecular weight scale.

In one aspect, the second polycarbonate component has a weight average molecular weight of from about 20,000 g/mol to about 100,000 g/mol on an absolute polycarbonate molecular weight scale. In a further aspect, the second polycarbonate component has a weight average molecular weight of from about 20,000 g/mol to about 50,000 g/mol on an absolute polycarbonate molecular weight scale. In a yet further aspect, the second polycarbonate component has a weight average molecular weight of from about 20,000 g/mol to about 45,000 g/mol on an absolute polycarbonate molecular weight scale. In an even further aspect, the second polycarbonate component has a weight average molecular weight of from about 20,000 g/mol to about 40,000 g/mol on an absolute polycarbonate molecular weight scale. In a still further aspect, the second polycarbonate component has a weight average molecular weight of from about 20,000 g/mol to about 35,000 g/mol on an absolute polycarbonate molecular weight scale. In a yet further aspect, the second polycarbonate component has a weight average molecular weight of from about 20,000 g/mol to about 30,000 g/mol on an absolute polycarbonate molecular weight scale. In an even further aspect, the second polycarbonate component has a weight average molecular weight of from about 20,000 g/mol to about 25,000 g/mol on an absolute polycarbonate molecular weight scale.

In one aspect, the second polycarbonate polymer component has a weight average molecular weight from about 18,000 to about 40,000 grams/mole. In another aspect, the second polycarbonate polymer component has a weight average molecular weight from about 20,000 to about 30,000 grams/mole. In still another aspect, the second polycarbonate polymer component has a weight average molecular weight from about 23,000 to about 30,000 grams/mole. In still another aspect, the second polycarbonate polymer component has a weight average molecular weight from about 25,000 to about 30,000 grams/mole. In still another aspect, the second polycarbonate polymer component has a weight average molecular weight from about 27,000 to about 30,000 grams/mole.

POLYCARBONATE-POLYSILOXANE COPOLYMER

The disclosed thermoplastic compositions further comprise a polycarbonate-polysiloxane block copolymer component. As used herein, the term polycarbonate-polysiloxane copolymer is equivalent to polysiloxane-polycarbonate copolymer, polycarbonate-polysiloxane polymer, or polysiloxane-polycarbonate polymer. The polysiloxane-polycarbonate copolymer comprises polydiorganosiloxane blocks comprising structural units of the general formula (I) below:

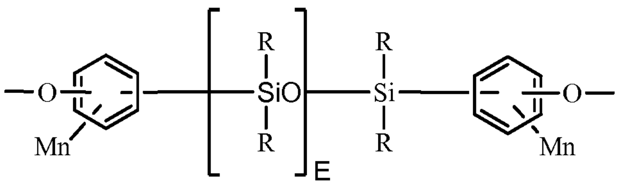

(I)

wherein the polydiorganosiloxane block length (E) is from about 20 to about 60; wherein each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$aralkoxy, $C_7$-$C_{12}$ alkylaryl, or $C_7$-$C_{12}$ alkylaryloxy, and where each n is independently 0, 1, 2, 3, or 4. The polysiloxane-polycarbonate copolymer also comprises polycarbonate blocks comprising structural units of the general formula (II) below:

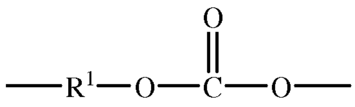

(II)

wherein at least 60 percent of the total number of $R^1$ groups comprise aromatic moieties and the balance thereof comprise aliphatic, alicyclic, or aromatic moieties.

According to exemplary non-limiting aspects of the disclosure, the polycarbonate- polysiloxane block copolymer comprises diorganopolysiloxane blocks of the general formula (III) below:

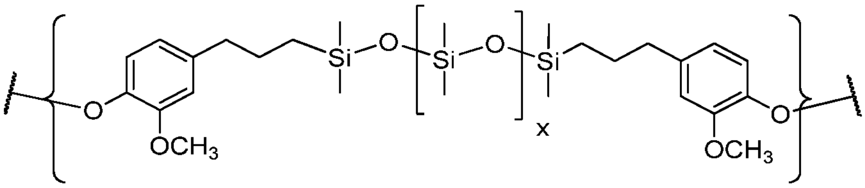

(III)

wherein x represents an integer from about 20 to about 60. The polycarbonate blocks according to these aspects can be derived from bisphenol-A monomers.

Diorganopolysiloxane blocks of formula (III) above can be derived from the corresponding dihydroxy compound of formula (IV):

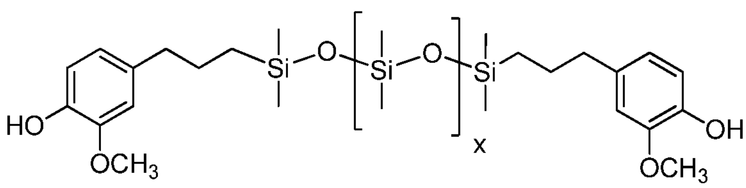

(IV),

wherein x is as described above. Compounds of this type and others are further described in U.S. Patent 4,746,701 to Kress, et al. and US 8,017,697 to Carrillo. Compounds of this formula can be obtained by the reaction of the appropriate dihydroxyarylene compound with, for example, an alpha, omega-bisacetoxypolydiorangonosiloxane under phase transfer conditions.

Such dihydroxy polysiloxanes can be made by effecting a platinum catalyzed addition between a siloxane hydride of the formula (V):

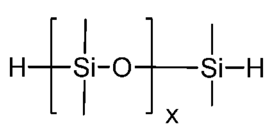

(V),

wherein x is a previously defined, and an aliphatically unsaturated monohydric phenol such as eugenol to yield a compound of formula (IV).

The polycarbonate-polysiloxane copolymer may be manufactured by reaction of a diphenolic polysiloxane, such as that depicted by formula (IV), with a carbonate source and a dihydroxy aromatic compound such as bisphenol-A, optionally in the presence of a phase transfer catalyst as described above. Suitable conditions are similar to those useful in forming polycarbonates. For example, the copolymers can be prepared by phosgenation at temperatures from below 0°C to about 100°C, including for example, at temperatures from about 25°C to about 50°C. Since the reaction is exothermic, the rate of phosgene addition can be used to control the reaction temperature. The amount of phosgene required will generally depend upon the amount of the dihydric reactants. Alternatively, the polycarbonate-polysiloxane copolymers can be prepared by co-reacting, in a molten state, the dihydroxy monomers and a diaryl carbonate ester, such as diphenyl carbonate, in the presence of a transesterification catalyst as described above.

In the production of the polycarbonate-polysiloxane copolymer, the amount of dihydroxy diorganopolysiloxane can be selected so as to provide the desired amount of diorganopolysiloxane units in the copolymer. The particular amounts used will therefore be determined depending on desired physical properties of the composition, the value of x (for example, within the range of about 20 to about 60), and the type and relative amount of each component in the composition, including the type and amount of polycarbonate, type and amount of polycarbonate-polysiloxane copolymer, and type and amount of any other additives. Suitable amounts of dihydroxy diorganopolysiloxane can be determined by one of ordinary skill in the art without undue experimentation using the guidelines taught herein.

For example, according to aspects of the disclosure, the polysiloxane-polycarbonate block copolymer can be provided having any desired level of siloxane content. For example, the siloxane content can be in the range of from 4 mole % to 20 mole %. In additional aspects, the siloxane content of the polysiloxane-polycarbonate block copolymer can be in the range of from 4 mole % to 10 mole %. In still further aspects, the siloxane content of the polysiloxane-polycarbonate block copolymer can be in the range of from 4 mole % to 8 mole %. In a further aspect, the polysiloxane-polycarbonate copolymer comprises a diorganosiloxane content in the range of from 5 to 7 mole wt %. In an even further exemplary aspect, the siloxane content of the polysiloxane-polycarbonate block copolymer can be about 6 mole %. Still further, the diorganopolysiloxane blocks can be randomly distributed in the polysiloxane-polycarbonate block copolymer.

The disclosed polysiloxane-polycarbonate block copolymers can also be end-capped as similarly described in connection with the manufacture of polycarbonates set forth herein. For example, according to aspects of the disclosure, a polysiloxane-polycarbonate block copolymer can be end capped with p-cumyl-phenol.

A non-limiting example of a polycarbonate-siloxane copolymer includes transparent EXL, available from SABIC's Innovative Plastics business. The transparent EXL from SABIC is a polycarbonate-polysiloxane (9030T) copolymer, having been tested commercially and found to have about 6 mole % siloxane, a Mw of about 44,600, and a Mn of about 17800 in a polystyrene standard using chloroform solvent.

The polysiloxane polycarbonate copolymer component can be present in the thermoplastic composition in any desired amount. For example, in aspects of the disclosure, the polysiloxane polycarbonate copolymer is present in an amount of about 0 wt% to about 25 wt% of a polycarbonate-polysiloxane copolymer component relative to the total weight of the thermoplastic composition. In various further aspects, the polysiloxane polycarbonate copolymer is present in an amount of at least about 1 wt% relative to the total weight of the thermoplastic composition. For example, the polycarbonate-polysiloxane copolymer can be present in an amount in the range of from 1 wt% to 25 wt% relative to the total weight of the thermoplastic composition, including exemplary amounts of 1.0 wt%, 1.5 wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 9 wt%, 10wt%, 11 wt%, 12 wt%, 13 wt%, 14 wt%, 15 wt%, 16 wt%, 17 wt%, 18 wt%, 19 wt%, 20 wt%, 21 wt%, 22 wt%, 23 wt%, 24 wt%, and 25 wt%. In still further aspects, the polysiloxane polycarbonate copolymer can be present within any range of amounts derived from any two of the above stated values. For example, the polysiloxane polycarbonate copolymer can be present in an amount in the range of from about 1 to about 2 wt%, or in an amount in the range of from about 1 wt% to about 8 wt%.

In one aspect, the polycarbonate-polysiloxane copolymer component is a polycarbonate-polydimethylsiloxane copolymer. In another aspect, the polycarbonate portion of the polycarbonate-polysiloxane copolymer comprises residues derived from BPA. In still another aspect, the polycarbonate portion of the polycarbonate-polysiloxane copolymer comprising residues derived from BPA is a homopolymer. In still another aspect, the polycarbonate-polysiloxane copolymer component comprises a polycarbonate-polysiloxane block copolymer.

In one aspect, the polycarbonate-polysiloxane block copolymer comprises a polycarbonate-polydimethylsiloxane block copolymer. In another aspect, the polycarbonate block comprises residues derived from BPA. In still other aspect, the polycarbonate block comprising residues derived from BPA is a homopolymer.

In one aspect, the polycarbonate-polysiloxane block copolymer comprises from about 3 wt% to about 10 wt% siloxane. In another aspect, the polycarbonate-polysiloxane block copolymer comprises from about 4 wt% to about 8 wt% siloxane. In still another aspect, the polycarbonate-polysiloxane block copolymer comprises about 5 wt% siloxane. In still another aspect, the polycarbonate-polysiloxane block copolymer comprises about 6 wt% siloxane. In still another aspect, the polycarbonate-polysiloxane block copolymer comprises about 7 wt% siloxane. In still another aspect, the

polycarbonate-polysiloxane block copolymer comprises about 8 wt% siloxane.

In one aspect, the polysiloxane block has a weight average molecular weight from about 20,000 to about 26,000 Daltons. In another aspect, the polysiloxane block has a weight average molecular weight from about 21,000 to about 25,000 Daltons. In still another aspect, the polysiloxane block has a weight average molecular weight from about 22,000 to about 24,000 Daltons. In still another aspect, the polysiloxane block has a weight average molecular weight of about 22,000 Daltons. In still another aspect, the polysiloxane block has a weight average molecular weight of about 23,000 Daltons. In still another aspect, the polysiloxane block has a weight average molecular weight of about 24,000 Daltons. In still another aspect, the polysiloxane block has a weight average molecular weight of about 25,000 Daltons.

In one aspect, the polycarbonate-polysiloxane block copolymer comprises from about 15 wt% to about 25 wt% siloxane. In another aspect, the polycarbonate-polysiloxane block copolymer comprises from about 17 wt% to about 23 wt% siloxane. In still another aspect, the polycarbonate-polysiloxane block copolymer comprises from about 18 wt% to about 22 wt% siloxane. In still another aspect, the polycarbonate-polysiloxane block copolymer comprises from about 19 wt% to about 21 wt% siloxane. In still another aspect, the polycarbonate-polysiloxane block copolymer comprises about 18 wt% siloxane. In still another aspect, the polycarbonate-polysiloxane block copolymer comprises about 19 wt% siloxane. In still another aspect, the polycarbonate-polysiloxane block copolymer comprises about 20 wt% siloxane. In still another aspect, the polycarbonate-polysiloxane block copolymer comprises about 21 wt% siloxane. In still another aspect, the polycarbonate-polysiloxane block copolymer comprises about 22 wt% siloxane.

In one aspect, the polysiloxane block has a weight average molecular weight from about 25,000 to about 32,000 Daltons. In another aspect, the polysiloxane block has a weight average molecular weight from about 26,000 to about 31,000 Daltons. In still another aspect, the polysiloxane block has a weight average molecular weight from about 27,000 to about 30,000 Daltons. In still another aspect, the polysiloxane block has a weight average molecular weight from about 28,000 to about 30,000 Daltons. In still another aspect, the polysiloxane block has a weight average molecular weight of about 27,000 Daltons. In still another aspect, the polysiloxane block has a weight average molecular weight of about 28,000 Daltons. In still another aspect, the polysiloxane block has a weight average molecular weight of about 29,000 Daltons. In still another aspect, the polysiloxane block has a weight average molecular weight of about 30,000 Daltons. In still another aspect, the polysiloxane block has a weight average molecular weight of about 31,000 Daltons.

ALKYL SULFONATES

Alkyl sulfonates are commercially important compounds that have been used, for example, in consumer products such as detergents for decades. Accordingly, preparation of alkyl sulfonates is within the ambit of those of skill in the art.

In one aspect, the alkyl sulfonate salt component has a structure represented by a formula:

$$T\text{-}E,$$

where T is aliphatic; E is aliphatic and contains at least one $SO_3\text{-}M^+$ group, where each M is an alkali metal. In a further aspect, the alkyl sulfonate salt component comprises one or more structures represented by a formula:

$$(C_nH_{2n+1})\text{-}(SO_3^-M^+)_p$$

where for each alkyl sulfonate salt present, n is independently an integer from 6 to 17; p is independently an integer from 1 to 5; and each M is independently an alkali or alkaline earth metal. In still another aspect, the alkyl sulfonate salt component comprises one or more structures represented by a formula:

$$(C_nH_{2n+1})\text{-}(SO_3^-Na^+)_{p.}$$

In a still further aspect, the alkyl sulfonate salt component comprises one or more structures represented by a formula:

$$H_3C\text{-}(CH_2)n\text{-}(SO_3^-M^+)_{p.}$$

In a yet further aspect, the alkyl sulfonate salt component comprises one or more structures represented by a formula:

$$H_3C\text{-}(CH_2)_n\text{-}(SO_3^-Na^+)_p$$

In an even further aspect, the alkyl sulfonate salt component comprises one or more structures represented by a formula:

$$(C_nH_{2n+1})\text{-}(SO_3^-M^+).$$

In a still further aspect, the alkyl sulfonate salt component comprises one or more structures represented by a formula:

$$(C_nH_{2n+1})\text{-}(SO_3^-Na^+)\ .$$

In a yet further aspect, the alkyl sulfonate salt component comprises one or more structures represented by a formula:

$$H_3C\text{-}(CH_2)_n\text{-}(SO_3^-M^+)\ .$$

In an even further aspect, the alkyl sulfonate salt component comprises one or more structures represented by a formula:

$$H_3C\text{-}(CH_2)_n\text{-}(SO_3^-Na^+)\ .$$

In one aspect, n is independently an integer from 8 to 17. In still another aspect, n is independently an integer from 8 to 17. In another aspect, n is independently an integer from 9 to 17. In still another aspect, n is independently an integer from 10 to 17. In still another aspect, n is independently an integer from 11 to 17. In still another aspect, n is independently an integer from 12 to 17.

In one aspect, p is 1. In another aspect, M is an alkali metal. In still another aspect, M is $Na^+$. In still another aspect, M is $K^+$. In still another aspect, M is an alkali earth metal. In still another aspect, n, p, and M is the same for each alkyl sulfonate salt present.

In one aspect, the alkyl sulfonate salt component is present in an amount from about 0.2 wt% to about 4.0 wt%. In another aspect, the alkyl sulfonate salt component is present in an amount from about 0.3 wt% to about 4.0 wt%. In still another aspect, the alkyl sulfonate salt component is present in an amount from about 0.4 wt% to about 4.0 wt%. In still another aspect, the alkyl sulfonate salt component is present in an amount from about 0.5 wt% to about 4.0 wt%. In still another aspect, the alkyl sulfonate salt component is present in an amount from about 0.5 wt% to about 3.0 wt%. In still another aspect, the alkyl sulfonate salt component is present in an amount from about 0.5 wt% to about 2.5 wt%. In still another aspect, the alkyl sulfonate salt component is present in an amount from about 0.5 wt% to about 2.0 wt%. In still another aspect, the alkyl sulfonate salt component is present in an amount from about 0.5 wt% to about 1.5 wt%. In still another aspect, the alkyl sulfonate salt component is present in an amount from about 0.5 wt% to about 1.0 wt%.

In various aspects, the alkyl sulfonate salt component has a structure represented by a formula:

T-E,

T is aliphatic and contains at least 7 carbon atoms; E is aliphatic, aromatic, or cycloaliphatic, and E contains at least one $SO_3^-M^+$ group, where each M is an alkali metal. Here, T represents the non-polar tail, and E represents the polar head of the sulfonate salt.

In a further aspect, exemplary structures showing different polar heads for the formula T-E have the formulas:

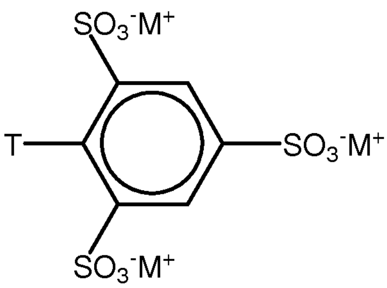
,
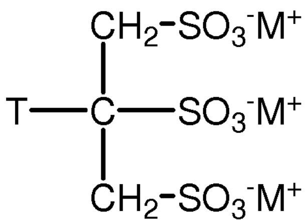
, and
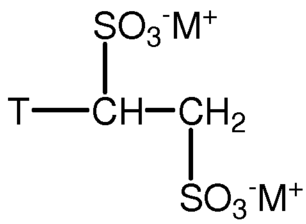
.

In a further aspect, T is alkyl and E is alkyl, cycloalkyl, or aryl. In a still further aspect, the formula T-E does not encompass certain flame retardants such as diphenyl sulfone sulfonate (KSS), sodium toluene sulfonate (NaTS), or perfluoroalkane sulfonate (Rimar salt).

In a further aspect, the sulfonate salt has the structure of represented by the formula:

$$CH_3\text{-}(CH_2)_n\text{-}\ (Ar)_m\text{-}(SO_3^-M^+)_p$$

wherein n is an integer from 6 to 17; m is 0 or 1; Ar is aromatic or cycloaliphatic; p is an integer from 1 to 5; and each M is an alkali metal. Exemplary alkali metals include sodium and potassium. Hydrogen is not considered an alkali metal. Exemplary sulfonate salts include sodium n-nonyl sulfonate (where n=8, m=0, M=Na) and sodium dodecylbenzene

sulfonate (where n=11, m=1, Ar=phenyl, M=Na). These compounds are commercially available from sources such as Croda and Sigma-Aldrich. It should also be noted that the sulfonate salt is generally a blend of different sulfonate compounds that have the same head, but have tails of different lengths. For example, a given amount of sodium n-nonyl sulfonate typically also includes sodium n-octyl sulfonate, sodium n-decyl sulfonate, etc.

IMPACT MODIFIER

In one aspect, the disclosed blended polycarbonate compositions with superior mold release properties of the present invention comprise impact modifiers. In a further aspect, the disclosed blended polycarbonate compositions comprise one or more impact modifiers. In a still further aspect, the disclosed blended polycarbonate compositions comprise at least one impact modifier. In a yet further aspect, the disclosed blended polycarbonate compositions comprise two impact modifiers, that is, a first impact modifier component and a second impact modifier component.

In a further aspect, the impact modifier of the present invention is selected from an acrylonitrile-butadiene-styrene polymer (ABS), a methyl methacrylate-acrylonitrile-butadiene-styrene (MABS) polymer and a methyl methacrylate-butadiene-styrene (MBS) polymer,. In a still further aspect, the impact modifier is an acrylonitrile-butadiene-styrene polymer ("ABS polymer").

Acrylonitrile-butadiene-styrene ("ABS") graft copolymers contain two or more polymeric parts of different compositions, which are bonded chemically. The graft copolymer is specifically prepared by first polymerizing a conjugated diene, such as butadiene or another conjugated diene, with a monomer copolymerizable therewith, such as styrene, to provide a polymeric backbone. After formation of the polymeric backbone, at least one grafting monomer, and specifically two, are polymerized in the presence of the polymer backbone to obtain the graft copolymer. These resins are prepared by methods well known in the art.

For example, ABS can be made by one or more of emulsion or solution polymerization processes, bulk/mass, suspension and/or emulsion -suspension process routes. In addition, ABS materials can be produced by other process techniques such as batch, semi batch and continuous polymerization for reasons of either manufacturing economics or product performance or both. In order to reduce point defects or inclusions in the inner layer of the final multi-layer article, the ABS is produced by bulk polymerized.

Emulsion polymerization of vinyl monomers gives rise to a family of addition polymers. In many instances the vinyl emulsion polymers are copolymers containing both rubbery and rigid polymer units. Mixtures of emulsion resins, especially mixtures of rubber and rigid vinyl emulsion derived polymers are useful in blends.

Such rubber modified thermoplastic resins made by an emulsion polymerization process can comprise a discontinuous rubber phase dispersed in a continuous rigid thermoplastic phase, wherein at least a portion of the rigid thermoplastic phase is chemically grafted to the rubber phase. Such a rubbery emulsion polymerized resin can be further blended with a vinyl polymer made by an emulsion or bulk polymerized process. However, at least a portion of the vinyl polymer, rubber or rigid thermoplastic phase, blended with polycarbonate, will be made by emulsion polymerization.

Suitable rubbers for use in making a vinyl emulsion polymer blend are rubbery polymers having a glass transition temperature (Tg) of less than or equal to 25° C., more preferably less than or equal to 0° C., and even more preferably less than or equal to -30° C. As referred to herein, the Tg of a polymer is the Tg value of polymer as measured by differential scanning calorimetry (heating rate 20° C./minute, with the Tg value being determined at the inflection point). In another embodiment, the rubber comprises a linear polymer having structural units derived from one or more conjugated diene monomers. Suitable conjugated diene monomers include, e.g., 1,3-butadiene, isoprene, 1,3-heptadiene, methyl-1,3-pentadiene, 2,3-dimethylbutadiene, 2-ethyl-1,3-pentadiene, 1,3-hexadiene, 2,4-hexadiene, dichlorobutadiene, bromobutadiene and dibromobutadiene as well as mixtures of conjugated diene monomers. In a preferred embodiment, the conjugated diene monomer is 1,3- butadiene.

The emulsion polymer may, optionally, include structural units derived from one or more copolymerizable monoethylenically unsaturated monomers selected from ($C_2$-$C_{12}$) olefin monomers, vinyl aromatic monomers and monoethylenically unsaturated nitrile monomers and ($C_2$-$C_{12}$) alkyl (meth)acrylate monomers. As used herein, the term "($C_2$-$C_{12}$) olefin monomers" means a compound having from 2 to 12 carbon atoms per molecule and having a single site of ethylenic unsaturation per molecule. Suitable ($C_2$-$C_{12}$) olefin monomers include, e.g., ethylene, propene, 1-butene, 1-pentene, heptene, 2-ethyl-hexylene, 2-ethyl-heptene, 1-octene, and 1-nonene. As used herein, the term "($C_1$-$C_{12}$) alkyl" means a straight or branched alkyl substituent group having from 1 to 12 carbon atoms per group and includes, e.g., methyl, ethyl, n-butyl, sec-butyl, t-butyl, n-propyl, isopropyl, pentyl, hexyl, heptyl, octyl, nonyl, decyl, undecyl and dodecyl, and the terminology "(meth)acrylate monomers" refers collectively to acrylate monomers and methacrylate monomers.

The rubber phase and the rigid thermoplastic phase of the emulsion modified vinyl polymer may, optionally include structural units derived from one or more other copolymerizable monoethylenically unsaturated monomers such as, e.g., monoethylenically unsaturated carboxylic acids such as, e.g., acrylic acid, methacrylic acid, itaconic acid, hydroxy ($C_1$-$C_{12}$) alkyl (meth)acrylate monomers such as, e.g., hydroxyethyl methacrylate; ($C_5$-$C_{12}$) cycloalkyl (meth)acr-

ylate monomers such as e.g., cyclohexyl methacrylate; (meth)acrylamide monomers such as e.g., acrylamide and methacrylamide; maleimide monomers such as, e.g., N-alkyl maleimides, N-aryl maleimides, maleic anhydride, vinyl esters such as, e.g., vinyl acetate and vinyl propionate. As used herein, the term "($C_5$-$C_{12}$) cycloalkyl" means a cyclic alkyl substituent group having from 5 to 12 carbon atoms per group and the term "(meth)acrylamide" refers collectively to acrylamides and methacrylamides.

In some cases the rubber phase of the emulsion polymer is derived from polymerization of a butadiene, $C_4$-$C_{12}$ acrylates or combination thereof with a rigid phase derived from polymerization of styrene, $C_1$-$C_3$ acrylates, methacrylates, acrylonitrile or combinations thereof where at least a portion of the rigid phase is grafted to the rubber phase. In other instances more than half of the rigid phase will be grafted to the rubber phase.

Suitable vinyl aromatic monomers include, e.g., styrene and substituted styrenes having one or more alkyl, alkoxyl, hydroxyl or halo substituent group attached to the aromatic ring, including, e.g., -methyl styrene, p-methyl styrene, vinyl toluene, vinyl xylene, trimethyl styrene, butyl styrene, chlorostyrene, dichlorostyrene, bromostyrene, p-hydroxystyrene, methoxystyrene and vinyl-substituted condensed aromatic ring structures, such as, e.g., vinyl naphthalene, vinyl anthracene, as well as mixtures of vinyl aromatic monomers. As used herein, the term "monoethylenically unsaturated nitrile monomer" means an acyclic compound that includes a single nitrile group and a single site of ethylenic unsaturation per molecule and includes, e.g., acrylonitrile, methacrylonitrile, $\alpha$-chloro acrylonitrile.

In an alternative embodiment, the rubber is a copolymer, preferably a block copolymer, comprising structural units derived from one or more conjugated diene monomers and up to 90 percent by weight ("wt %") structural units derived from one or more monomers selected from vinyl aromatic monomers and monoethylenically unsaturated nitrile monomers, such as, a styrene-butadiene copolymer, an acrylonitrile-butadiene copolymer or a styrene-butadiene-acrylonitrile copolymer. In another embodiment, the rubber is a styrene-butadiene block copolymer that contains from 50 to 95 wt % structural units derived from butadiene and from 5 to 50 wt % structural units derived from styrene.

The emulsion derived polymers can be further blended with non-emulsion polymerized vinyl polymers, such as those made with bulk or mass polymerization techniques. A process to prepare mixtures containing polycarbonate, an emulsion derived vinyl polymer, along with a bulk polymerized vinyl polymers, is also contemplated.

The rubber phase can be made by aqueous emulsion polymerization in the presence of a radical initiator, a surfactant and, optionally, a chain transfer agent and coagulated to form particles of rubber phase material. Suitable initiators include conventional free radical initiator such as, e.g., an organic peroxide compound, such as e.g., benzoyl peroxide, a persulfate compound, such as, e.g., potassium persulfate, an azonitrile compound such as, e.g., 2,2'-azobis-2,3,3-trimethylbutyronitrile, or a redox initiator system, such as, e.g., a combination of cumene hydroperoxide, ferrous sulfate, tetrasodium pyrophosphate and a reducing sugar or sodium formaldehyde sulfoxylate. Suitable chain transfer agents include, for example, a ($C_9$-$C_{13}$) alkyl mercaptan compound such as nonyl mercaptan, t-dodecyl mercaptan. Suitable emulsion aids include, linear or branched carboxylic acid salts, with about 10 to 30 carbon atoms. Suitable salts include ammonium carboxylates and alkaline carboxylates; such as ammonium stearate, methyl ammonium behenate, triethyl ammonium stearate, sodium stearate, sodium isostearate, potassium stearate, sodium salts of tallow fatty acids, sodium oleate, sodium palmitate, potassium linoleate, sodium laurate, potassium abieate (rosin acid salt), sodium abietate and combinations thereof. Often mixtures of fatty acid salts derived from natural sources such as seed oils or animal fat (such as tallow fatty acids) are used as emulsifiers.

In one aspect, the emulsion polymerized particles of rubber phase material have a weight average particle size of 50 to 800 nanometers ("nm"), more preferably, of from 100 to 500 nm, as measured by light transmission. The size of emulsion polymerized rubber particles can optionally be increased by mechanical, colloidal or chemical agglomeration of the emulsion polymerized particles, according to known techniques.

The rigid thermoplastic phase comprises one or more vinyl derived thermoplastic polymers and exhibits a Tg of greater than 25 °C., preferably greater than or equal to 90 °C. and even more preferably greater than or equal to 100 °C.

In various aspects, the rigid thermoplastic phase comprises a vinyl aromatic polymer having first structural units derived from one or more vinyl aromatic monomers, preferably styrene, and having second structural units derived from one or more monoethylenically unsaturated nitrile monomers, preferably acrylonitrile. In other cases, the rigid phase comprises from 55 to 99 wt %, still more preferably 60 to 90 wt %, structural units derived from styrene and from 1 to 45 wt %, still more preferably 10 to 40 wt %, structural units derived from acrylonitrile.

The amount of grafting that takes place between the rigid thermoplastic phase and the rubber phase can vary with the relative amount and composition of the rubber phase. In one embodiment, from 10 to 90 wt %, often from 25 to 60 wt %, of the rigid thermoplastic phase is chemically grafted to the rubber phase and from 10 to 90 wt %, preferably from 40 to 75 wt % of the rigid thermoplastic phase remains "free", i.e., non-grafted.

The rigid thermoplastic phase of the rubber modified thermoplastic resin can be formed solely by emulsion polymerization carried out in the presence of the rubber phase or by addition of one or more separately polymerized rigid thermoplastic polymers to a rigid thermoplastic polymer that has been polymerized in the presence of the rubber phase. In one embodiment, the weight average molecular weight of the one or more separately polymerized rigid thermoplastic polymers is from about 50,000 to about 100,000 g/mol.

In other cases, the rubber modified thermoplastic resin comprises a rubber phase having a polymer with structural units derived from one or more conjugated diene monomers, and, optionally, further comprising structural units derived from one or more monomers selected from vinyl aromatic monomers and monoethylenically unsaturated nitrile monomers, and the rigid thermoplastic phase comprises a polymer having structural units derived from one or more monomers selected from vinyl aromatic monomers and monoethylenically unsaturated nitrile monomers. In one embodiment, the rubber phase of the rubber modified thermoplastic resin comprises a polybutadiene or poly(styrene-butadiene) rubber and the rigid thermoplastic phase comprises a styrene-acrylonitrile copolymer. Vinyl polymers free of alkyl carbon-halogen linkages, specifically bromine and chlorine carbon bond linkages can provide melt stability.

In some instances it is desirable to isolate the emulsion vinyl polymer or copolymer by coagulation in acid. In such instances the emulsion polymer can be contaminated by residual acid, or species derived from the action of such acid, for example carboxylic acids derived from fatty acid soaps used to form the emulsion. The acid used for coagulation can be a mineral acid; such as sulfuric acid, hydrochloric acid, nitric acid, phosphoric acid or mixtures thereof. In some cases the acid used for coagulation has a pH less than about 5.

Exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylenepropylene-diene-styrene (AES), styrene-isoprene-styrene (SIS), methyl methacrylate-butadiene-styrene (MBS), methacrylate-butadiene (MB) and styrene-acrylonitrile (SAN).

In a further aspect, the impact modifier component comprises one more of an acrylonitrile butadiene styrene ("ABS") copolymer, a methacrylate butadiene styrene ("MBS") copolymer, and a bulk polymerized ABS ("BABS") copolymer. In a still further aspect, the impact modifier component comprises an acrylonitrile butadiene styrene ("ABS") copolymer. In a yet further aspect, the impact modifier component comprises a methacrylate butadiene styrene ("MBS") copolymer. In an even further aspect, the impact modifier component comprises a bulk polymerized ABS ("BABS") copolymer.

In a further aspect, the impact modifier component is present in an amount from about 2 wt% to about 10 wt%. In a still further aspect, the impact modifier component is present in an amount from about 4 wt% to about 8 wt%. In a yet further aspect, the impact modifier component is present in an amount from about 4 wt% to about 6 wt%. In an even further aspect, the impact modifier component is present in an amount from about 2 wt% to about 9 wt%. In a still further aspect, the impact modifier component is present in an amount from about 1 wt% to about 6 wt%. In a yet further aspect, the impact modifier component is present in an amount from about 2 wt% to about 5 wt%. In an even further aspect, the impact modifier component is present in an amount from about 2 wt% to about 4 wt%.

In one aspect, the impact modifier component comprises a methacrylate-butadiene-styrene (MBS) polymer composition. In another aspect, the MBS polymer composition is present in an amount from about 2 wt% to about 10 wt%. In still another aspect, the MBS polymer composition is present in an amount from about 2 wt% to about 9 wt%. In still another aspect, the MBS polymer composition is present in an amount from about 2 wt% to about 8 wt%.

In one aspect, the MBS polymer composition is present in an amount from about 2 wt% to about 10 wt%. In another aspect, the MBS polymer composition is present in an amount from about 2 wt% to about 8 wt%. In still another aspect, the MBS polymer composition is present in an amount from about 2 wt% to about 6 wt%. In still another aspect, the MBS polymer composition is present in an amount from about 2 wt% to about 5 wt%. In still another aspect, the MBS polymer composition is present in an amount from about 2 wt% to about 4 wt%.

In one aspect, the MBS polymer composition comprises butadiene content from about 50 wt% to about 80 wt%. In another aspect, the MBS polymer composition comprises butadiene content from about 60 wt% to about 80 wt%. In still another aspect, the MBS polymer composition comprises butadiene content from about 70 wt% to about 80 wt%. In still another aspect, the MBS polymer composition comprises butadiene content from about 70 wt% to about 74 wt%. In still another aspect, the MBS polymer composition comprises butadiene content from about 70 wt% to about 75 wt%.

In one aspect, the MBS polymer composition has a bulk density from about 0.25 grams per cubic centimeter ($g/cm^3$) to about 0.55 $g/cm^3$. In another aspect, the MBS polymer composition has a bulk density from about 0.30 $g/cm^3$ to about 0.50 $g/cm^3$. In still another aspect, the MBS polymer composition has a bulk density from about 0.35 $g/cm^3$ to about 0.49 $g/cm^3$. In still another aspect, the MBS polymer composition has a bulk density from about 0.35 $g/cm^3$ to about 0.50 $g/cm^3$.

In one aspect, the MBS polymer composition has a maximum mean particle diameter of about 250 micometers ($\mu m$). In another aspect, the MBS polymer composition has a maximum mean particle diameter of about 260 $\mu m$. In still another aspect, the MBS polymer composition has a maximum mean particle diameter of about 270 $\mu m$. In still another aspect, the MBS polymer composition has a maximum mean particle diameter of about 280 $\mu m$. In still another aspect, the MBS polymer composition has a maximum mean particle diameter of about 290 $\mu m$. In still another aspect, the MBS polymer composition has a maximum mean particle diameter of about 300 $\mu m$.

In one aspect, the MBS polymer composition has a maximum mean particle diameter from about 200 $\mu m$ to about 300 $\mu m$. In another aspect, the MBS polymer composition has a maximum mean particle diameter from about 210 $\mu m$ to about 290 $\mu m$. In still another aspect, the MBS polymer composition has a maximum mean particle diameter

from about 220 μm to about 280 μm. In still another aspect, the MBS has a maximum mean particle diameter from about 230 μm to about 270 μm.

In one aspect, the impact modifier comprises an acrylonitrile-butadiene-styrene (ABS) polymer composition. In another aspect, the ABS polymer composition is an emulsion polymerized ABS. In still another aspect, the ABS polymer composition is a bulk-polymerized ABS. In still another aspect, the ABS polymer composition is a SAN-grafted emulsion ABS.

In one aspect, ABS polymer composition comprises butadiene content from about 20 wt% to about 75 wt%. In still another aspect, ABS polymer composition comprises butadiene content from about 30 wt% to about 65 wt%. In still another aspect, ABS polymer composition comprises butadiene content from about 40 wt% to about 55 wt%. In still another aspect, ABS polymer composition comprises butadiene content from about 10 wt% to about 25 wt%. In still another aspect, ABS polymer composition comprises acrylonitrile content from about 5 wt% to about 25 wt%. In still another aspect, ABS polymer composition comprises acrylonitrile content from about 7 wt% to about 17 wt%.

TALC AND SURFACE-TREATED TALC

In various aspects, the blended polycarbonate compositions of the present invention comprise a filler. In a further aspect, the filler is a mineral filler. Mineral fillers are used in engineering a variety of thermoplastics to provide high performance properties, including improved impact properties while maintaining good ductility together with good flow. A variety of mineral fillers can be used in the disclosed blended polycarbonate compositions, including silicates such as mica, talc, clay, asbestos, feldspar, betonite, wollastonite, pyrophillite, and the like. In a farther aspect, the mineral filler has a median particle size (i.e. $D_{50}$) of 15 microns or less, including a median particle size of 10 microns or less. In a still further aspect, the mineral filler is talc with a median particle size of from about 1 micron to about 5 microns, In an even further aspect, the mineral filler can have a topsize ($D_{90}$) of 15 microns or less, including 10 microns or less.

In various aspects, the blended polycarbonate compositions of the present invention comprise a mineral filler component present in an amount from about 5 wt% to about 30 wt%. In a further aspect, the mineral filler component is present in an amount from about 5 wt% to about 28 wt%. In a still further aspect, the mineral filler component is present in an amount from about 5 wt% to about 26 wt%. In a yet further aspect, the mineral filler component is present in an amount from about 5 wt% to about 26 wt%. In an even further aspect, the mineral filler component is present in an amount from about 5 wt% to about 24 wt%. In a still further aspect, the mineral filler component is present in an amount from about 5 wt% to about 22 wt%. In a yet further aspect, the mineral filler component is present in an amount from about 5 wt% to about 20 wt%. In an even further aspect, the mineral filler component is present in an amount from about 5 wt% to about 18 wt%. In a still further aspect, the mineral filler component is present in an amount from about 5 wt% to about 16 wt%. In an even further aspect, the mineral filler component is present in an amount from about 5 wt% to about 14 wt%. In a still further aspect, the mineral filler component is present in an amount from about 5 wt% to about 128 wt%. In a further aspect, the mineral filler component is present in an amount from about 5 wt% to about 10 wt%.

In a further aspect, the mineral filler component is present in an amount from about 10 wt% to about 28 wt%. In a still further aspect, the mineral filler component is present in an amount from about 10 wt% to about 26 wt%. In a yet further aspect, the mineral filler component is present in an amount from about 10 wt% to about 26 wt%. In an even further aspect, the mineral filler component is present in an amount from about 10 wt% to about 24 wt%. In a still further aspect, the mineral filler component is present in an amount from about 10 wt% to about 22 wt%. In a yet further aspect, the mineral filler component is present in an amount from about 10 wt% to about 20 wt%. In an even further aspect, the mineral filler component is present in an amount from about 10 wt% to about 18 wt%. In a still further aspect, the mineral filler component is present in an amount from about 10 wt% to about 16 wt%. In an even further aspect, the mineral filler component is present in an amount from about 10 wt% to about 14 wt%.

In a further aspect, the mineral filler component is present in an amount from about 12 wt% to about 28 wt%. In a still further aspect, the mineral filler component is present in an amount from about 12 wt% to about 26 wt%. In a yet further aspect, the mineral filler component is present in an amount from about 12 wt% to about 26 wt%. In an even further aspect, the mineral filler component is present in an amount from about 12 wt% to about 24 wt%. In a still further aspect, the mineral filler component is present in an amount from about 12 wt% to about 22 wt%. In a yet further aspect, the mineral filler component is present in an amount from about 12 wt% to about 20 wt%. In an even further aspect, the mineral filler component is present in an amount from about 12 wt% to about 18 wt%. In a still further aspect, the mineral filler component is present in an amount from about 12 wt% to about 16 wt%. In an even further aspect, the mineral filler component is present in an amount from about 12 wt% to about 14 wt%.

In a further aspect, the mineral filler component is present in an amount from about 15 wt% to about 28 wt%. In a still further aspect, the mineral filler component is present in an amount from about 15 wt% to about 26 wt%. In a yet further aspect, the mineral filler component is present in an amount from about 15 wt% to about 26 wt%. In an even further aspect, the mineral filler component is present in an amount from about 15 wt% to about 24 wt%. In a still further

aspect, the mineral filler component is present in an amount from about 15 wt% to about 22 wt%. In a yet further aspect, the mineral filler component is present in an amount from about 15 wt% to about 20 wt%. In an even further aspect, the mineral filler component is present in an amount from about 15 wt% to about 18 wt%.

In various aspects, the blended polycarbonate compositions of the present invention comprise a talc component present in an amount from about 5 wt% to about 30 wt%. In a further aspect, the talc component is present in an amount from about 5 wt% to about 28 wt%. In a still further aspect, the talc component is present in an amount from about 5 wt% to about 26 wt%. In a yet further aspect, the talc component is present in an amount from about 5 wt% to about 26 wt%. In an even further aspect, the talc component is present in an amount from about 5 wt% to about 24 wt%. In a still further aspect, the talc component is present in an amount from about 5 wt% to about 22 wt%. In a yet further aspect, the talc component is present in an amount from about 5 wt% to about 20 wt%. In an even further aspect, the talc component is present in an amount from about 5 wt% to about 18 wt%. In a still further aspect, the talc component is present in an amount from about 5 wt% to about 16 wt%. In an even further aspect, the talc component is present in an amount from about 5 wt% to about 14 wt%. In a still further aspect, the talc component is present in an amount from about 5 wt% to about 128 wt%. In a further aspect, the talc component is present in an amount from about 5 wt% to about 10 wt%.

In a further aspect, the talc component is present in an amount from about 10 wt% to about 28 wt%. In a still further aspect, the talc component is present in an amount from about 10 wt% to about 26 wt%. In a yet further aspect, the talc component is present in an amount from about 10 wt% to about 26 wt%. In an even further aspect, the talc component is present in an amount from about 10 wt% to about 24 wt%. In a still further aspect, the talc component is present in an amount from about 10 wt% to about 22 wt%. In a yet further aspect, the talc component is present in an amount from about 10 wt% to about 20 wt%. In an even further aspect, the talc component is present in an amount from about 10 wt% to about 18 wt%. In a still further aspect, the talc component is present in an amount from about 10 wt% to about 16 wt%. In an even further aspect, the talc component is present in an amount from about 10 wt% to about 14 wt%.

In a further aspect, the talc component is present in an amount from about 12 wt% to about 28 wt%. In a still further aspect, the talc component is present in an amount from about 12 wt% to about 26 wt%. In a yet further aspect, the talc component is present in an amount from about 12 wt% to about 26 wt%. In an even further aspect, the talc component is present in an amount from about 12 wt% to about 24 wt%. In a still further aspect, the talc component is present in an amount from about 12 wt% to about 22 wt%. In a yet further aspect, the talc component is present in an amount from about 12 wt% to about 20 wt%. In an even further aspect, the talc component is present in an amount from about 12 wt% to about 18 wt%. In a still further aspect, the talc component is present in an amount from about 12 wt% to about 16 wt%. In an even further aspect, the talc component is present in an amount from about 12 wt% to about 14 wt%.

In a further aspect, the talc component is present in an amount from about 15 wt% to about 28 wt%. In a still further aspect, the talc component is present in an amount from about 15 wt% to about 26 wt%. In a yet further aspect, the talc component is present in an amount from about 15 wt% to about 26 wt%. In an even further aspect, the talc component is present in an amount from about 15 wt% to about 24 wt%. In a still further aspect, the talc component is present in an amount from about 15 wt% to about 22 wt%. In a yet further aspect, the talc component is present in an amount from about 15 wt% to about 20 wt%. In an even further aspect, the talc component is present in an amount from about 15 wt% to about 18 wt%.

Talc is a hydrated magnesium silicate of the general chemical formula $Mg_8(OH)_4Si_8O_{20}$ or $3MgO•SiO_2•H_2O$. Depending upon the deposit and processing used, other minerals can be present, e.g. chlorite, dolomite, and magnesite. Synthetic talcs have also been described and are known to one skilled in the art. In the present invention, the blend polycarbonate compositions can optionally comprise a talc subjected to surface treatment by the use of a surface treatment agent. In various aspects, the disclosed blended polycarbonate compositions with improved impact properties of the present invention comprise a chemically treated talc filler.

Various aspects of particle size and distribution are important in obtaining optimal performance, e.g. increased impact strength. In a further aspect, the talc filler is micronized. In a still further aspect, the talc filler has a mean particle size of about 0.2 to about 20 μm. In a yet further aspect, the talc filler has a mean particle size of about 0.2 to about 5 μm. In an even further aspect, the talc filler has a mean particle size of about 0.2 to about 3 μm. In a still further aspect, the talc filler has a mean particle size of about 0.2 to about 2 μm. In a yet further aspect, the talc filler has a mean particle size of less than about 2 μm. In an even further aspect, the talc filler has a mean particle size of less than about 1 μm. In a still further aspect, the talc filler has a mean particle size of about 2.0 μm. In a yet further aspect, the talc filler has a mean particle size of about 1.8 μm. In an even further aspect, the talc filler has a mean particle size of about 1.1 μm. In a still further aspect, the talc filler has a mean particle size of about 0.9 μm. In a yet further aspect, the talc filler has a mean particle size of about 0.8 μm.

In a further aspect, the talc filer is Jetfine 3CC (Imerys Talc, Inc.). In a yet further aspect, the talc filer is Jetfine 3CA (Imerys Talc, Inc.). In a still further aspect, the talc filer is Flex Talc 610 (KISH Talc).

Median diameter $D_{50}$" is understood to mean a diameter such that 50% of the particles by weight have a size less than the said diameter; "Median diameter $D_{95}$" is understood to mean a diameter such that 95% of the particles by

weight have a size less than the said diameter; and "Median diameter $D_{98}$" is understood to mean a diameter such that 98% of the particles by weight have a size less than the said diameter. For non-spherical particles, the size consists of the equivalent spherical diameter (Stocks diameter). All measurements of the diameters $D_{50}$, $D_{95}$, and $D_{98}$ can be carried out by means of a "Sedigraph" apparatus (trade name) by gravity sedimentation in accordance with standard AFNOR X11-683. "Specific surface area (BET)" is understood to mean the area of the surface of the particles of the powder with respect to unit mass, and can be determined according to the BET method by the quantity of argon adsorbed on the surface of the said particles so as to form a monomolecular layer completely covering the said surface (measurement according to the BET method, AFNOR standard X 11-621 and 622).

In various further aspects, the talc filler has a particle distribution $D_{50}$ of less than 10 μm, less than 5 μm, less than 4 μm, less than 3 μm, less than 2 μm, less than 1.8 μm, less than 1.7 μm, less than 1.6 μm, less than 1.5 μm, less than 1.4 μm, less than 1.3 μm, less than 1.2 μm, less than 1.1 μm, less than 1.0 μm, less than 0.9 μm, and less than 0.8 μm. In a still further aspect, the talc filler has a medium diameter $D_{50}$ of the particles substantially between 1 and 3.5 μm. In a yet further aspect, the talc filler has a medium diameter $D_{50}$ of the particles substantially between 0.5 and 2.5 μm.

In a further aspect, the talc filler has a specific surface area substantially between 15 and 40 square meters per gram ($m^2/g$). In a still further aspect, the talc filler has a specific surface area substantially between 15 and 30 $m^2/g$. In a yet further aspect, the talc filler has a specific surface area substantially between 15 and 25 $m^2/g$. In an even further aspect, the talc filler has a specific surface area substantially between 15 and 20 $m^2/g$. In a still further aspect, the talc filler has a specific surface area substantially between 25 and 40 $m^2/g$.

In a further aspect, the talc filler has a medium diameter $D_{50}$ of the particles substantially between 1 and 3.5 μm and a specific surface area substantially between 15 and 40 $m^2/g$. In a yet further aspect, the talc filler has a median particle size diameter $D_{50}$ substantially between 0.5 and 2.5 μm, a median diameter $D_{95}$ of less than 8 μm, a median diameter $D_{98}$ of less than 15 μm and a specific surface area (BET) substantially between 15 and 25 $m^2/g$.

In various aspects, the chemically treated talc can be prepared by treating a talc filler in such a way as to confer one or more predetermined surface properties upon them. The treatment process uses the hydrophilic surface sites on the talc filler (particularly silanol groups) and consists of fixing upon these sites molecules which have both a group providing attachment to the said sites and one or more groups conferring the desired property or properties. Molecules of the following families can be attached to the hydrophilic surface sites: epoxides, isocyanates, organic acids, acrylic acids, alcohols, acyl chlorides, anhydrides, organosilanes including at least one hydrolysable group (alkoxysilanes, chlorosilanes, etc.), in order to confer surface reactivity towards a specific organic matrix upon the substance. The chemical groups characteristic of these families have the property of reacting with the silanol group, thus creating a strong bond with the particle.

In a further aspect, the talc filler has been treated with a composition comprising at least one silane compound. In a yet further aspect, the talc filler has been treated with a composition comprising at least one organosilane compound. In an even further aspect, the talc filler is treated with a surface treatment agent comprising an organosilanes with at least one hydrolysable group. In a still further aspect, the organosilane is selected from an alkoxysilane and a halosilane. In a yet further aspect, the halosilane is a chlorosilane.

In a further aspect, the talc filler has been treated with a composition comprising at least one silane compound selected from chlorosilane, tridecafluoro-1,1,2,2-tetrahydrooctyl-1-dimethylsilane, monomethylsilanetriol dihydroxyprolenate, and monomethylsilanetriol ascorbate. In a still further aspect, the talc filler has been treated with a composition comprising at least one silane compound selected from 3-chloropropyltrimethoxysilane, 1-trimethoxysilyl-2-(p-, m-chloromethyl)phenylethane, 1,3-divinyltetramethyldisilazane, vinyltriethoxysilane, and vinyltrimethoxysilane.

In a further aspect, the talc filler has been treated with a composition comprising at a compound of the formula:

$$R'-(CH_2)_n-Si(OR)_3,$$

wherein R' is a radical selected from alkyl, aryl, vinyl, amino, mercapto, acetoxy, epoxy, and methacryloxy; R is a C1-C4 radical; and n is integer from 3 to 6.

In a further aspect, the talc filler has been treated with a composition comprising at a compound of the formula:

$$R^1_mSiR^2_{(4-m)},$$

wherein $R^1$ is a non-hydrolyzable organic radical; $R^2$ is a hydrolysable group; and m is an integer from 1 to 3. In a yet further aspect, $R^1$ is selected from methyl, vinyl, phenyl, methacryloxypropyl, n-octyl, glycidoxypropyl, and octadecyl. In a still further aspect, $R^2$ is selected from alkoxy, acyloxy, amino, haloalkyl or halo. In a yet further aspect, $R^2$ is selected from chloro, methoxy, and ethoxy. In a yet further aspect, $R^2$ is chloro. In an even further aspect, $R^2$ is methoxy. In a still further aspect, $R^2$ is ethoxy. In an even further aspect, m is 1.

In a further aspect, the talc filler has been treated with a silane-based composition comprising the silane-based

composition used to prepare Luzenac R7 talc.

In a further aspect, the talc filler is chemically treated Imerys Jetfine 3CC. In a yet further aspect, the Imerys Jetfine 3CC has been treated with a composition comprising at least one compound used to prepare Imerys surface-treated Luzenac R7. In an even further aspect, the Imerys Jetfine 3CC has been treated with a silane-based composition comprising the silane-based composition used to prepare Luzenac R7 talc. In a still further aspect, the Imerys Jetfine 3CC has been treated with a composition comprising at least one silane compound. In an even further aspect, the Imerys Jetfine 3CC has been treated with a composition comprising at least one surface active agent. In a still further aspect, the Imerys Jetfine 3CC has been treated with a composition comprising at least one silane compound selected from a halosilane and an alkoxysilane. In a yet further aspect, the Imerys Jetfine 3CC has been treated with a composition comprising at least one silane compound selected from chlorosilane, tridecafluoro-1,1,2,2-tetrahydrooctyl-1-dimethylsilane, monomethylsilanetriol dihydroxyprolenate, and mono-methylsilanetriol ascorbate.

In a further aspect, the Imerys Jetfine 3CC has been treated with a composition comprising at a compound of the formula:

$$R'-(CH_2)_n-Si(OR)_3,$$

wherein R' is a radical selected from alkyl, aryl, vinyl, amino, mercapto, acetoxy, epoxy, and methacryloxy; R is a C1-C4 radical; and n is integer from 3 to 6.

In a further aspect, the Imerys Jetfine 3CC has been treated with a composition comprising at a compound of the formula:

$$R^1{}_mSiR^2{}_{(4-m)},$$

wherein $R^1$ is a non-hydrolyzable organic radical; $R^2$ is a hydrolysable group; and m is an integer from 1 to 3. In a yet further aspect, $R^1$ is selected from methyl, vinyl, phenyl, methacryloxypropyl, n-octyl, glycidoxypropyl, and octadecyl. In a still further aspect, $R^2$ is selected from alkoxy, acyloxy, amino, haloalkyl or halo. In a yet further aspect, $R^2$ is selected from chloro, methoxy, and ethoxy. In a yet further aspect, $R^2$ is chloro. In an even further aspect, $R^2$ is methoxy. In a still further aspect, $R^2$ is ethoxy. In an even further aspect, m is 1.

In a further aspect, the talc filler is chemically treated Imerys Jetfine 3CA. In a yet further aspect, the Imerys Jetfine 3CA has been treated with a composition comprising at least one compound used to prepare Imerys surface-treated Luzenac R7. In an even further aspect, the Imerys Jetfine 3CA has been treated with a silane-based composition comprising the silane-based composition used to prepare Luzenac R7 talc. In a still further aspect, the Imerys Jetfine 3CA has been treated with a composition comprising at least one silane compound. In an even further aspect, the Imerys Jetfine 3CA has been treated with a composition comprising at least one surface active agent. In a still further aspect, the Imerys Jetfine 3CA has been treated with a composition comprising at least one silane compound selected from a halosilane and an alkoxysilane. In a yet further aspect, the Imerys Jetfine 3CA has been treated with a composition comprising at least one silane compound selected from chlorosilane, tridecafluoro-1,1,2,2-tetrahydrooctyl-1-dimethylsilane, monomethylsilanetriol dihydroxyprolenate, and mono-methylsilanetriol ascorbate.

In a further aspect, the Imerys Jetfine 3CA has been treated with a composition comprising at a compound of the formula:

$$R'-(CH_2)_n-Si(OR)_3,$$

wherein R' is a radical selected from alkyl, aryl, vinyl, amino, mercapto, acetoxy, epoxy, and methacryloxy; R is a C1-C4 radical; and n is integer from 3 to 6.

In a further aspect, the Imerys Jetfine 3CA has been treated with a composition comprising at a compound of the formula:

$$R^1{}_mSiR^2{}_{(4-m)},$$

wherein $R^1$ is a non-hydrolyzable organic radical; $R^2$ is a hydrolysable group; and m is an integer from 1 to 3. In a yet further aspect, $R^1$ is selected from methyl, vinyl, phenyl, methacryloxypropyl, n-octyl, glycidoxypropyl, and octadecyl. In a still further aspect, $R^2$ is selected from alkoxy, acyloxy, amino, haloalkyl or halo. In a yet further aspect, $R^2$ is selected from chloro, methoxy, and ethoxy. In a yet further aspect, $R^2$ is chloro. In an even further aspect, $R^2$ is methoxy. In a still further aspect, $R^2$ is ethoxy. In an even further aspect, m is 1.

In various aspects, blended polycarbonate compositions optionally comprise a surface-treated talc wherein the surface-treated talc is Luzenac R7.

OTHER ADDITIVES FOR BLENDED POLYCARBONATE COMPOSITIONS

In addition to the foregoing components, the disclosed polycarbonate compositions can optionally comprise a balance amount of one or more additive materials ordinarily incorporated in polycarbonate resin compositions of this type, with the proviso that the additives are selected so as to not significantly adversely affect the desired properties of the polycarbonate composition. Combinations of additives can be used. Such additives can be mixed at a suitable time during the mixing of the components for forming the composition. Exemplary and non-limiting examples of additive materials that can be present in the disclosed polycarbonate compositions include an antioxidant, a stabilizer (including for example a thermal stabilizer, a hydrolytic stabilizer, or a light stabilizer), UV absorbing additive, plasticizer, lubricant, mold release agent, acid scavenger, antistatic agent, colorant (e.g., pigment and/or dye), or any combination thereof.

In one aspect, the acid scavenger is selected from phosphorous acid, phosphoric acid, mono zinc phosphate, mono sodium phosphate, or sodium acid pyrophosphate.

In a further aspect, the disclosed polycarbonate blend compositions can further comprise a primary antioxidant or "stabilizer" (e.g., a hindered phenol) and, optionally, a secondary antioxidant (e.g., a phosphate and/or thioester). Suitable antioxidant additives include, for example, organic phosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidenebisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants.

Antioxidants are generally used in amounts of about 0.01 wt% to about 1 wt%, optionally about 0.05 wt% to about 0.5 wt% of the polycarbonate blend composition. In one aspect, the primary antioxidant is present in an amount from about 0.1 wt% to about 1 wt%. In another aspect, the primary antioxidant is present in an amount from about 0.1 wt% to about 0.9 wt%. In still another aspect, the primary antioxidant is present in an amount from about 0.1 wt% to about 0.7 wt%. In still another aspect, the primary antioxidant is present in an amount from about 0.1 wt% to about 0.5 wt%. In still another aspect, the primary antioxidant is present in an amount from about 0.2 wt% to about 0.5 wt%. In still another aspect, the primary antioxidant is present in an amount from about 0.2 wt% to about 0.4 wt%.

In one aspect, the secondary antioxidant is present in an amount from about 0.01 wt% to about 1 wt%. In another aspect, the secondary antioxidant is present in an amount from about 0.05 wt% to about 0.8 wt%. In still another aspect, the secondary antioxidant is present in an amount from about 0.05 wt% to about 0.6 wt%. In still another aspect, wherein the secondary antioxidant is present in an amount from about 0.05 wt% to about 0.4 wt%. In still another aspect, the secondary antioxidant is present in an amount from about 0.05 wt% to about 0.2 wt%.

In various aspects, the disclosed polycarbonate blend composition further comprises a hydrolytic stabilizer, wherein the hydrolytic stabilizer comprises a hydrotalcite and an inorganic buffer salt. In a further aspect, the disclosed polycarbonate blend composition comprises a hydrolytic stabilizer, wherein the hydrolytic stabilizer comprises one or more hydrotalcites and an inorganic buffer salt comprising one or more inorganic salts capable of pH buffering. Either synthetic hydrotalcites or natural hydrotalcites can be used as the hydrotalcite compound in the present invention. Exemplary hydrotalcites that are useful in the compositions of the present are commercially available and include, but are not limited to, magnesium hydrotalcites such as DHT-4C (available from Kyowa Chemical Co.); Hysafe 539 and Hysafe 530 (available from J.M. Huber Corporation).

In a further aspect, suitable thermal stabilizer additives include, for example, organic phosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, organic phosphates such as trimethyl phosphate, thioesters such as pentaerythritol betalaurylthiopropionate, and the like, or combinations comprising at least one of the foregoing thermal stabilizers.

Thermal stabilizers are generally used in amounts of about 0.01wt% to about 5 wt%, optionally about 0.05 wt% to about 0.3 wt% of the polycarbonate blend composition. In one aspect, the thermal stabilizer is present in an amount from about 0.05 wt% to about 1.0 wt%. In another aspect, the thermal stabilizer is present in an amount from about 0.1 wt% to about 1.0 wt%. In still another aspect, the thermal stabilizer is present in an amount from about 0.1 wt% to about 0.9 wt%. In still another aspect, the thermal stabilizer is present in an amount from about 0.05 wt% to about 1.0 wt%. In still another aspect, the thermal stabilizer is present in an amount from about 0.1 wt% to about 0.8 wt%. In still another aspect, the thermal stabilizer is present in an amount from about 0.1 wt% to about 0.7 wt%. In still another aspect, the thermal stabilizer is present in an amount from about 0.1 wt% to about 0.6 wt%. In still another aspect, the thermal

stabilizer is present in an amount from about 0.1 wt% to about 0.5 wt%. In still another aspect, the thermal stabilizer is present in an amount from about 0.1 wt% to about 0.4 wt%. In still another aspect, the thermal stabilizer is present in an amount from about 0.05 wt% to about 1.0 wt%.

In a further aspect, light stabilizers and/or ultraviolet light (UV) absorbing additives can also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and benzophenones such as 2-hydroxy-4-n-octoxy benzophenone, or the like, or combinations comprising at least one of the foregoing light stabilizers. Light stabilizers are generally used in amounts of about 0.01 wt% to about 10 wt%, optionally about 0.1 wt% to about 1 wt% of the polycarbonate blend composition.

In a further aspect, suitable UV absorbing additives include for example, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]-5-(octyloxy)-phenol (CYASORB™ 1164); 2,2'-(1,4-phenylene)bis(4H-3,1-benzoxazin-4-one) (CYASORB™ UV-3638); 1,3-bis[(2-cyano-3,3-diphenylacryloyl)oxy]-2,2-bis[[(2-cyano-3,3-diphenyl- acryloyl)oxy]methyl]propane (UVINUL™ 3030); 2,2'-(1,4-phenylene)bis(4H-3,1-benzoxazin-4-one); 1,3-bis[(2-cyano-3,3-diphenylacryloyl)oxy]-2,2-bis[[(2-cyano-3,3-diphenyl- acryloyl)oxy]methyl]propane; nano-size inorganic materials such as titanium oxide, cerium oxide, and zinc oxide, all with particle size less than about 100 nanometers; or the like, or combinations comprising at least one of the foregoing UV absorbers. UV absorbers are generally used in amounts of about 0.1 wt% to about 5 wt% of the polycarbonate blend composition.

In various aspects, plasticizers, lubricants, and/or mold release agents additives can also be used. There is a considerable overlap among these types of materials, which include, for example, di- or polyfunctional aromatic phosphates such as resorcinol tetraphenyl diphosphate (RDP), the bis(diphenyl)phosphate of hydroquinone and the bis(diphenyl)phosphate of bisphenol-A; poly-alpha-olefins; epoxidized soybean oil; silicones, including silicone oils; esters, for example, fatty acid esters such as medium and high molecular weight alkyl stearyl esters; mixtures of fatty acid esters and hydrophilic and hydrophobic nonionic surfactants comprising polyethylene glycol polymers, polypropylene glycol polymers, and copolymers thereof; waxes such as beeswax, montan wax, paraffin wax or the like.

Such materials are generally used in amounts of about 0.1 wt% to about 20 wt%, optionally about 1 wt% to about 10 wt% the polycarbonate blend composition. In one aspect, the mold release agent is methyl stearate; stearyl stearate or pentaerythritol tetrastearate. In another aspect, the mold release agent is pentaerythritol tetrastearate.

In one aspect, the mold release agent is present in an amount from about 0.1 wt% to about 1.0 wt%. In another aspect, the mold release agent is present in an amount from about 0.1 wt% to about 0.9 wt%. In still another aspect, the mold release agent is present in an amount from about 0.1 wt% to about 0.8 wt%. In still another aspect, the mold release agent is present in an amount from about 0.1 wt% to about 0.7 wt%. In still another aspect, the mold release agent is present in an amount from about 0.1 wt% to about 0.6 wt%. In still another aspect, the mold release agent is present in an amount from about 0.1 wt% to about 0.5 wt%.

In a further aspect, colorants such as pigment and/or dye additives can also be present. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates sulfates, chromates, or the like; carbon blacks; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations comprising at least one of the foregoing pigments. Pigments are generally used in amounts of about 0.01 wt% to about 10 wt%, the polycarbonate blend composition.

In one aspect, the pigment is selected from titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, and zinc oxide. In another aspect, the pigment is carbon black.

In one aspect, the pigment is present in an amount from about 0.01 wt% to about 1 wt%. In another aspect, the pigment is present in an amount from about 0.1 wt% to about 0.9 wt%. In still another aspect, the pigment is present in an amount from about 0.2 wt% to about 0.8 wt%. In still another aspect, the pigment is present in an amount from about 0.2 wt% to about 0.7 wt%. In still another aspect, the pigment is present in an amount from about 0.3 wt% to about 0.6 wt%. In still another aspect, the pigment is present in an amount of about 0.5 wt%.

In a further aspect, suitable dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly ($C_{2-8}$) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3'',5''-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or amounts of about 0.1 to about 10 ppm.

In a further aspect, the anti-drip agents can also be present. Exemplary anti-drip agents can include a fibril forming or non-fibril forming fluoropolymer such as polytetrafluoroethylene (PTFE). The anti-drip agent can optionally be encapsulated by a rigid copolymer, for example styrene-acrylonitrile (SAN). PTFE encapsulated in SAN is known as TSAN. Encapsulated fluoropolymers can be made by polymerizing the encapsulating polymer in the presence of the fluoropolymer, for example, in an aqueous dispersion. TSAN can provide significant advantages over PTFE, in that TSAN can be more readily dispersed in the composition. A suitable TSAN can comprise, for example, about 50 wt % PTFE and about 50 wt % SAN, based on the total weight of the encapsulated fluoropolymer. Alternatively, the fluoropolymer can be pre-blended in some manner with a second polymer, such as for, example, an aromatic polycarbonate resin or SAN to form an agglomerated material for use as an anti-drip agent. Either method can be used to produce an encapsulated fluoropolymer.

In a further aspect, the blended polycarbonate compositions further comprise a flame retardant selected from a chlorine-containing hydrocarbon, a bromine-containing hydrocarbon, boron compound, a metal oxide, antimony oxide, aluminum hydroxide, a molybdenum compound, zinc oxide, magnesium oxide, an organic phosphate, phosphinate, phosphite, phosphonate, phosphene, halogenated phosphorus compound, inorganic phosphorus containing salt, and a nitrogen-containing compound, or a combination comprising at least one of the foregoing. In a still further aspect, the flame retardant is a phosphorus-containing flame retardant. In a yet further aspect, the phosphorus-containing flame retardant is selected from resorcinol bis(biphenyl phosphate), bisphenol A bis(diphenyl phosphate), and hydroquinone bis(diphenyl phosphate), or mixtures thereof.

In one aspect, the polycarbonate blends disclosed herein further comprise an aromatic vinyl copolymer. In another aspect, the aromatic vinyl copolymer is a styrene acrylonitrile copolymer (SAN).

In one aspect, the SAN comprises from about 10 wt% to about 40 wt% acrylonitrile. In another aspect, the SAN comprises from about 15 wt% to about 35 wt% acrylonitrile.

In one aspect, the SAN is a high flow SAN. In another aspect, the melt volume rate (MVR) is from about 4.0 gm/10 min to about 9 gm/10 min. In still another aspect, the melt volume rate (MVR) is from about 5.0 gm/10 min to about 8 gm/10 min. In still another aspect, the melt volume rate (MVR) is from about 5.2 gm/10 min to about 7.2 gm/10 min.

## METHODS OF IMPROVING MOLD RELEASE PROPERTIES

In various aspects, the invention pertains to methods for improving mold release properties of thermoplastic compositions, the method comprising the step of combining:

a) from about 10 wt% to about 70 wt% of a first polycarbonate component;
b) from about 10 wt% to about 70 wt% of a second polycarbonate component;
c) from about 2 wt% to about 10 wt% of an impact modifier component;
d) from about 5 wt% to about 30 wt% of a mineral filler component;
e) from about 1 wt% to about 25 wt% of a polycarbonate-polysiloxane copolymer component; and
f) from about 0.1 wt% to about 4.0 wt% of an alkyl sulfonate salt component;

wherein the combined weight percent value of the first polycarbonate component and the second polycarbonate component is from greater than 10 wt% to about 70 wt%;
wherein the combined weight percent value of all components does not exceed about 100 wt%;
wherein all weight percent values are based on the total weight of the composition; and
wherein a molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In various further aspects, the invention pertains to methods for improving mold release properties of thermoplastic compositions, the method comprising the step of combining:

a) from about 15 wt% to about 35 wt% of a first polycarbonate component;
b) from about 20 wt% to about 50 wt% of a second polycarbonate component;
c) from about 2 wt% to about 8 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 10 wt% to about 25 wt% of a mineral filler component;
e) from about 1 wt% to about 25 wt% of a polycarbonate-polysiloxane copolymer component; and
f) from about 0.5 wt% to about 2.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238; wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238; wherein the alkyl sulfonate salt component comprises one or more structures represented by a formula:

$$(C_nH_{2n+1})\text{-}(SO_3^-M^+)_p,$$

wherein for each alkyl sulfonate salt present, n is independently an integer from 6 to 17; p is independently an integer from 1 to 5; and each M is independently an alkali or alkaline earth metal;
wherein the combined weight percent value of the first polycarbonate component and the second polycarbonate component is from greater than 45 wt% to about 70 wt%;
wherein the combined weight percent value of all components does not exceed about 100 wt%;
wherein all weight percent values are based on the total weight of the composition; and
wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

In various further aspects, the invention pertains to methods for improving mold release properties of thermoplastic compositions, the method comprising the step of combining:

a) from about 20 wt% to about 30 wt% of a first polycarbonate component;
b) from about 20 wt% to about 50 wt% of a second polycarbonate component;
c) from about 3 wt% to about 6 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 12 wt% to about 20 wt% of a mineral filler component;
e) from about 1 wt% to about 25 wt% of a polycarbonate-polysiloxane copolymer component; and
f) from about 0.5 wt% to about 1.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238; wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238; wherein the alkyl sulfonate salt component comprises one or more structures represented by a formula:

$$(C_nH_{2n+1})\text{-}(SO_3^-M^+)_p,$$

wherein for each alkyl sulfonate salt present, n is independently an integer from 6 to 17; p is independently an integer from 1 to 5; and each M is independently an alkali or alkaline earth metal;
wherein the combined weight percent value of the first polycarbonate component and the second polycarbonate component is from greater than 45 wt% to about 70 wt%;
wherein the combined weight percent value of all components does not exceed about 100 wt%;
wherein all weight percent values are based on the total weight of the composition; and
wherein a molded sample of the thermoplastic composition exhibits a 3-fold lower mold ejection pressure compared to a reference composition consisting essentially of substantially the same proportions of the same polycarbonate polymer

component, the same mineral filler, and the same impact modifier component, in the absence of the polycarbonate-polysiloxane copolymer component and the alkyl sulfonate salt.

MANUFACTURE OF BLENDED POLYCARBONATE COMPOSITIONS

In various aspects, the blended polycarbonate compositions of the present invention can be manufactured by various methods. The compositions of the present invention can be blended with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods includes, but is not limited to, the following: co-rotating and counter-rotating extruders, single screw extruders, co-kneaders, disc-pack processors and various other types of extrusion equipment. In a further aspect, the extruder is a twin-screw extruder. In various further aspects, the melt processed composition exits processing equipment such as an extruder through small exit holes in a die. The resulting strands of molten resin are cooled by passing the strands through a water bath. The cooled strands can be chopped into small pellets for packaging and further handling.

The temperature of the melt is minimized in order to avoid excessive degradation of the resins. For example, it can be desirable to maintain the melt temperature between about 230°C and about 350°C in the molten resin composition, although higher temperatures can be used provided that the residence time of the resin in the processing equipment is kept short. In a still further aspect, the extruder is typically operated at a temperature of about 180 °C to about 385 °C. In a yet further aspect, the extruder is typically operated at a temperature of about 200 °C to about 330 °C. In an even further aspect, the extruder is typically operated at a temperature of about 220 °C to about 300 °C.

In various aspects, the blended polycarbonate compositions of the present invention can be prepared by blending the polycarbonate, impact modifier, poly(alkylene ester), and filler components in mixer, e.g. a HENSCHEL-Mixer® high speed mixer or other suitable mixer/blender. Other low shear processes, including but not limited to hand mixing, can also accomplish this blending. The mixture can then be fed into the throat of a twin-screw extruder via a hopper. Alternatively, at least one of the components can be incorporated into the composition by feeding directly into the extruder at the throat and/or downstream through a sidestuffer. Additives can also be compounded into a masterbatch desired polymeric resin and fed into the extruder. The extruder generally operated at a temperature higher than that necessary to cause the composition to flow. The extrudate is immediately quenched in a water bath and pelletized. The pellets, so prepared, when cutting the extrudate can be one-fourth inch long or less as desired. Such pellets can be used for subsequent molding, shaping, or forming.

In one aspect, the ejection pressure of the thermoplastic composition described herein is about 3.0-fold less than the reference composition when measured at a 55 second cycle time. In another aspect, the ejection pressure of the thermoplastic composition described herein is about 3.5-fold less than the reference composition when measured at a 55 second cycle time. In still another aspect, the ejection pressure of the thermoplastic composition described herein is about 4.0-fold less than the reference composition when measured at a 55 second cycle time. In still another aspect, the ejection pressure of the thermoplastic composition described herein the ejection pressure is about 4.5-fold less than the reference composition when measured at a 55 second cycle time. In still another aspect, the ejection pressure of the thermoplastic composition described herein the ejection pressure is about 5.0-fold less than the reference composition when measured at a 55 second cycle time.

ARTICLES OF MANUFACTURE

In various aspects, the disclosed blended polycarbonate compositions with superior mold release properties of the present invention can be used in making articles. The disclosed blended polycarbonate compositions can be formed into useful shaped articles by a variety of means such as; injection molding, extrusion, rotational molding, compression molding, blow molding, sheet or film extrusion, profile extrusion, gas assist molding, structural foam molding and thermoforming. The blended polycarbonate compositions described herein resins can also be made into film and sheet as well as components of laminate systems. In a further aspect, in an embodiment, a method of manufacturing an article comprises melt blending the polycarbonate polymer composition, the impact modifier composition, and the SAN copolymer components; and molding the extruded composition into an article. In a still further aspect, the extruding is done with a twin-screw extruder.

In various aspects, the invention pertains to articles comprising the disclosed compositions. In a still further aspect, the article is used in automotive applications. In a yet further aspect, the article is used in medical applications. In an even further aspect, the article is selected from vehicle body panel, a vehicle interior panel, a vehicle instrument panel, a spoiler, a fairing, a vehicle interior trim part, a grill, a seat back, a piece of furniture, an office partition, a surfboard, a surgical cart, a tool or equipment housing, a medical device, or a toy.

Formed articles include, for example, computer and business machine housings, home appliances, trays,

plates, handles, helmets, automotive parts such as instrument panels, cup holders, glove boxes, interior coverings and the like. In various further aspects, formed articles include, but are not limited to, food service items, medical devices, animal cages, electrical connectors, enclosures for electrical equipment, electric motor parts, power distribution equipment, communication equipment, computers and the like, including devices that have molded in snap fit connectors. In a further aspect, articles of the present invention comprise exterior body panels and parts for outdoor vehicles and devices including automobiles, protected graphics such as signs, outdoor enclosures such as telecommunication and electrical connection boxes, and construction applications such as roof sections, wall panels and glazing. Multilayer articles made of the disclosed polycarbonates particularly include articles which will be exposed to UV-light, whether natural or artificial, during their lifetimes, and most particularly outdoor articles; i.e., those intended for outdoor use. Suitable articles are exemplified by enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal watercraft; jet-skis; pools; spas; hot-tubs; steps; step coverings; building and construction applications such as glazing, roofs, windows, floors, decorative window furnishings or treatments; treated glass covers for pictures, paintings, posters, and like display items; wall panels, and doors; protected graphics; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; computer housings; desk-top computer housings; portable computer housings; lap-top computer housings; palm-held computer housings; monitor housings; printer housings; keyboards; facsimile machine housings; copier housings; telephone housings; mobile phone housings; radio sender housings; radio receiver housings; light fixtures; lighting appliances; network interface device housings; transformer housings; air conditioner housings; cladding or seating for public transportation; cladding or seating for trains, subways, or buses; meter housings; antenna housings; cladding for satellite dishes; coated helmets and personal protective equipment; coated synthetic or natural textiles; coated photographic film and photographic prints; coated painted articles; coated dyed articles; coated fluorescent articles; coated foam articles; and like applications.

In one aspect, the present invention pertains to articles comprising the disclosed blended polycarbonate compositions. In a further aspect, the article comprising the disclosed blended polycarbonate compositions is used in automotive applications. In a yet further aspect, the article used in automotive applications is selected from instrument panels, overhead consoles, interior trim, center consoles, panels, quarter panels, rocker panels, trim, fenders, doors, deck lids, trunk lids, hoods, bonnets, roofs, bumpers, fascia, grilles, minor housings, pillar appliqués, cladding, body side moldings, wheel covers, hubcaps, door handles, spoilers, window frames, headlamp bezels, headlamps, tail lamps, tail lamp housings, tail lamp bezels, license plate enclosures, roof racks, and running boards. In an even further aspect, the article comprising the disclosed blended polycarbonate compositions is selected from mobile device exteriors, mobile device covers, enclosures for electrical and electronic assemblies, protective headgear, buffer edging for furniture and joinery panels, luggage and protective carrying cases, small kitchen appliances, and toys.

In one aspect, the present invention pertains to electrical or electronic devices comprising the disclosed blended polycarbonate compositions. In a further aspect, the electrical or electronic device comprising the disclosed blended polycarbonate compositions is a cellphone, a MP3 player, a computer, a laptop, a camera, a video recorder, an electronic tablet, a pager, a hand receiver, a video game, a calculator, a wireless car entry device, an automotive part, a filter housing, a luggage cart, an office chair, a kitchen appliance, an electrical housing, an electrical connector, a lighting fixture, a light emitting diode, an electrical part, or a telecommunications part.

In various aspects, the present invention pertains to and includes at least the following aspects.

Aspect 1: A thermoplastic composition with improved mold release properties comprising:

a) from about 10 wt% to about 70 wt% of a first polycarbonate component;
b) from about 10 wt% to about 70 wt% of a second polycarbonate component;
c) from about 2 wt% to about 10 wt% of an impact modifier component;
d) from about 5 wt% to about 30 wt% of a mineral filler component;
e) from about 1 wt% to about 25 wt% of a polycarbonate-polysiloxane copolymer component; and
f) from about 0.1 wt% to about 4.0 wt% of an alkyl sulfonate salt component;

wherein the combined weight percent value of the first polycarbonate component and the second polycarbonate component is from greater than 10 wt% to about 70 wt%; wherein the combined weight percent value of all components does not exceed about 100 wt%; wherein all weight percent values are based on the total weight of the composition; and wherein molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

Aspect 2: The composition of aspect 1 wherein the combined weight percent value of the first polycarbonate component and the second polycarbonate component is from about 10 wt% to about 60 wt%.

Aspect 3: The composition of aspect 1 or aspect 2, wherein the combined weight percent value of the first polycarbonate component and the second polycarbonate component is from about 20 wt% to about 70 wt%.

Aspect 4: The composition of any of aspects 1-3, wherein the first polycarbonate polymer component is present in an amount from about 10 wt% to about 60 wt%.

Aspect 5: The composition of any of aspects 1-4, wherein the first polycarbonate polymer component is present in an amount from about 20 wt% to about 70 wt%.

Aspect 6: The composition of any of aspects 1-5, wherein the first polycarbonate polymer component is present in an amount from about 20 wt% to about 30 wt%.

Aspect 7: The composition of any of aspects 1-6, wherein the first polycarbonate polymer component is a high flow polycarbonate.

Aspect 8: The composition of any of aspects 1-7, wherein the first polycarbonate polymer component has a melt volume flow rate (MFR) from about 17 grams/10 minutes to about 32 grams/10 minutes when measured at 300 °C and under a load of 1.2 kg according to ASTM D1238 or wherein the first polycarbonate polymer component has a melt volume flow rate (MFR) from about 20 grams/10 minutes to about 30 grams/10 minutes when measured at 300 °C and under a load of 1.2 kg according to ASTM D1238.

Aspect 9: The composition of any of aspects 1-8, wherein the first polycarbonate polymer component has a weight average molecular weight from about 18,000 to about 40,000 grams/mole, as measured by Gel Permeation Chromatography GPC using BPA polycarbonate standards.

Aspect 10: The composition of any of aspects 1-9, wherein the second polycarbonate polymer component is present in an amount from about 10 wt% to about 60 wt%.

Aspect 11: The composition of any of aspects 1-10, wherein the second polycarbonate polymer component is present in an amount from about 20 wt% to about 70 wt%.

Aspect 12: The composition of any of aspects 1-11, wherein the second polycarbonate polymer component is present in an amount from about 25 wt% to about 70 wt%.

Aspect 13: The composition of any of aspects 1-12, wherein the second polycarbonate polymer component is present in an amount from about 40 wt% to about 70 wt%.

Aspect 14: The composition of any of aspects 1-13, wherein the second polycarbonate polymer component is a low flow polycarbonate.

Aspect 15: The composition of any of aspects 1-14, wherein the second polycarbonate polymer component has a melt volume flow rate (MFR) of at least about 3.0 grams/10 minutes when measured at 300 °C and under a load of 1.2 kg according to ASTM D1238.

Aspect 16: The composition of any of aspects 1-15, wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238.

Aspect 17: The composition of any of aspects 1-16, wherein the second polycarbonate polymer component has a weight average molecular weight from about 18,000 to about 40,000 grams/mole, as measured by Gel Permeation Chromatography GPC using BPA polycarbonate standards.

Aspect 18: The composition of any of aspects 1-17, wherein the impact modifier component comprises at least one acrylonitrile-butadiene-styrene (ABS) polymer composition, at least one bulk polymerized ABS (BABS), or at least one methacrylate-butadiene-styrene (MBS) polymer composition.

Aspect 19: The composition of any of aspects 1-18, wherein the impact modifier component comprises a methacrylate-butadiene-styrene (MBS) polymer composition.

Aspect 20: The composition of aspect 19, wherein the MBS polymer composition is present in an amount from about 2 wt% to about 10 wt%.

Aspect 21: The composition of aspect 19 or aspect 20, wherein the MBS polymer composition is present in an amount from about 3 wt% to about 9 wt%.

Aspect 22: The composition of any of aspects 19-21, wherein the MBS polymer composition comprises butadiene content from about 60 wt% to about 80 wt%.

Aspect 23: The composition of any of aspects 19-22, wherein the MBS polymer composition has a bulk density from about 0.25 g/cm$^3$ to about 0.55 g/cm$^3$.

Aspect 24: The composition of any of aspects 19-23, wherein the MBS polymer composition has a maximum mean particle diameter from about 200 $\mu$m to about 300 $\mu$m.

Aspect 25: The composition of any of aspects 1-18, wherein the impact modifier comprises an acrylonitrile-butadiene-styrene (ABS) polymer composition.

Aspect 26: The composition of aspect 25, wherein the ABS polymer composition is an emulsion polymerized

ABS.

Aspect 27: The composition of aspect 25 or aspect 26, wherein the ABS polymer composition is a bulk-polymerized ABS.

Aspect 28: The composition of any of aspects 25-27, wherein the ABS polymer composition is a SAN-grafted emulsion ABS.

Aspect 29: The composition of any of aspects 25-28, wherein ABS polymer composition comprises butadiene content from about 20 wt% to about 75 wt%.

Aspect 30: The composition of any of aspects 25-29, wherein ABS polymer composition comprises butadiene content from about 10 wt% to about 25 wt%.

Aspect 31: The composition of any of aspects 25-30, wherein ABS polymer composition comprises acrylonitrile content from about 5 wt% to about 25 wt%.

Aspect 32: The composition of any of aspects 1-31, wherein the mineral filler component comprises a platy mineral filler.

Aspect 33: The composition of any of aspects 1-32, wherein the mineral filler comprises at least one mineral filler selected from mica, talc, clay, wollastonite, zinc sulfide, zinc oxide, and titanium dioxide.

Aspect 34: The composition of any of aspects 1-33, wherein the mineral filler comprises at least one mineral filler selected from mica, talc, and clay.

Aspect 35: The composition of any of aspects 1-34, wherein the mineral filler has a median particle size ($D_{50}$) from about 0.5 $\mu$m to about 2.0 $\mu$m.

Aspect 36: The composition of any of aspects 1-35, wherein the mineral filler has a median particle size ($D_{50}$) less than about 5 $\mu$m.

Aspect 37: The composition of any of aspects 34-36, wherein at least one mineral filler selected from mica, talc, and clay has been treated with an aminosilane.

Aspect 38: The composition of any of aspects 1-37, further comprising delaminated graphite.

Aspect 39: The composition of any of aspects 1-38, wherein the polycarbonate-polysiloxane copolymer component is a polycarbonate-polydimethylsiloxane copolymer.

Aspect 40: The composition of any of aspects 1-39, wherein the polycarbonate portion of the polycarbonate-polysiloxane copolymer comprises residues derived from BPA.

Aspect 41: The composition of aspect 40, wherein the polycarbonate portion of the polycarbonate-polysiloxane copolymer comprising residues derived from BPA is a homopolymer.

Aspect 42: The composition of any of aspects 1-41, wherein the polycarbonate-polysiloxane copolymer component comprises a polycarbonate-polysiloxane block copolymer.

Aspect 43: The composition of aspect 42, wherein the polycarbonate-polysiloxane block copolymer comprises a polycarbonate-polydimethylsiloxane block copolymer.

Aspect 44: The composition of any of aspects 1-43, wherein the polycarbonate block comprises residues derived from BPA.

Aspect 45: The composition of aspect 44, wherein the polycarbonate block comprising residues derived from BPA is a homopolymer.

Aspect 46: The composition of any of aspects 1-45, wherein the polycarbonate-polysiloxane block copolymer comprises from about 3 wt% to about 10 wt% siloxane.

Aspect 47: The composition of any of aspects 1-36, wherein the polysiloxane block has a weight average molecular weight from about 20,000 to about 26,000 Daltons.

Aspect 48: The composition of any of aspects 1-47, wherein the polycarbonate-polysiloxane block copolymer comprises from about 15 wt% to about 25 wt% siloxane.

Aspect 49: The composition of any of aspects 1-48, wherein the polysiloxane block has a weight average molecular weight from about 25,000 to about 32,000 Daltons.

Aspect 50: The composition of any of aspects 1-49, wherein the alkyl sulfonate salt component is present in an amount from about 0.2 wt% to about 4.0 wt%.

Aspect 51: The composition of any of aspects 1-50, wherein the alkyl sulfonate salt component is present in an amount from about 0.5 wt% to about 3.0 wt%.

Aspect 52: The composition of any of aspects 1-51, wherein the alkyl sulfonate salt component has a structure represented by a formula:

T-E,

wherein T is aliphatic; E is aliphatic and contains at least one $SO3-M^+$ group, where each M is an alkali metal.

Aspect 53: The composition of any of aspects 1-52, wherein the alkyl sulfonate salt component comprises one or more structures represented by a formula:

$$(C_nH_{2n+1})\text{-}(SO_3^{-}M^{+})_p,$$

wherein for each alkyl sulfonate salt present, n is independently an integer from 6 to 17; p is independently an integer from 1 to 5; and each M is independently an alkali or alkaline earth metal.

Aspect 54: The composition of aspect 53, wherein M is an alkali metal.

Aspect 55: The composition of aspect 53, wherein M is an alkali earth metal.

Aspect 56: The composition of aspect 53, wherein each of n, p, and M is the same for each alkyl sulfonate salt present.

Aspect 57: The composition of any of aspects 1-56, further comprising an aromatic vinyl copolymer.

Aspect 58: The composition of aspect 57, wherein the aromatic vinyl copolymer is a styrene acrylonitrile copolymer (SAN).

Aspect 59: The composition of aspect 57 or aspect 58, wherein the SAN comprises from about 10 wt% to about 40 wt% acrylonitrile.

Aspect 60: The composition of any of aspects 57-59, wherein the SAN is a high flow SAN.

Aspect 61: The composition of any of aspects 57-60, wherein the melt volume rate (MVR) of the SAN is from about 4.0 gm/10 min to about 9 gm/10 min.

Aspect 62: The composition of any of aspects 1-60, further comprising an additive selected from thermal stabilizer, UV stabilizer, primary anti-oxidant, secondary anti-oxidant, mold release agent, lubricant, flame retardant agent, smoke suppressor agent, buffer, acid scavenger, hydrolytic stabilizer, quencher, pigment, and combinations of two or more of the foregoing.

Aspect 63: The composition of aspect 62, wherein the primary antioxidant is selected from hindered phenols, phosphites, phosphonates, and any mixture thereof.

Aspect 64: The composition of aspect 63, wherein the hindered phenol is selected from one or more compounds selected from triethylene glycol bis[3-(3-t-butyl-5-methyl-4-hydroxyphenyl)propionate], 1,6-hexanediol bis[3-(3,5-di-t-butyl-4-hydroxyphenyl)propionate], 2,4-bis(n-octylthio)-6-(4-hydroxy-3,5-di-t-butylanilino)-1,3,5-triazine, pentaerythrityl tetrakis[3-(3,5-di-t-butyl-4-hydroxyphenyl)propionate], 2,2-thiodiethylene bis[3-(3,5-di-t-butyl-4-hydroxyphenyl)propionate], octadecyl 3-(3,5-di-t-butyl-4-hydroxyphenyl)propionate, N,N'-hexamethylene bis(3,5-di-t-butyl-4-hydroxyhydrocinnamamide), tetrakis(methylene 3,5-di-tert-butyl-hydroxycinnamate)methane, and octadecyl 3,5-di-tert-butylhydroxyhydrocinnamate.

Aspect 65: The composition of aspect 63 or aspect 64, wherein the hindered phenol is octadecyl 3-(3,5-di-t-butyl-4-hydroxyphenyl)propionate.

Aspect 66: The composition of any of aspects 62-65, wherein the primary antioxidant is present in an amount from about 0.1 wt% to about 1 wt%.

Aspect 67: The composition of any of aspects 62-66, wherein the secondary antioxidant is selected from organophosphates, thioesters, thioethers, and any mixture thereof.

Aspect 68: The composition of aspect 62 or aspect 67, wherein the secondary antioxidant is selected from pentaerythritol tetrakis (3-(dodecylthio)propionate), pentaerythritol tetrakis[3-(3,5-di-tert-butyl-4-hydroxyphenyl)propionate], dilaurylthiodipropionate, distearyl thiodipropionate, dimyristylthiodipropionate, ditridecylthiodipropionate, pentaerythritol octylthiopropionate, dioctadecyldisulphide, tetrakis(2,4-di-tert-butylphenyl) [1,1-biphenyl]-4,4'-diylbisphosphonite, tris(2,4-di-tert-butylphenyl) phosphite, bis(2,4-di-tert-butylphenyl) pentaerythritol diphosphite, bis(2,4-dicumylphenyl)pentaerytritoldiphosphite, tris(nonyl phenyl)phosphite, and distearyl pentaerythritol diphosphite.

Aspect 69: The composition of aspect 68, wherein the secondary antioxidant is tris(2,4-di-tert-butylphenyl) phosphite.

Aspect 70: The composition of any one of aspects 62 or 67-69, wherein the secondary antioxidant is present in an amount from about 0.01 wt% to about 1 wt%.

Aspect 71: The composition of any of aspects 62-70, wherein the thermal stabilizer is selected from 2,2'-thiobis(4-methyl-6-tert-butylphenol); tetrakis(3-laurylthiopropionyloxymethyl)methane; pentaerythritol tetrakis(3-dodecylthiopropionate); lauryl 3,3'-thiodipropionate; stearyl 3,3'-thiodipropionate; distearyl disulfide; dilauryl 3,3'-hiodipropionate; dimyristyl 3,3'-thiodipropionate; propionic acid, 3,3'-thiobis-, didodecyl ester; ditridecyl 3,3'-thiodipropionate; distearyl 3,3'-thiodipropionate, dioctadecyl 3,3-thiodipropionate; and dimyristyl 3,3'-thiodipropionate, or combination of two or more thereof.

Aspect 72: The composition of aspect 62 or aspect 71, wherein the thermal stabilizer is pentaerythritol tetrakis(3-dodecylthiopropionate).

Aspect 73: The composition of any one of aspects 62, 71, or 72, wherein the thermal stabilizer is present in an amount from about 0.05 wt% to about 1.0 wt%.

Aspect 74: The composition of any of aspects 62-73, wherein the mold release agent is selected from is selected from methyl stearate; stearyl stearate, and pentaerythritol tetrastearate.

Aspect 75: The composition of aspect 62 or aspect 74, wherein the mold release agent is pentaerythritol tetrastearate.

Aspect 76: The composition of any one of aspects 62, 74, or 75, wherein the mold release agent is present in an amount from about 0.1 wt% to about 1.0 wt%.

Aspect 77: The composition of any of aspects 62-76, wherein the acid stabilizer is selected from phosphorous acid, phosphoric acid, mono zinc phosphate, mono sodium phosphate, or sodium acid pyrophosphate.

Aspect 78: The composition of any of aspects 62-77, wherein the pigment is selected from titanium dioxide, zinc sulfide, carbon black, cobalt chromate, cobalt titanate, cadmium sulfides, iron oxide, sodium aluminum sulfosilicate, sodium sulfosilicate, chrome antimony titanium rutile, nickel antimony titanium rutile, and zinc oxide.

Aspect 79: The composition of any of aspects 62-78, wherein the pigment is carbon black.

Aspect 80: The composition of any one of aspects 62, 78, or 79, wherein the pigment is present in an amount from about 0.01 wt% to about 1 wt%.

Aspect 81: The composition of any of aspects 1-80, wherein the ejection pressure is about 5.0-fold less than the reference composition when measured at a 55 second cycle time.

Aspect 82: The composition of any of aspects 1-81, wherein the injection pressure is determined using a cup shaped square mold tool that is about 70 millimeters (mm) on each side and 40 mm high with 4 mm thick walls; and wherein the mold tool comprises four cylindrical posts near each corner; wherein each post is about 12.7 mm high and 9.5 mm in diameter; wherein at the end of each post is a knock out pin, which is used to eject the part from the mold; and wherein the knock out pins each comprise a transducer to measure the force required to eject the part.

Aspect 83: A thermoplastic composition with improved mold release properties comprising:

a) from about 15 wt% to about 35 wt% of a first polycarbonate component;
b) from about 20 wt% to about 50 wt% of a second polycarbonate component;
c) from about 2 wt% to about 8 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 10 wt% to about 25 wt% of a mineral filler component;
e) from about 1 wt% to about 25 wt% of a polycarbonate-polysiloxane copolymer component; and
f) from about 0.5 wt% to about 2.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238; wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238; wherein the alkyl sulfonate salt component comprises one or more structures represented by a formula:

$$(C_nH_{2n+1})\text{-}(SO_3^-M^+)_p,$$

wherein for each alkyl sulfonate salt present, n is independently an integer from 6 to 17; p is independently an integer from 1 to 5; and each M is independently an alkali or alkaline earth metal; wherein the combined weight percent value of the first polycarbonate component and the second polycarbonate component is from greater than 45 wt% to about 70 wt%; wherein the combined weight percent value of all components does not exceed about 100 wt%; wherein all weight percent values are based on the total weight of the composition; and wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

Aspect 84: A thermoplastic composition with improved mold release properties comprising:

a) from about 20 wt% to about 30 wt% of a first polycarbonate component;
b) from about 20 wt% to about 50 wt% of a second polycarbonate component;
c) from about 3 wt% to about 6 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 12 wt% to about 20 wt% of a mineral filler component;
e) from about 1 wt% to about 25 wt% of a polycarbonate-polysiloxane copolymer component; and
f) from about 0.5 wt% to about 1.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238; wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238; wherein the alkyl sulfonate salt component comprises one or more structures represented by a formula:

$$(C_nH_{2n+1})\text{-}(SO_3^-M^+)_p,$$

wherein for each alkyl sulfonate salt present, n is independently an integer from 6 to 17; p is independently an integer from 1 to 5; and each M is independently an alkali or alkaline earth metal; wherein the combined weight percent value of the first polycarbonate component and the second polycarbonate component is from greater than 45 wt% to about 70 wt%; wherein the combined weight percent value of all components does not exceed about 100 wt%; wherein all weight percent values are based on the total weight of the composition; and wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

Aspect 85: An article comprising the composition of any of aspects 1-84.

Aspect 86: A method of improving mold release properties of a thermoplastic composition, the method comprising the step of combining:

a) from about 10 wt% to about 70 wt% of a first polycarbonate component;
b) from about 10 wt% to about 70 wt% of a second polycarbonate component;
c) from about 2 wt% to about 10 wt% of an impact modifier component;
d)from about 5 wt% to about 30 wt% of a mineral filler component;
e) from about 1 wt% to about 25 wt% of a polycarbonate-polysiloxane copolymer component; and
f) from about 0.1 wt% to about 4.0 wt% of an alkyl sulfonate salt component;

wherein the combined weight percent value of the first polycarbonate component and the second polycarbonate component is from greater than 10 wt% to about 70 wt%; wherein the combined weight percent value of all components does not exceed about 100 wt%;
wherein all weight percent values are based on the total weight of the composition; and wherein a molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

Aspect 87: A method of improving mold release properties of a thermoplastic composition, the method comprising the step of combining:

a) from about 15 wt% to about 35 wt% of a first polycarbonate component;
b) from about 20 wt% to about 50 wt% of a second polycarbonate component;
c) from about 2 wt% to about 8 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 10 wt% to about 25 wt% of a mineral filler component;
e) from about 1 wt% to about 25 wt% of a polycarbonate-polysiloxane copolymer component; and
f) from about 0.5 wt% to about 2.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238; wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238; wherein the alkyl sulfonate salt component comprises one or more structures represented by a formula:

$$(C_nH_{2n+1})\text{-}(SO_3^-M^+)_p,$$

wherein for each alkyl sulfonate salt present, n is independently an integer from 6 to 17; p is independently an integer from 1 to 5; and each M is independently an alkali or alkaline earth metal; wherein the combined weight percent value

of the first polycarbonate component and the second polycarbonate component is from greater than 45 wt% to about 70 wt%; wherein the combined weight percent value of all components does not exceed about 100 wt%; wherein all weight percent values are based on the total weight of the composition; and wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

Aspect 88: A method of improving mold release properties of a thermoplastic composition, the method comprising the step of combining:

a) from about 20 wt% to about 30 wt% of a first polycarbonate component;
b) from about 20 wt% to about 50 wt% of a second polycarbonate component;
c) from about 3 wt% to about 6 wt% of an impact modifier component comprising an acrylonitrile-butadiene-styrene (ABS) polymer composition, a bulk polymerized ABS (BABS), or a methacrylate-butadiene-styrene (MBS) polymer composition;
d) from about 12 wt% to about 20 wt% of a mineral filler component;
e) from about 1 wt% to about 25 wt% of a polycarbonate-polysiloxane copolymer component; and
f) from about 0.5 wt% to about 1.0 wt% of an alkyl sulfonate salt component;

wherein the first polycarbonate polymer component has a melt volume flow rate (MFR) from about 20 grams/10 minutes to about 30 grams/10 minutes when measured at 300 °C and under a load of 1.2 kg according to ASTM D1238; wherein the second polycarbonate polymer component has a melt volume flow rate (MFR) from about 4.0 grams/10 minutes to about 8.0 grams/10 minutes when measured at 300 °C and under a load of 1.2 kg according to ASTM D1238; wherein the alkyl sulfonate salt component comprises one or more structures represented by a formula:

$$(C_nH_{2n+1})\text{-}(SO_3^-M^+)_p,$$

wherein for each alkyl sulfonate salt present, n is independently an integer from 6 to 17; p is independently an integer from 1 to 5; and each M is independently an alkali or alkaline earth metal; wherein the combined weight percent value of the first polycarbonate component and the second polycarbonate component is from greater than 45 wt% to about 70 wt%; wherein the combined weight percent value of all components does not exceed about 100 wt%; wherein all weight percent values are based on the total weight of the composition; and wherein a molded sample of the thermoplastic composition exhibits a 3-fold lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

Without further elaboration, it is believed that one skilled in the art can, using the description herein, utilize the present invention. The following examples are included to provide addition guidance to those skilled in the art of practicing the claimed invention. The examples provided are merely representative of the work and contribute to the teaching of the present invention. Accordingly, these examples are not intended to limit the invention in any manner.

While aspects of the present invention can be described and claimed in a particular statutory class, such as the system statutory class, this is for convenience only and one of skill in the art will understand that each aspect of the present invention can be described and claimed in any statutory class. Unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

Throughout this application, various publications are referenced. The disclosures of these publications in their entireties are hereby incorporated by reference into this application in order to more fully describe the state of the art to which this pertains. The references disclosed are also individually and specifically incorporated by reference herein for the material contained in them that is discussed in the sentence in which the reference is relied upon. Nothing herein is to be construed as an admission that the present invention is not entitled to antedate such publication by virtue of prior invention. Further, the dates of publication provided herein can be different from the actual publication dates, which can require independent confirmation.

EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield possible non-express basis for interpretation, including matters of logic with respect to arrangement of steps or operational flow, plain meaning derived from grammatical organization or punctuation, or the number or type of aspects described in the specification.

EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (*e.g.*, amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials shown in Table 1 were used to prepare the compositions described in Tables 2, 3, and 5.

Table 1.

| Identifier | Description | Source |
|---|---|---|
| Q1 | Zinc phosphate monobasic ($Zn(H_2PO_4)_2$), pH 2.7~3.7. | Gallard Schlesinger Industries, Inc. or Budenheim USA, Inc. |
| AO1 | Octadecyl3(3,5ditertbutyl4hydroxyphenyl)propionate, hindered phenol; sold under the trade name: Irganox 1076. | Ciba Specialty Chemicals Corporation |
| AO2 | Tris(2,4-di-t-butylphenyl)phosphite; stabilizer. | Everspring Chemical Company, Ltd. |
| TS1 | Pentaerythrithol tetrakis-(3-dodecylthiopropionate); sold under the trade name: SEENOX 412S. | Shipro Kasei Kaisha |
| MR1 | Pentaerythritol tetrastearate; commercially available from Faci as PETS G. | Faci S.p.A. |

In each of the examples, sample batches (5 kg) were prepared by pre-blending all constituents in a dry-blend and tumble mixing for 20 minutes. The pre-blend was fed directly to a co-rotation twin screw extruder (25 mm) at a nominal melt temperature of 260 °C, (700 mm) of mercury vacuum, and 300 rpm. The extrudate was pelletized and dried at about 100° C. for about 4 hours. To make test specimens, the dried pellets were injection molded to form appropriate test samples.

Notched Izod impact Strength ("NII") was used to compare the impact resistances of plastic materials and was determined in accordance with ISO 180 at the indicated temperatures with a 5.5 Joule hammer using 3.2 mm thick notched Izod bars. The ISO results are defined as the impact energy in joules used to break the test specimen, divided by the specimen area at the notch. Results are reported in kiloJoules per square meter (kJ/$m^2$).

NII ductility is reported as the percentage of ten samples which, upon failure in the notched Izod impact test, exhibited a ductile failure rather than rigid failure, the latter being characterized by cracking and the formation of shards.

Melt Volume Rate ("MVR") was determined at 265 °C under a 5.0 kg load, over 10 minutes, in accordance with ISO 1133 or ASTM D1238 (as indicated in the tables below). Each reported value is an average value of 3 tested specimens. Results are reported in $cm^3$ per 10 minutes.

Melt viscosities ("MV") were measured in accordance with the ISO 11443 standard at 265 °C and a 645 reciprocal seconds ($s^{-1}$) shear rate. The granules were dried for 4 hours at 100°C. Results are reported in Pascal seconds (Pa-s).

Instrumental Impact (or Multi-Axial Impact or Dynatup Plaque Impact Energy; indicated as "MAI" in tables below) was measured according to D3763 at -30 °C using a plaque 3.2 mm thick, 10 centimeters diameter, with a dart diameter of 12.5 mm at 2.3 meters per second (m/s). The results represent the total energy absorbed and are reported in Joules. This procedure provides information on how a material behaves under multiaxial deformation conditions. The final test result is calculated as the average of the test results of either five or ten test plaques. Results are reported in Joules.

Dynatup ductility (or Multi-Axial Impact Ductility; indicated as "MAI ductility" in tables below) is reported as the percentage of ten samples which, upon failure in the Dynatup impact test, exhibited a ductile failure rather than rigid failure, the latter being characterized by cracking and the formation of shards. Brittle failure is characterized by limited plastic deformation and breakage of the part into multiple pieces. Ductile failure is characterized by significant plastic deformation and yielding of the part. Ductile parts do not break into multiple pieces. Percent ductility is expressed as a percentage of impact bars that exhibited ductile failure mode.

Heat deflection temperature ("HDT") was measured in accordance with the ISO 75 standard using 4 mm Izod bars in a flatwise manner under a load of 1.8 Mega Pascals (MPa).

The samples were tested for ejection pressure, or the force needed to eject the part from a mold, and the results are shown below using the test used a described herein. Briefly, a cup shaped square mold tool approximately 70 mm on each side and 40 mm high with 4 mm thick walls having a center gate was used (see Figure 1). In the mold, there were four cylindrical posts near each corner, each post was about ½ inch high and ⅜ inch in diameter. At the end of each post is a knock out pin, which is used to eject the part from the mold. The knock out pins each had a transducer to measure the force required to eject the part. The purpose of the posts is to create areas of thermal mass and increased surface area within the mold, to increase the amount of part drag during ejection from the mold. The molding test conditions used with the mold tool described herein were as follows: melt temperature was 525 °F, with a mold temperature of 170 °F and an injection speed of 2 inches per second; the drying process was at 250 °F for four (4) hours.

This tool, used to evaluate mold sticking, is an example of the type of tool in which mold sticking occurs. Many tools that featured areas of high thermal mass and substantial surface areas parallel to the ejection direction of the tool, such that high drag forces are exerted on the part during ejection from the mold, would be equally useful in evaluating mold sticking/mold release characteristics. The use of pressure transducers in the knock-out pins allows for quantification of the mold release forces.

Exemplary compositions of the present invention (EX.1-EX.7), along with a control or comparator composition (Control 1) are shown in Table 2. The mold release characteristics for compositions described in Table 2 are further detailed in Figures 2-4.

Table 2.

| No. | Item | Control | EX. 1 | EX. 2 | EX. 3 |
|---|---|---|---|---|---|
| 1 | PC1 | 22.45 | 22.45 | 22.45 | 22.45 |
| 2 | PC2 | 47.1 | 42.1 | 37.1 | 36.1 |
| 3 | SAN | 9.5 | 9.5 | 9.5 | 9.5 |
| 4 | Talc | 15 | 15 | 15 | 15 |
| 5 | MBS | 4.4 | 4.4 | 4.4 | 4.4 |
| 6 | PC-PS1 | --- | 5 | 10 | 10 |
| 7 | PC-PS2 | --- | --- | --- | --- |
| 8 | TS1 | 0.25 | 0.25 | 0.25 | 0.25 |
| 9 | Q1 | 0.2 | 0.2 | 0.2 | 0.2 |
| 10 | C1 | 0.5 | 0.5 | 0.5 | 0.5 |
| 11 | AO1 | 0.25 | 0.25 | 0.25 | 0.25 |
| 12 | AO2 | 0.1 | 0.1 | 0.1 | 0.1 |
| 13 | MR1 | 0.25 | 0.25 | 0.25 | 0.25 |
| 14 | AS1 | --- | --- | --- | 1 |
| Formulation Total | | 100 | 100 | 100 | 100 |

Table 2 (continued)

| No. | Item | Control | EX. 1 | EX. 2 | EX. 3 |
|---|---|---|---|---|---|
| 1 | PC1 | 22.45 | 22.45 | 22.45 | 22.45 |
| 2 | PC2 | 27.1 | 42.1 | 37.1 | 27.1 |
| 3 | SAN | 9.5 | 9.5 | 9.5 | 9.5 |
| 4 | Talc | 15 | 15 | 15 | 15 |
| 5 | MBS | 4.4 | 4.4 | 4.4 | 4.4 |
| 6 | PC-PS1 | 20 | --- | --- | --- |
| 7 | PC-PS2 | --- | 5 | 10 | 20 |
| 8 | TS1 | 0.25 | 0.25 | 0.25 | 0.25 |
| 9 | Q1 | 0.2 | 0.2 | 0.2 | 0.2 |
| 10 | C1 | 0.5 | 0.5 | 0.5 | 0.5 |
| 11 | AO1 | 0.25 | 0.25 | 0.25 | 0.25 |
| 12 | AO2 | 0.1 | 0.1 | 0.1 | 0.1 |
| 13 | MR1 | 0.25 | 0.25 | 0.25 | 0.25 |
| 14 | AS1 | --- | --- | --- | --- |
| Formulation Total | | 100 | 100 | 100 | 100 |

The data in Figure 2 show the effect of loading level (wt%) of two types of polycarbonate-siloxane copolymers on relative ejection pressure for samples (55 sec and 60 sec cycle times as indicated) prepared according to Table 2. As described in Table 1, PC-PS1 is a lower siloxane content (6 wt%) polycarbonate-siloxane copolymer and PC-PS2 is a higher siloxane content (20 wt%) polycarbonate-siloxane copolymer. The data show that at levels of up to 20 wt% PC-PS1 there is little change in the relative ejection pressure regardless of whether the cycle time is 55 or 60 sec, whereas at levels of PC-PS2 as low as 5 wt% there is a significant decrease in the relative ejection pressure at both cycle times shown.

The data in Figure 3 demonstrate that the addition of a alkyl sulfonate salt (AS1 as described in Table 1) at a level of 1 wt% has a profound effect on relative ejection pressure compared to the same composition without the alkyl sulfonate salt or the control composition. The data show that both the control composition had a significant drop in ejection pressure when the cycle time was changed from 55 sec to 60 sec, and addition of 10 wt% PC-PS1 to the control composition (EX.2) had little effect on the relative ejection pressure or the transition observed between 55 and 60 sec cycle times. However, the addition of an alkyl sulfonate salt (AS1) decreased the relative ejection pressure by about 7-fold when the cycle time was 55 sec. The same relative ejection pressure was not realized in either the control until the cycle time was 70 sec.

The data in Figure 4 compare the effect loading level of a lower siloxane content (6 wt%) polycarbonate-siloxane copolymer (PC-PS1) and a higher siloxane content (20 wt%) polycarbonate-siloxane copolymer (PC-PS2) on normalized ejection pressure. The data show that there is no significant effect on normalized ejection pressure by the addition of a lower siloxane content polycarbonate-siloxane copolymer (PC-PS1) to the compositions described in Table 2. In contrast, the addition of as little as 5 wt% of a higher siloxane content (20 wt%) polycarbonate-siloxane copolymer (PC-PS2) significantly decreases the normalized ejection pressure, which continues to decrease with higher loadings of this polycarbonate-siloxane copolymer. The data are normalized to the ejection pressure of the control composition with a polycarbonate-siloxane copolymer component.

Further exemplary compositions of the present invention (S.1-S.7). Flow, impact, and mold release properties were assessed for each composition, and the results, along with a control or comparator composition (control) are shown in Table 4. The mold release characteristics for compositions described in Table 3 are further detailed in Figure 5.

Table 3.

| No. | Item | Control | S.1 | S.2 | S.3 | S.4 | S.5 |
|---|---|---|---|---|---|---|---|
| 1 | PC1 | 22.45 | 22.45 | 22.45 | 22.45 | 22.45 | 22.45 |
| 2 | PC2 | 47.1 | 37.1 | 36.1 | 35.1 | 27.1 | 26.1 |
| 3 | PC-PS1 | --- | 10 | 10 | 10 | 20 | 20 |
| 4 | SAN | 9.5 | 9.5 | 9.5 | 9.5 | 9.5 | 9.5 |
| 5 | TS1 | 0.25 | 0.25 | 0.25 | 0.25 | 0.25 | 0.25 |
| 6 | Talc | 15 | 15 | 15 | 15 | 15 | 15 |
| 7 | MBS | 4.4 | 4.4 | 4.4 | 4.4 | 4.4 | 4.4 |
| 8 | AO1 | 0.25 | 0.25 | 0.25 | 0.25 | 0.25 | 0.25 |
| 9 | MR1 | 0.25 | 0.25 | 0.25 | 0.25 | 0.25 | 0.25 |
| 10 | AO2 | 0.1 | 0.1 | 0.1 | 0.1 | 0.1 | 0.1 |
| 11 | Q1 | 0.2 | 0.2 | 0.2 | 0.2 | 0.2 | 0.2 |
| 12 | C1 | 0.5 | 0.5 | 0.5 | 0.5 | 0.5 | 0.5 |
| 13 | AS1 | --- | --- | 1 | 2 | --- | 1 |
| Formulation Total | | 100 | 100 | 100 | 100 | 100 | 100 |

The data in Figure 5 show the normalized ejection pressure for the compositions described in Table 3. The ejection pressure was normalized to the control sample which is set to 100%. The data suggest that higher levels of a lower siloxane content (6 wt%) polycarbonate-siloxane copolymer (PC-PS1) improved the mold release characteristics of the composition (e.g. compare S.1 and S.4 in Figure 5 which have 10 wt% and 20 wt%, respectively, of PC-PS1). Surprisingly, modest levels (1-2 wt%) of a alkyl sulfonate salt significantly decreased the normalized ejection pressure at both 10 wt% and 20 wt% loadings of PC-PS1 (e.g. compare S.2 or S.3 to S.1 or compare S.5 to S.4 in Figure 5).

The data in Table 4 show that addition of either PC-PS1 or alkyl sulfonate salt had no deleterious effect on flow, impact, or mold release properties. The addition of PC-PS1 actually improved low temperature ductility properties, which the addition of alkyl sulfonate salt further improved.

Table 4.

| Test | Test Condition | Unit | Control | S.1 | S.2 | S.3 | S.4 | S.5 |
|---|---|---|---|---|---|---|---|---|
| MVR (ASTM) | 265 °C, 5 kg | $cm^3$/10 min | 12 | 14 | 23 | 18 | 15 | 18 |
| MVR (ISO) | 265 °C, 5 kg | $cm^3$/10 min | 12 | 13 | 22 | 17 | 14 | 18 |
| MV | 265 °C, 645 $s^{-1}$ | Pa-s | 564 | 554 | 465 | 462 | 514 | 482 |
| Viscosity change | 265 °C, 1800 s | % | -9 | -16 | -23 | -23 | -26 | -23 |
| NII, ductility | 25 °C | % | 100 | 100 | 100 | 100 | 100 | 100 |
| NII | 25 °C | $kJ/m^2$ | 17 | 23 | 29 | 46 | 27 | 32 |
| NII, ductility | -10 °C | % | 80 | 100 | 100 | 100 | 90 | 100 |
| NII | -10 °C | $kJ/m^2$ | 9 | 11 | 15 | 29 | 12 | 15 |
| NII, ductility | -20 °C | % | 20 | 40 | 70 | 100 | 30 | 80 |
| NII | -20 °C | $kJ/m^2$ | 8 | 10 | 12 | 25 | 11 | 15 |

(continued)

| Test | Test Condition | Unit | Control | S.1 | S.2 | S.3 | S.4 | S.5 |
|---|---|---|---|---|---|---|---|---|
| NII, ductility | -30 °C | % | 0 | 0 | 0 | 100 | 0 | 0 |
| NII | -30 °C | $kJ/m^2$ | 8 | 9 | 11 | 15 | 10 | 12 |
| MAI, max. eng.* | 25 °C, 2.3 m/s | J | 49 | 48 | 48 | 41 | 50 | 47 |
| MAI, tot. eng.* | 25 °C, 2.3 m/s | J | 54 | 53 | 53 | 47 | 55 | 52 |
| MAI ductility | -30 °C, 2.3 m/s | % | 0 | 20 | 40 | 0 | 0 | 0 |
| MAI, max. eng.* | -30 °C, 2.3 m/s | J | 31 | 30 | 38 | 21 | 35 | 43 |
| MAI, tot. eng.* | -30 °C, 2.3 m/s | J | 32 | 36 | 40 | 23 | 38 | 46 |
| Eject. Press.** | --- | % | 100 | 74 | 25 | 15 | 61 | 26 |

* "max. eng." is maximum impact energy; "tot. eng." is total impact energy.

** "Eject. Press." is normalized ejection pressure (i.e. normalized to the ejection pressure of the control sample).

Further exemplary compositions of the present invention (S.6-S.11) are shown in Table 5. See Table 3 for control composition. Flow, impact, and mold release properties were assessed for each composition, and the results are shown in Table 6 (see Table 4 for control values). The mold release characteristics for compositions described in Table 5 are further detailed in Figure 6.

Table 5.

| No. | Item | S.6 | S.7 | S.8 | S.9 | S.10 | S.11 |
|---|---|---|---|---|---|---|---|
| 1 | PC1 | 22.45 | 22.45 | 22.45 | 22.45 | 22.45 | 22.45 |
| 2 | PC2 | 46.1 | 45.1 | 43.1 | 46.1 | 46.1 | 46.1 |
| 3 | SAN | 9.5 | 9.5 | 9.5 | 9.5 | 9.5 | 9.5 |
| 4 | TS1 | 0.25 | 0.25 | 0.25 | 0.25 | 0.25 | 0.25 |
| 5 | Talc | 15 | 15 | 15 | 15 | 15 | 15 |
| 6 | MBS | 4.4 | 4.4 | 4.4 | 4.4 | 4.4 | 4.4 |
| 7 | AO1 | 0.25 | 0.25 | 0.25 | 0.25 | 0.25 | 0.25 |
| 8 | MR1 | 0.25 | 0.25 | 0.25 | 0.25 | 0.25 | 0.25 |
| 9 | AO2 | 0.1 | 0.1 | 0.1 | 0.1 | 0.1 | 0.1 |
| 10 | Q1 | 0.2 | 0.2 | 0.2 | 0.2 | 0.2 | 0.2 |
| 11 | C1 | 0.5 | 0.5 | 0.5 | 0.5 | 0.5 | 0.5 |
| 12 | AS1 | 1 | 2 | 4 | --- | --- | --- |
| 13 | AS2 | --- | --- | --- | 1 | --- | --- |
| 14 | AS3 | --- | --- | --- | --- | 1 | --- |
| 15 | AS4 | --- | --- | --- | --- | --- | 1 |
| Formulation Total | | 100 | 100 | 100 | 100 | 100 | 100 |

The data in Figure 6 show the normalized ejection pressure for the compositions described in Table 5. The ejection pressure was normalized to the control sample which is set to 100%. The data in figure 6 show that the presence of alkyl sulfonate salt profoundly decreases the normalized ejection pressure (see Figure 6, S.6, S.7, and S.8). Although the maximum decrease in normalized ejection pressure was observed at 2 wt% alkyl sulfonate salt, all loading levels of alkyl sulfonate salt shown in Figure 6 had a significant effect on normalized ejection pressure. In contrast, two other anti-static agents (a polyetheresteramide block copolymer and an alkyl sulfoisophthalate) did not decrease or slightly increased the normalized ejection pressure (see Figure 6, cf. S.10 and S.11). Interestingly, a glycerol fatty acid ester (glycerol monostearate) was observed to have a similar effect on normalized ejection pressure as an alkyl sulfonate salt (see Figure 6, cf. S.9 and S.6).

The data in Table 6 show that the presence of an alkyl sulfonate salt improved notched Izod impact properties (strength and ductility), whereas these properties were not improved with either polyetheresteramide block copolymer, an alkyl sulfoisophthalate, or a glycerol fatty acid. The presence of an alkyl sulfonate salt had no effect or only a slight negative effect on multi-axial impact properties (e.g. ductility and total energy), and showed a slight decrease in HDT, particularly at higher loading (e.g. 4 wt%). Similar effects on multi-axial impact properties and HDT were observed for polyetheresteramide block copolymer, an alkyl sulfoisophthalate, or a glycerol fatty acid.

Table 6.

| Test | Test Condition | Unit | S.6 | S.7 | S.8 | S.9 | S.10 | S.11 |
|---|---|---|---|---|---|---|---|---|
| MVR (ASTM) | 265 °C, 5 kg | $cm^3$/10 min | 18 | 20 | 25 | 25 | 24 | 24 |
| MVR (ISO) | 265 °C, 5 kg | $cm^3$/10 min | 17 | 21 | 26 | 25 | 23 | 15 |
| MV | 265 °C, 645 $s^{-1}$ | Pa-s | 493 | 422 | 260 | 479 | 458 | 537 |
| Viscosity change | 265 °C, 1800 s | % | -23 | -22 | -26 | -21 | -45 | -15 |
| NII, ductility | 25 °C | % | 100 | 100 | 100 | 100 | 100 | 100 |
| NII | 25 °C | kJ/$m^2$ | 35 | 41 | 40 | 16 | 11 | 10 |
| NII, ductility | -10 °C | % | 100 | 100 | 100 | 0 | 0 | 0 |
| NII | -10 °C | kJ/$m^2$ | 15 | 21 | 20 | 8 | 7 | 7 |
| NII, ductility | -20 °C | % | 40 | 90 | 100 | 0 | 0 | 0 |
| NII | -20 °C | kJ/$m^2$ | 12 | 14 | 16 | 7 | 7 | 7 |
| NII, ductility | -30 °C | % | 0 | 0 | 80 | 0 | 0 | 0 |
| NII | -30 °C | kJ/$m^2$ | 12 | 12 | 13 | 8 | 6 | 7 |
| MAI, max eng.* | 25 °C, 2.3 m/s | J | 48 | 42 | 25 | 48 | 46 | 40 |
| MAI, tot. eng.* | 25 °C, 2.3 m/s | J | 52 | 49 | 33 | 53 | 50 | 47 |
| MAI ductility | -30 °C, 2.3 m/s | % | 100 | 100 | 60 | 100 | 80 | 80 |
| MAI, max eng.* | -30 °C, 2.3 m/s | J | 52 | 43 | 15 | 47 | 51 | 40 |
| MAI, tot. eng. | -30 °C, 2.3 m/s | J | 57 | 51 | 25 | 56 | 57 | 48 |
| HDT | 1.8 MPa | °C | 121 | 120 | 118 | 117 | 120 | 123 |
| Eject. Press. | --- | % | 42 | 9 | 12 | 44 | 85 | 111 |

The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims. polyetheresteramide block copolymer and an alkyl sulfoisophthalate) did not decrease or slightly increased the normalized ejection pressure (see Figure 6, cf. S.10 and S.11). Interestingly, a glycerol fatty acid ester (glycerol monostearate) was observed to have a similar effect on normalized ejection pressure as an alkyl sulfonate salt (see Figure 6, cf. S.9 and S.6).

The data in Table 6 show that the presence of an alkyl sulfonate salt improved notched Izod impact properties (strength and ductility), whereas these properties were not improved with either polyetheresteramide block copolymer, an alkyl sulfoisophthalate, or a glycerol fatty acid. The presence of an alkyl sulfonate salt had no effect or only a slight negative effect on multi-axial impact properties (e.g. ductility and total energy), and showed a slight decrease in HDT, particularly at higher loading (e.g. 4 wt%). Similar effects on multi-axial impact properties and HDT were observed for polyetheresteramide block copolymer, an alkyl sulfoisophthalate, or a glycerol fatty acid.

Table 6.

| Test | Test Condition | Unit | S.6 | S.7 | S.8 | S.9 | S.10 | S.11 |
|---|---|---|---|---|---|---|---|---|
| MVR (ASTM) | 265 °C, 5 kg | $cm^3$/10 min | 18 | 20 | 25 | 25 | 24 | 24 |
| MVR (ISO) | 265 °C, 5 kg | $cm^3$/10 min | 17 | 21 | 26 | 25 | 23 | 15 |
| MV | 265 °C, 645 $s^{-1}$ | Pa-s | 493 | 422 | 260 | 479 | 458 | 537 |
| Viscosity change | 265 °C, 1800 s | % | -23 | -22 | -26 | -21 | -45 | -15 |
| NII, ductility | 25 °C | % | 100 | 100 | 100 | 100 | 100 | 100 |
| NII | 25 °C | kJ/$m^2$ | 35 | 41 | 40 | 16 | 11 | 10 |
| NII, ductility | -10 °C | % | 100 | 100 | 100 | 0 | 0 | 0 |
| NII | -10 °C | kJ/$m^2$ | 15 | 21 | 20 | 8 | 7 | 7 |
| NII, ductility | -20 °C | % | 40 | 90 | 100 | 0 | 0 | 0 |
| NII | -20 °C | kJ/$m^2$ | 12 | 14 | 16 | 7 | 7 | 7 |
| NII, ductility | -30 °C | % | 0 | 0 | 80 | 0 | 0 | 0 |
| NII | -30 °C | kJ/$m^2$ | 12 | 12 | 13 | 8 | 6 | 7 |
| MAI, max eng.* | 25 °C, 2.3 m/s | J | 48 | 42 | 25 | 48 | 46 | 40 |

(continued)

| Test | Test Condition | Unit | S.6 | S.7 | S.8 | S.9 | S.10 | S.11 |
|---|---|---|---|---|---|---|---|---|
| MAI, tot. eng.* | 25 °C, 2.3 m/s | J | 52 | 49 | 33 | 53 | 50 | 47 |
| MAI ductility | -30 °C, 2.3 m/s | % | 100 | 100 | 60 | 100 | 80 | 80 |
| MAI, max eng.* | -30 °C, 2.3 m/s | J | 52 | 43 | 15 | 47 | 51 | 40 |
| MAI, tot. eng. | -30 °C, 2.3 m/s | J | 57 | 51 | 25 | 56 | 57 | 48 |
| HDT | 1.8 MPa | °C | 121 | 120 | 118 | 117 | 120 | 123 |
| Eject. Press. | --- | % | 42 | 9 | 12 | 44 | 85 | 111 |

## Claims

**1.** A thermoplastic composition with improved mold release properties comprising:

a) from 10 wt% to 70 wt% of a first polycarbonate component;
b) from 10 wt% to 70 wt% of a second polycarbonate component;
c) from 2 wt% to 10 wt% of an impact modifier component;
d) from 5 wt% to 30 wt% of a mineral filler component;
e) from 0 wt% to 25 wt% of a polycarbonate-polysiloxane copolymer component; and
f) from 0.1 wt% to 4.0 wt% of an alkyl sulfonate salt component;

wherein the combined weight percent value of the first polycarbonate component and the second polycarbonate component is from greater than 10 wt% to 70 wt%;
wherein the combined weight percent value of all components does not exceed 100 wt%;
wherein all weight percent values are based on the total weight of the composition; and
wherein molded sample of the thermoplastic composition exhibits a lower mold ejection pressure compared to a reference composition consisting essentially of substantially the same proportions of the same polycarbonate polymer component, the same mineral filler, and the same impact modifier component, in the absence of the polycarbonate-polysiloxane copolymer component and the alkyl sulfonate salt.

**2.** The composition of claim 1, wherein the first polycarbonate polymer component is present in an amount from 20 wt% to 30 wt%.

**3.** The composition of any of claims 1-2, wherein the first polycarbonate polymer component has a melt volume flow rate (MFR) from 20 grams/10 minutes to 30 grams/10 minutes when measured at 300 °C and under a load of 1.2 kg according to ASTM D1238.

**4.** The composition of any of claims 1-3, wherein the first polycarbonate polymer component has a weight average molecular weight from 18,000 to 40,000 grams/mole, as measured by Gel Permeation Chromatography GPC using BPA polycarbonate standards.

**5.** The composition of any of claims 1-4, wherein the second polycarbonate polymer component is is present in an amount from 20 wt% to 70 wt%.

**6.** 1-5, wherein the second polycarbonate polymer component has a melt volume flow rate (MFR) from 4.0 grams/10 minutes to 8.0 grams/10 minutes when measured at 300 °C and under a load of 1.2 kg according to ASTM D1238.

**7.** The composition of any of claims 1-6, wherein the second polycarbonate polymer component has a weight average molecular weight from 18,000 to 40,000 grams/mole, as measured by Gel Permeation Chromatography GPC using BPA polycarbonate standards.

**8.** The composition of any of claims 1-7, wherein the impact modifier component comprises a methacrylate-butadiene-styrene (MBS) polymer composition, wherein the MBS polymer composition is present in an amount from 2 wt% to 10 wt%.

**9.** The composition of claim 8, wherein the MBS polymer composition comprises butadiene content from 60 wt% to

80 wt%.

**10.** The composition of any of claims 8-9, wherein the MBS polymer composition has a bulk density from 0.25 g/cm$^3$ to 0.55 g/cm$^3$.

**11.** The composition of any of claims 1-10, wherein the mineral filler comprises at least one mineral filler selected from mica, talc, and clay.

**12.** The composition of any of claims 1-11, wherein the mineral filler has a median particle size diameter ($D_{50}$) from 0.5 $\mu$m to 2.0 $\mu$m, measured by gravity sedimentation in accordance with standard AFNORX11-683.

**13.** The composition of any of claims 1-12, wherein the polycarbonate-polysiloxane block copolymer comprises from 3 wt% to 10 wt% siloxane.

**14.** The composition of any of claims 1-13, wherein the alkyl sulfonate salt component comprises one or more structures represented by a formula:

$$(C_nH_{2n+1})\text{-}(SO_3^-M^+)_p,$$

wherein for each alkyl sulfonate salt present, n is independently an integer from 6 to 17; p 1; and each M is an alkali metal.

## Patentansprüche

**1.** Eine thermoplastische Zusammensetzung mit verbesserten Formfreisetzungseigenschaften, die Folgendes umfasst:

a) von 10 Gewichts% bis 70 Gewichts% einer ersten Polycarbonatkomponente;
b) von 10 Gewichts% bis 70 Gewichts% einer zweiten Polycarbonatkomponente;
c) von 2 Gewichts% bis 10 Gewichts% einer Schlagfestmodifikatorkomponente;
d) von 5 Gewichts% bis 30 Gewichts% einer Mineralfüllstoffkomponente;
e) von 0 Gewichts% bis 25 Gewichts% einer Polycarbonat-Polysiloxan-Copolymerkomponente; und
f) von 0,1 Gewichts% bis 4,0 Gewichts% einer Alkylsulfonatsalzkomponente;

worin der kombinierte Gewichtsprozent-Wert der ersten Polycarbonatkomponente und der zweiten Polycarbonatkomponente von größer als 10 Gewichts% bis 70 Gewichts% ist;
worin der kombinierte Gewichtsprozent-Wert aller Komponenten 100 Gewichts% nicht überschreitet;
worin alle Gewichtsprozent-Werte auf dem Gesamtgewicht der Zusammensetzung basieren; und
worin eine geformte Probe der thermoplastischen Zusammensetzung einen niedrigeren Formausstoßungsdruck zeigt verglichen mit einer Referenzzusammensetzung, die im Wesentlichen aus im Wesentlichen denselben Anteilen derselben Polycarbonat-Polymerkomponente, desselben Mineralfüllstoffs und derselben Schlagfestmodifikatorkomponente, in Abwesenheit von der Polycarbonat-Polysiloxan-Copolymerkomponente und dem Alkylsulfonatsalz besteht.

**2.** Die Zusammensetzung gemäß Anspruch 1, worin die erste Polycarbonat-Polymerkomponente in einer Menge von 20 Gewichts% bis 30 Gewichts% vorhanden ist.

**3.** Die Zusammensetzung gemäß irgendeinem der Ansprüche 1-2, worin die erste Polycarbonat-Polymerkomponente eine Schmelze-Volumenfließrate (MFR) von 20 Gramm/10 Minuten bis 30 Gramm/10 Minuten hat, wenn gemessen bei 300°C und unter einer Beladung von 1,2 kg gemäß ASTM D1238.

**4.** Die Zusammensetzung gemäß irgendeinem der Ansprüche 1-3, worin die erste Polycarbonat-Polymerkomponente ein Gewichtsmittel Molekulargewicht von 18,000 bis 40,000 Gramm/Mol hat, gemessen durch Gelpermeationschromatographie GPC unter Verwendung von BPA Polycarbonatstandards.

**5.** Die Zusammensetzung gemäß irgendeinem der Ansprüche 1-4, worin die zweite Polycarbonat-Polymerkomponente

in einer Menge von 20 Gewichts% bis 70 Gewichts% vorhanden ist.

6. 1-5, worin die zweite Polycarbonat-Polymerkomponente eine Schmelze-Volumenfließrate (MFR) von 4,0 Gramm/10 Minuten bis 8,0 Gramm/10 Minuten hat, wenn gemessen bei 300°C und unter einer Beladung von 1,2 kg gemäß ASTM D1238.

7. Die Zusammensetzung gemäß irgendeinem der Ansprüche 1-6, worin die zweite Polycarbonat-Polymerkomponente ein Gewichtsmittel Molekulargewicht von 18,000 bis 40,000 Gramm/Mol hat, gemessen durch Gelpermeationschromatographie GPC unter Verwendung von BPA Polycarbonatstandards.

8. Die Zusammensetzung gemäß irgendeinem der Ansprüche 1-7, worin die Schlagfestmodifikatorkomponente eine Methacrylat-Butadien-Styren (MBS) Polymerzusammensetzung umfasst, worin die MBS-Polymerzusammensetzung in einer Menge von 2 Gewichts% bis 10 Gewichts% vorhanden ist.

9. Die Zusammensetzung gemäß Anspruch 8, worin die MBS-Polymerzusammensetzung einen Butadiengehalt von 60 Gewichts% bis 80 Gewichts% umfasst.

10. Die Zusammensetzung gemäß irgendeinem der Ansprüche 8-9, worin die MBS-Polymerzusammensetzung eine Bulkdichte von 0,25 g/cm$^3$ bis 0,55 g/cm$^3$ hat.

11. Die Zusammensetzung gemäß irgendeinem der Ansprüche 1-10, worin der Mineralfüllstoff mindestens einen Mineralfüllstoff gewählt aus Glimmererde, Talkum und Ton umfasst.

12. Die Zusammensetzung gemäß irgendeinem der Ansprüche 1-11, worin der Mineralfüllstoff einen mittleren Partikelgrößendurchmesser ($D_{50}$) von 0,5 $\mu$m bis 2,0 $\mu$m hat, gemessen durch Gravitationssedimentation in Übereinstimmung mit Standard AFNORX11-683.

13. Die Zusammensetzung gemäß irgendeinem der Ansprüche 1-12, worin das Polycarbonat-Polysiloxan-Block-Copolymer von 3 Gewichts% bis 10 Gewichts% Siloxan umfasst.

14. Die Zusammensetzung gemäß irgendeinem der Ansprüche 1-13, worin die Alkylsulfonatsalzkomponente eine oder mehrere Strukturen dargestellt durch eine Formel:

$$(C_nH_{2n+1})\text{-}(SO_3^-M^+)_p,$$

umfasst, worin für jedes vorhandene Alkylsulfonatsalz n unabhängig eine ganze Zahl von 6 bis 17 ist; p 1; und jedes M ist ein Alkalimetall.

## Revendications

1. Composition thermoplastique ayant des propriétés améliorées de démoulage, comprenant :

   a) de 10 % en poids à 70 % en poids d'un premier composant polycarbonate ;
   b) de 10 % en poids à 70 % en poids d'un deuxième composant polycarbonate ;
   c) de 2 % en poids à 10 % en poids d'un composant modifiant choc ;
   d) de 5 % en poids à 30 % en poids d'un composant charge minérale ;
   e) de 0 % en poids à 25 % en poids d'un composant copolymère de polycarbonate-polysiloxane ; et
   f) de 0,1 % en poids à 4,0 % en poids d'un composant sel alkylsulfonate ;

   dans laquelle la valeur des pourcentages en poids combinés du premier composant polycarbonate et du deuxième composant polycarbonate va de plus de 10 % en poids à 70 % en poids ;
   dans laquelle la valeur des pourcentages combinés de tous les composants ne dépasse pas 100 % en poids ;
   dans laquelle toutes les valeurs de pourcentages en poids sont basées sur le poids total de la composition ; et
   dans laquelle un échantillon moulé de la composition thermoplastique présente une pression d'éjection du moule inférieure à celle d'une composition de référence constituée essentiellement de pratiquement les mêmes proportions du même composant polymère de polycarbonate, de la même charge minérale, et du même composant modifiant choc, en l'absence du composant copolymère de polycarbonate-polysiloxane et du sel alkylsulfonate.

**2.** Composition selon la revendication 1, dans laquelle le premier composant polymère de polycarbonate est présent en une quantité de 20 % en poids à 30 % en poids.

**3.** Composition selon l'une quelconque des revendications 1 et 2, dans laquelle le premier composant polymère de polycarbonate a un indice de fluage en volume (MFR) de 20 grammes/10 minutes à 30 grammes/10 minutes quand il est mesuré à 300°C et sous une charge de 1,2 kg conformément à la norme ASTM D1238.

**4.** Composition selon l'une quelconque des revendications 1 à 3, dans laquelle le premier composant polymère de polycarbonate a une masse moléculaire moyenne en masse de 18 000 à 40 000 grammes/mole, telle que mesurée par chromatographie d'exclusion diffusion (GPC) utilisant des étalons en polycarbonate de BPA.

**5.** Composition selon l'une quelconque des revendications 1 à 4, dans laquelle le deuxième composant polymère de polycarbonate est présent en une quantité de 20 % en poids à 70 % en poids.

**6.** Composition selon l'une quelconque des revendications 1 à 5, dans laquelle le deuxième composant polymère de polycarbonate a un indice de fluage en volume (MFR) de 4,0 grammes/10 minutes à 8,0 grammes/10 minutes quand il est mesuré à 300°C et sous une charge de 1,2 kg conformément à la norme ASTM D1238.

**7.** Composition selon l'une quelconque des revendications 1 à 6, dans laquelle le deuxième polymère de polycarbonate a une masse moléculaire moyenne en masse de 18 000 à 40 000 grammes/mole, telle que mesurée par chromatographie d'exclusion diffusion (GPC) utilisant des étalons en polycarbonate de BPA.

**8.** Composition selon l'une quelconque des revendications 1 à 7, dans laquelle le composant modifiant choc comprend une composition de polymère de méthacrylate-butène-styrène (MBS), et dans laquelle la composition de polymère de MBS est présente en une quantité de 2 % en poids à 10 % en poids.

**9.** Composition selon la revendication 8, dans laquelle la composition de polymère de MBS comprend une teneur en butadiène allant de 60 % en poids de 80 % en poids.

**10.** Composition selon l'une quelconque des revendications 8 et 9, dans laquelle la composition de polymère de MBS a une masse volumique apparente de 0,25 g/$cm^3$ à 0,55 g/$cm^3$.

**11.** Composition selon l'une quelconque des revendications 1 à 10, dans laquelle la charge minérale comprend au moins une charge minérale choisie parmi le mica, le talc, et l'argile.

**12.** Composition selon l'une quelconque des revendications 1 à 11, dans laquelle la charge minérale a une granulométrie médiane ($D_{50}$) de 0,5 $\mu$m à 2,0 $\mu$m, mesurée par sédimentation par gravité conformément à la norme AFNORX11-683.

**13.** Composition selon l'une quelconque des revendications 1 à 12, dans laquelle le copolymère séquencé de polycarbonate-polysiloxane comprend de 3 % en poids à 10 % en poids de siloxane.

**14.** Composition selon l'une quelconque des revendications 1 à 13, dans laquelle le composant sel alkylsulfonate comprend une ou plusieurs structures représentées par la formule :

$$(C_nH_{2n+1})\text{-}(SO_3^-M^+)_p$$

dans laquelle, pour chaque sel alkylsulfonate présent, n est indépendamment un entier de 6 à 17 ; p vaut 1 ; et chaque M est un métal alcalin.

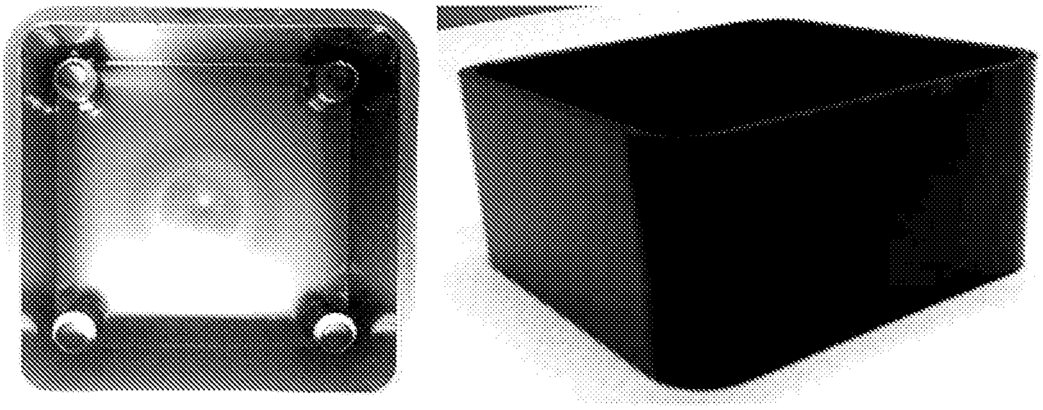

Figure 1

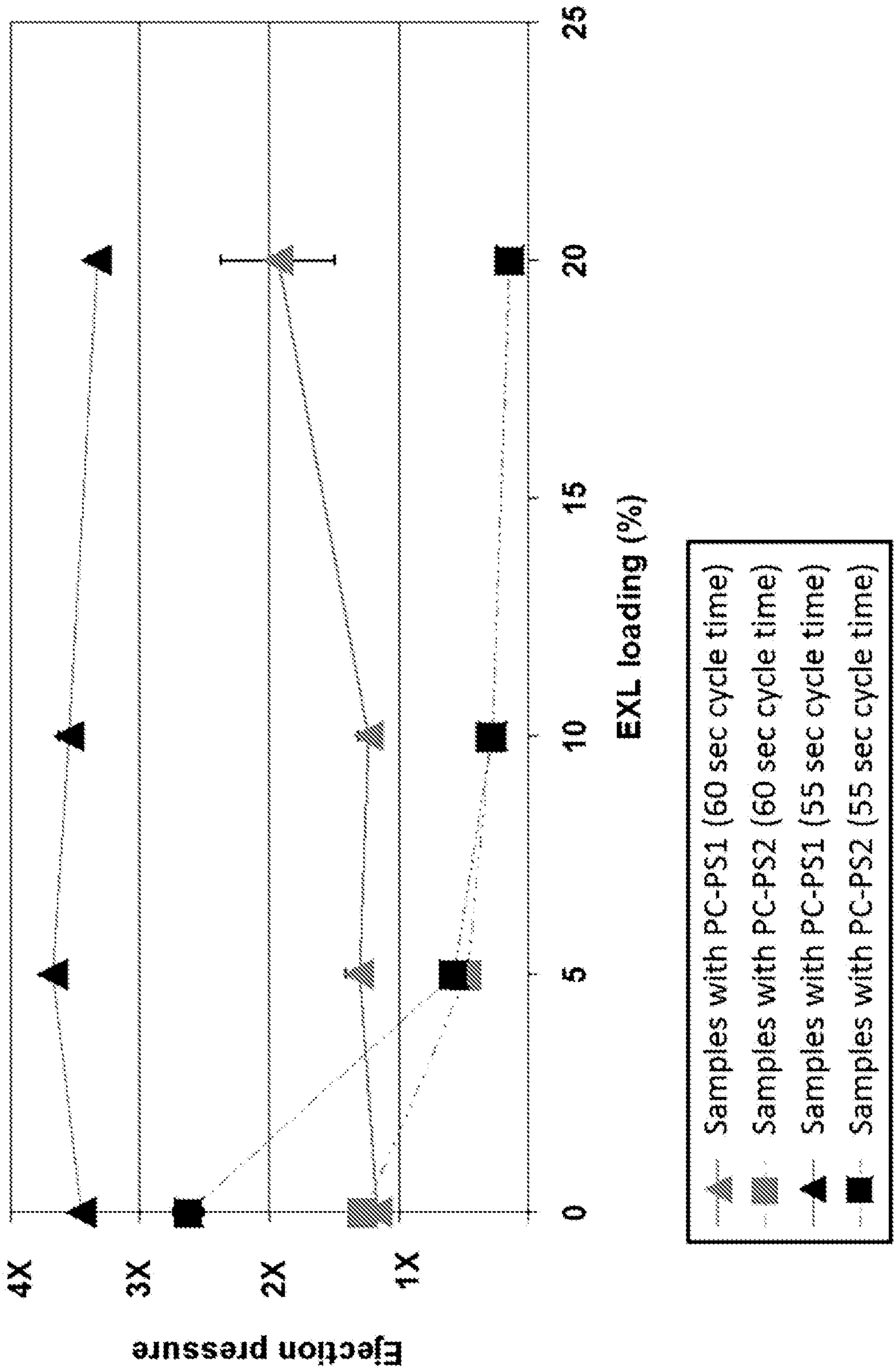
Ejection pressure
4X
3X
2X
1X
0
5
10
15
20
25
EXL loading (%)
Samples with PC-PS1 (60 sec cycle time)
Samples with PC-PS2 (60 sec cycle time)
Samples with PC-PS1 (55 sec cycle time)
Samples with PC-PS2 (55 sec cycle time)

Figure 2

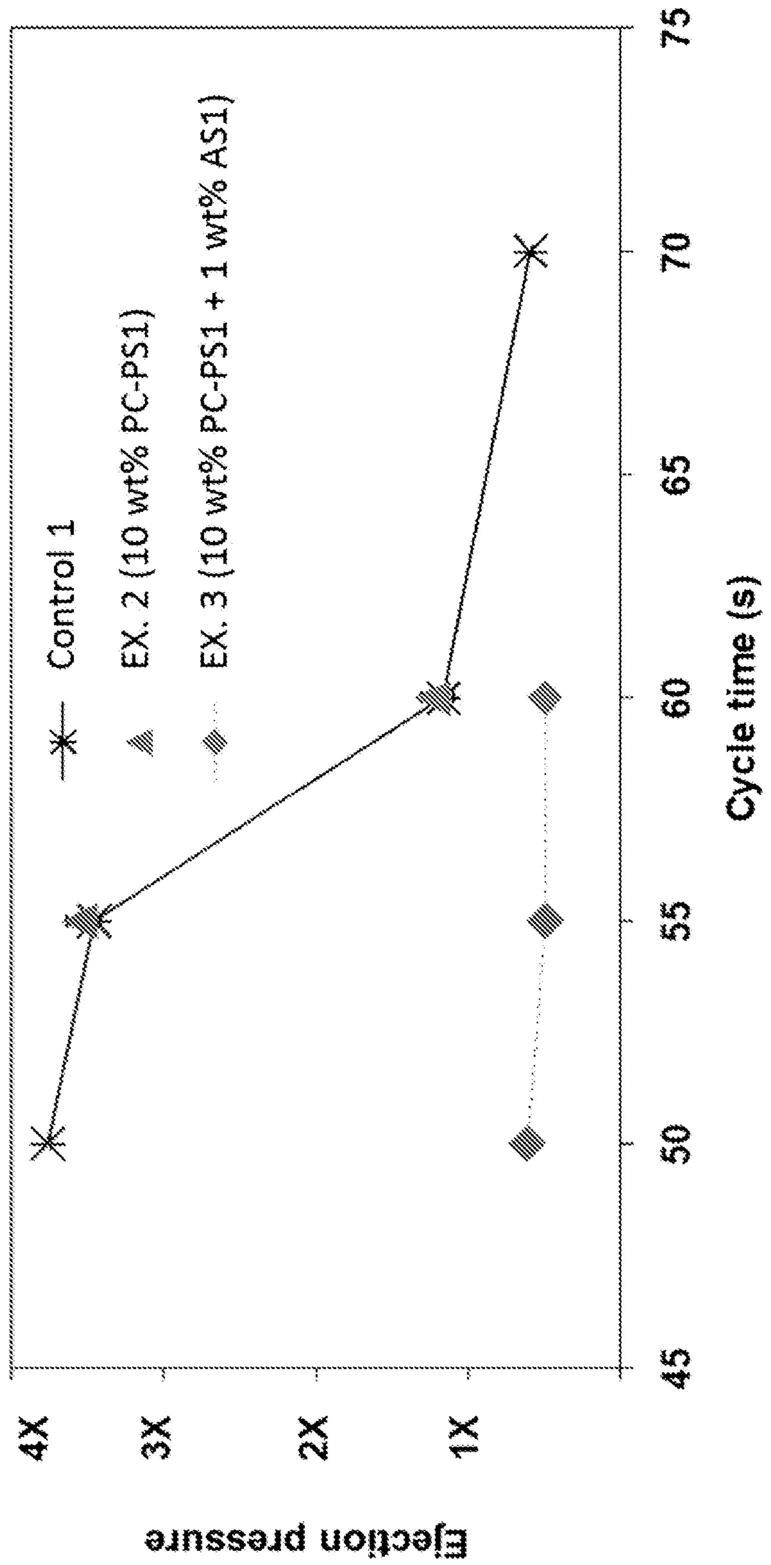
Control 1
EX. 2 (10 wt% PC-PS1)
EX. 3 (10 wt% PC-PS1 + 1 wt% AS1)
Ejection pressure
4X
3X
2X
1X
45
50
55
60
65
70
75
Cycle time (s)

Figure 3

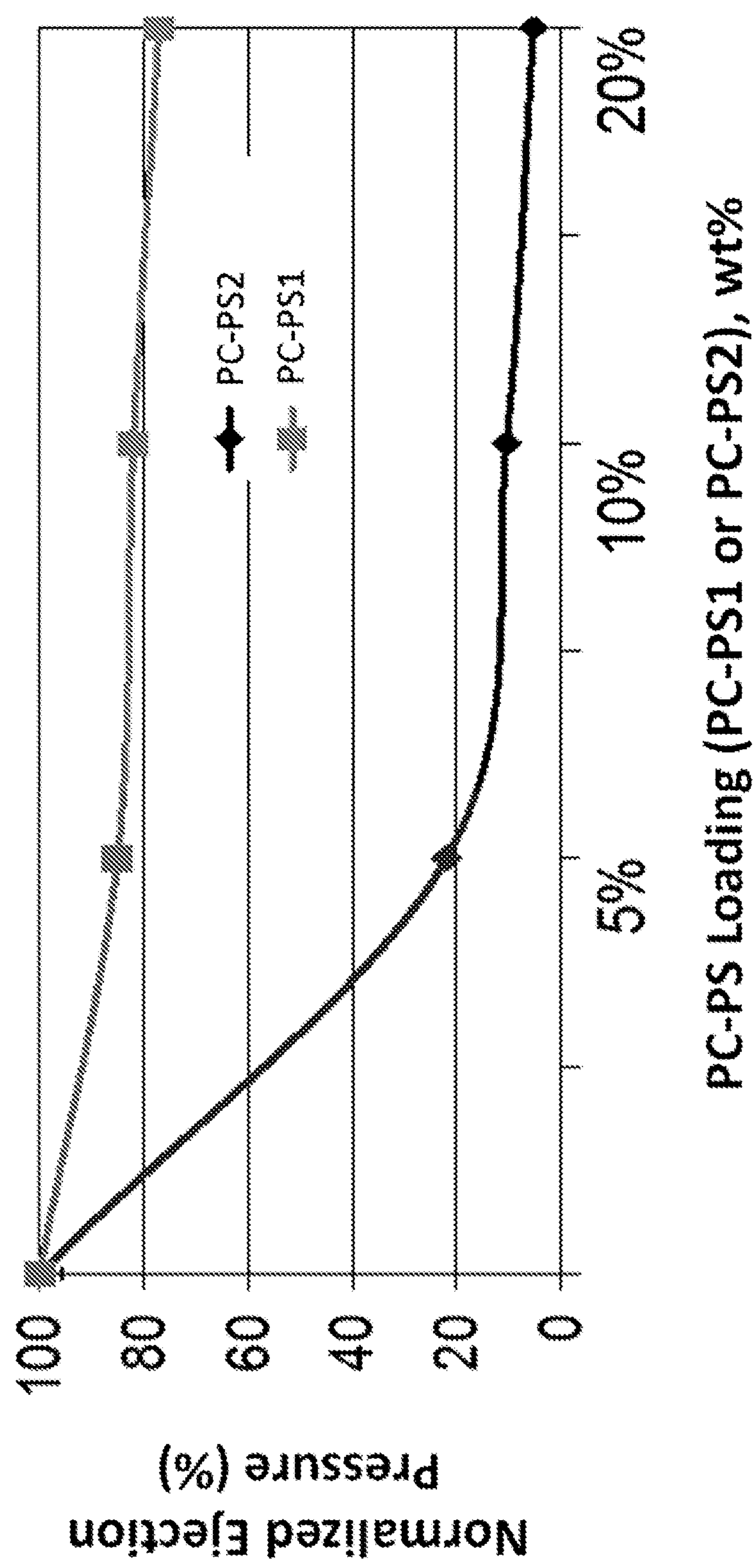
Normalized Ejection Pressure (%)
100
80
60
40
20
0
5%
10%
20%
PC-PS Loading (PC-PS1 or PC-PS2), wt%
PC-PS2
PC-PS1

Figure 4

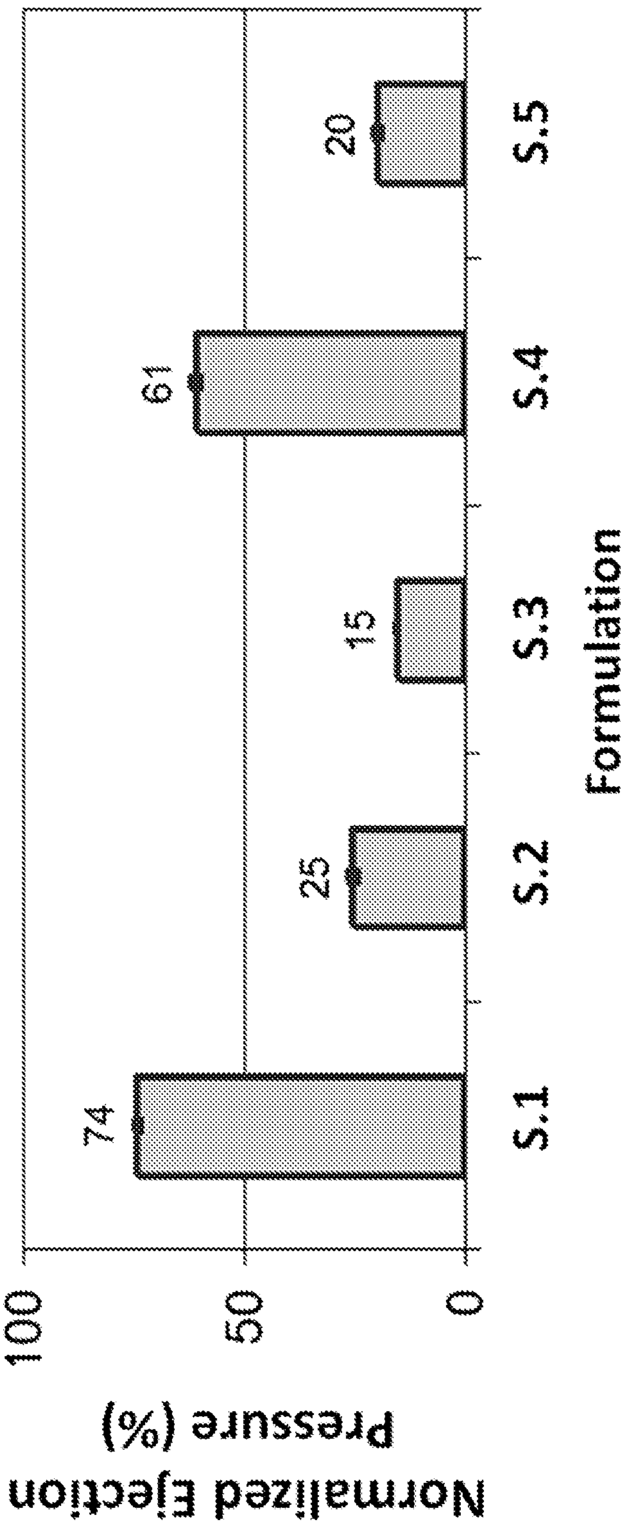
Normalized Ejection Pressure (%)
100
50
0
74
25
15
61
20
S.1
S.2
S.3
S.4
S.5
Formulation

Figure 5

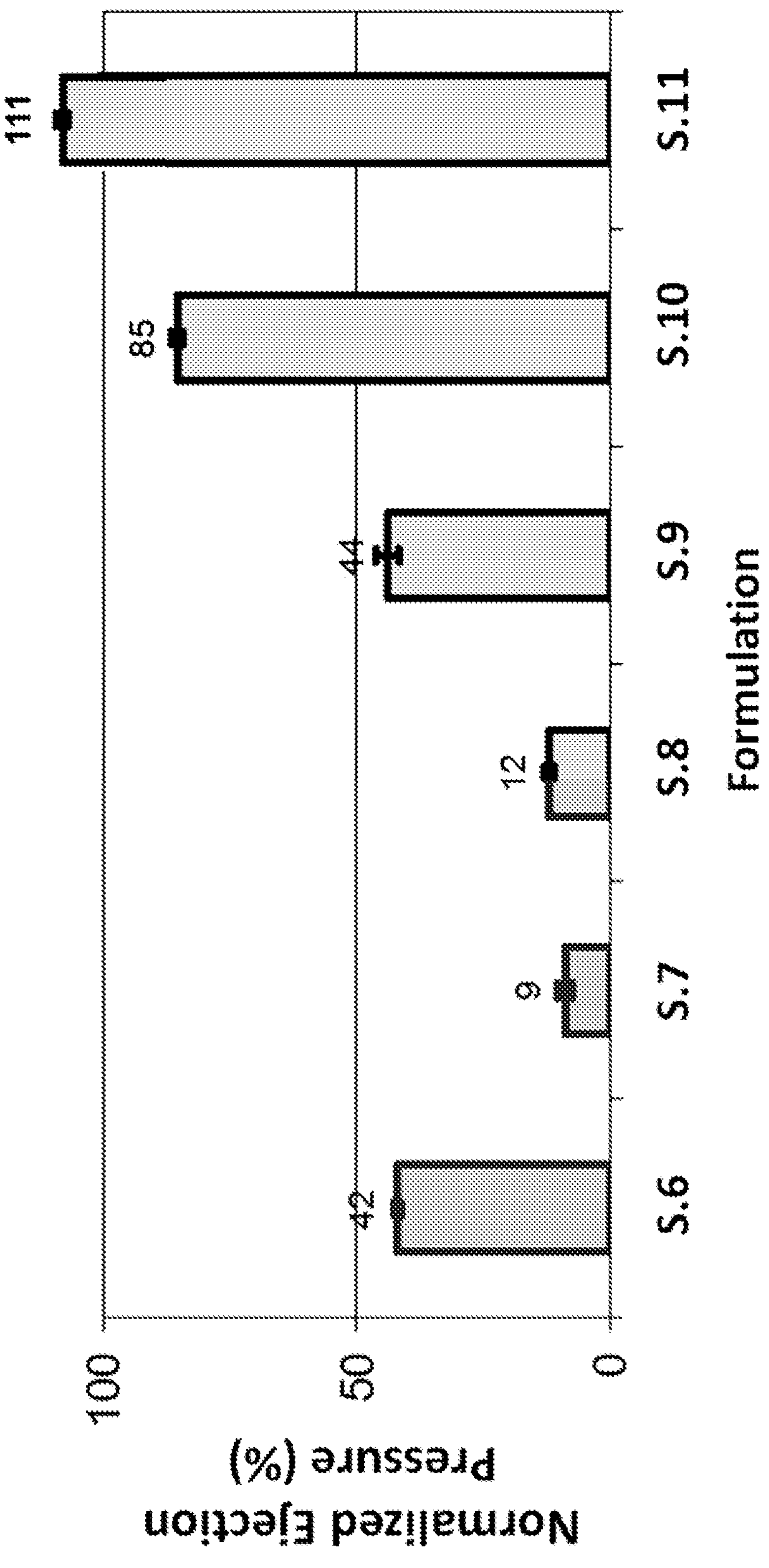
Normalized Ejection Pressure (%)
100
50
0
42
9
12
44
85
111
S.6
S.7
S.8
S.9
S.10
S.11
Formulation

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7786246 B
- US 4217438 A
- US 3635895 A
- US 4001184 A
- US 4746701 A, Kress
- US 8017697 B, Carrillo